(19)

Europäisches
Patentamt
European
Patent Office
Office européen
des brevets

(11)  **EP 1 830 374 A1**

(12)  **EUROPEAN PATENT APPLICATION**
published in accordance with Art. 158(3) EPC

(43) Date of publication:
**05.09.2007 Bulletin 2007/36**

(51) Int Cl.:
*H01G 9/155* (2006.01)     *H01G 9/02* (2006.01)
*H01G 9/058* (2006.01)     *H01G 9/08* (2006.01)

(21) Application number: **05822531.9**

(22) Date of filing: **21.12.2005**

(86) International application number:
**PCT/JP2005/023999**

(87) International publication number:
**WO 2006/068291 (29.06.2006 Gazette 2006/26)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.12.2004  JP 2004369068
14.02.2005  JP 2005035902
23.02.2005  JP 2005047556
23.02.2005  JP 2005047555
15.04.2005  JP 2005118061
19.04.2005  JP 2005120946
19.04.2005  JP 2005120947
19.04.2005  JP 2005120948
19.04.2005  JP 2005120945
19.04.2005  JP 2005120949
17.05.2005  JP 2005143835
17.05.2005  JP 2005143837
17.05.2005  JP 2005143836
17.05.2005  JP 2005143834
04.01.2005  JP 2005000102**

(71) Applicant: **TEIJIN LIMITED
Osaka-shi
Osaka 541-0054 (JP)**

(72) Inventors:
• **KON, Tatsuichiro,**
**c/o TEIJIN LIMITED**
**Chiyoda-ku, Tokyo 1000011 (JP)**
• **SADANOBU, Jiro,**
**c/o TEIJIN LIMITED**
**Chiyoda-ku, Tokyo 1000011 (JP)**
• **NISHIKAWA, Satoshi,**
**c/o TEIJIN LIMITED**
**Iwakuni-shi, Yamaguchi 7400014 (JP)**
• **SANO, Hiroki,**
**c/o TEIJIN LIMITED**
**Iwakuni-shi, Yamaguchi 7400014 (JP)**
• **SAKURAI, Hiroshi**
**c/o TEIJIN LIMITED**
**Iwakuni-shi, Yamaguchi 7400014 (JP)**
• **KITAHARA, Mai**
**c/o TEIJIN LIMITED**
**Iwakuni-shi, Yamaguchi 7400014 (JP)**

(74) Representative: **Hallybone, Huw George et al
Carpmaels and Ransford,
43 Bloomsbury Square
London WC1A 2RA (GB)**

(54)  **ELECTRIC DOUBLE LAYER CAPACITOR**

(57)     The present invention concerns an electric double layer capacitor, wherein to increase capacitance, each electrode is formed from activated carbon having an average particle size of 0.1 to 1.0 $\mu$m. Alternatively, to prevent electrode short-circuiting, each electrode is constructed from an electrode layer sheet having an electrode layer formed from activated carbon whose specific area is 500 to 2500 $m^2$/g and whose cumulative particle size (D90) is 0.8 to 6 $\mu$m.

Fig.3

**Description**

TECHNICAL FIELD

The present invention relates to an electric double layer capacitor comprising a pair of electrodes forming an anode and cathode, a separator, and an electrolytic solution, and more particularly to an electric double layer capacitor that has a high power output characteristic and a high capacitance density or that is small and ultra-thin and yet has a high power output characteristic and a high capacitance density.

Even more particularly, the invention relates to an electric double layer capacitor that comprises a pair of electrode sheets forming an anode and cathode, a separator, and a nonaqueous electrolytic solution, and that can achieve a high power output even under low-temperature environments, and also relates to an electric double layer capacitor that uses polarizable electrodes formed from a porous carbon material.

BACKGROUND ART

Capacitors, such as electric double layer capacitors using polarizable electrodes made of activated carbon and redox capacitors using a metal oxide or conductive polymer for the anode and cathode electrodes, are currently under development. Specifically, the electric double layer capacitor has superior reliability (long life) and output characteristics (discharge characteristics at 100C level) to lithium-ion secondary batteries, nickel-hydrogen batteries, lead-acid batteries, and other secondary batteries. Applications that make use of the high reliability include such applications as memory backup and solar backup combined with solar cells; on the other hand, applications that make use of the high power output include applications as power supplies (for large current loads) represented by power supplies for hybrid electric vehicles (HEVs).

In recent years, attempts have been made to use an electric double layer capacitor in combination with a battery in order to reduce the large current load applied for a few seconds to the battery. For example, Japanese Unexamined Patent Publication No. H10-294135 discloses a hybrid power supply constructed by combining a capacitor and a lithium-ion battery (850 mAh), and states that the hybrid power supply provides a higher capacity under low-temperature large current load conditions (1.5 A, 0.5 msec) than the lithium-ion battery alone. Japanese Unexamined Patent Publication No. 2002-246071, for example, also discloses a hybrid power supply constructed by combining a capacitor and a lithium-ion battery, and states that, even under a 2C load condition, only a 0.8C load is applied to the lithium-ion battery. Further, Japanese Unexamined Patent Publication No. 2003-200739, for example, discloses a HEV power supply constructed by combining a battery and a capacitor, aiming to enhance the regenerative capability under deceleration.

When a conventional capacitor is combined with a lithium-ion battery, about 80% of the large current load can be absorbed by the capacitor if its volume is the same as that of the battery. No one skilled in the art would deny the effectiveness of the capacitor/cell combination, but using the capacitor of the same volume as that of the battery in order to absorb the large current load is difficult in practice, because then the volume of the power supply would significantly increase; there has therefore developed a need for capacitors having a power output five to ten or more times greater than that of the current ones. Such a high-output, low-internal-resistance capacitor is disclosed, for example, in Tokuhyou (Published Japanese Translation of PCT application) No. 2002-532869.

However, Tokuhyou No. 2002-532869 does not disclose information about the energy density of the capacitor, and therefore does not satisfy the requirements for a size reduction required of the capacitor. Furthermore, no statement is given about the reduction of the capacitor thickness, that is, about a sufficiently thinned capacitor, for example, a capacitor whose thickness is 2 mm or less, and therefore the invention described therein is not one that proposes the implementation of such a thin capacitor.

In view of the above situation, the present invention aims to provide a capacitor that can achieve a high power output characteristic and a high energy density simultaneously.

The invention also aims to implement such a high power output, high energy density capacitor in a small, ultra-thin, and easily mountable structure, thereby enabling the capacitor to be used in applications that have been difficult in the prior art.

That is, the development of small, light-weight portable devices in recent years has been remarkable, and a large variety of portable devices, including mobile phones, portable information devices (PDAs - Personal Digital Assistants), digital still cameras, and portable music players, have been proposed and widely used in the market; in these portable devices, there has developed a requirement for batteries to instantaneously discharge a current of the order of amperes in a short time, because of the need to implement such functions as external information communications, hard disk drive (HDD) driving, etc.

However, high-capacity batteries, such as lithium-ion batteries and nickel-hydrogen batteries, currently employed in these portable devices cannot handle such an instantaneous large current discharge very well, and there have arisen problems such as shortened service life due to an abrupt drop in battery voltage associated with such an instantaneous large current and to chemical deterioration associated with rapid electrochemical reactions; in view of this, a capacitor having a high power output characteristic capable of such an instantaneous large current discharge is being considered for use in combination with the battery.

However, the reality is that no capacitors so far developed satisfy the above stated requirements that the capacitor have a size and shape that can comfortably fit in a generally restricted, high-density mounting space within a portable device, and that the capacitor have a high power output characteristic and also have a sufficiently high energy density that can fulfill the various requirements of such a portable device battery. Accordingly, the present invention also aims to achieve a capacitor that is smaller and thinner and yet has a high power output characteristic and a high energy density.

There are two major types of electric double layer capacitor: the aqueous type that uses an aqueous electrolytic solution as the electrolytic solution, and the nonaqueous type that uses a nonaqueous electrolytic solution as the electrolytic solution. The nonaqueous-type electric double layer capacitor has the advantage that the breakdown voltage of the electrolytic solution is high and the energy density is high, but the disadvantage is that its output is inferior to that of the aqueous-type electric double layer capacitor because the ion conductivity of the electrolytic solution is low. As a result, increasing the power output of the nonaqueous-type electric double layer capacitor (especially, under low-temperature environments) is one of major technical challenges that must be solved in order to expand the range of applications of this type of capacitor.

Various approaches have been made to increase the power output of the nonaqueous-type electric double layer capacitor, one being the approach from the electrode side. For example, Tokuhyou (Published Japanese Translation of PCT application) No. 2002-532869 and International Publication WO 02/089245 Pamphlet disclose techniques for achieving high power output by forming electrode layers extremely thin using fine activated carbon and thereby reducing the capacitance per unit area of the electrode.

In the capacitor disclosed in Tokuhyou No. 2002-532869, an electrode with an electrode layer thickness of 6 $\mu$m is implemented using activated carbon of an average particle size of 2 $\mu$m, achieving an output about five to ten times as high as that of the conventional nonaqueous-type electric double layer capacitor. On the other hand, in the capacitor disclosed in International Publication WO 02/089245 Pamphlet, an electrode with an electrode layer thickness of 0.5 $\mu$m or 3 $\mu$m is implemented using activated carbon of an average particle size of 1 $\mu$m, achieving an output more than ten times as high as that of the conventional nonaqueous-type electric double layer capacitor.

The above techniques use finer activated carbon than conventional activated carbon, but the purpose of this was only to achieve a thinner electrode than the conventional electrode layer, and the increased power output was obtained as a result of reducing the thickness of the electrode layer. When the capacitance per unit area is reduced by reducing the thickness of the electrode layer, the electrode area required for obtaining a given amount of capacitance becomes larger than when the electrode layer is thicker. When a given amount of current is applied, naturally a higher output is obtained when the electrode layer is thinner, because the current density is lower. When the high output is achieved by such techniques, the volume that the separator and current collectors occupy within the cell increases, and this cannot always be said to be desirable from the standpoint of energy density and cost.

While the above prior art uses relatively fine activated carbon, the contribution of the fine activated carbon to the increased output is not clear, because the electrode thickness is extremely small. The reason for this may be that when fine activated carbon is used, it becomes extremely difficult to form an electrode layer on the current collector and, as a consequence, it has only been possible to fabricate an extremely thin electrode.

In view of the above situation, it is an object of the present invention to achieve an output-increasing technique that does not require the use of the means for reducing the thickness of the electrode layer. In connection with this object, it is also an object to provide a technique for effective electrode formation when fine activated carbon is used.

From the viewpoint of expanding the range of applications of the capacitor, it is imperative that the capacitor size be made as small as possible; this is equivalent to increasing the volumetric capacitance density (or the volumetric energy density) of the capacitor. For the purpose of increasing the volumetric capacitance density of the capacitor, it is preferable to minimize the thickness of the separator that does not directly contribute to the accumulation of charge in the capacitor, as is well known to those skilled in the art.

The majority of traditionally used separators are made of cellulose paper, and most of the separators used in conventional capacitors have a thickness of 50 $\mu$m or larger. This is because, as the thickness of the separator decreases, failure occurs more easily due to an electrical short between the anode and cathode and, considering quality assurance in the mass-production of capacitors, it is practically difficult to reduce the thickness of the separator.

In view of this, it is a further object of the present invention to provide an electrode sheet that can achieve a capacitor in which failure due to electrode short-circuiting does not easily occur even when a thinner separator is used, and a capacitor that uses such an electrode sheet.

Porous carbon materials such as activated carbon are used in a wide range of applications; in particular, attention is being focused on their usefulness as polarizable electrode materials for electric double layer capacitors. Porous carbon materials for electric double layer capacitors are usually required to have a large surface area in order to obtain a large electric capacity, and there is a trend toward using materials of smaller pore size in order to increase the electric capacity per unit volume. The electric double layer capacitor has the advantage of being able to deliver a large current instantly at a high power output, and it is known that its output characteristic is strongly influenced by the electric conductivity of the electrolytic solution used.

In particular, in the case of the electric double layer capacitor that uses such a porous carbon material as the electrode material, it is important for the formation of a capacitance that an electric double layer be formed with the electrolyte diffused into the pores. However, at low temperatures, the diffusion of the electrolyte in the electrolytic solution is hindered, and the diffusion resistance of the impedance increases, resulting in the problem that the output characteristic of the electric double layer capacitor is significantly degraded. This has been a major factor limiting the range of applications of the electric double layer capacitor. As a method of solution, one could easily conceive of increasing the pore size of the porous carbon material used as the electrode material; however, in this case, since a sufficient per-volume electric capacity cannot be obtained, the intended purpose of the capacitor is defeated.

Accordingly, it is an object of the present invention to provide a porous carbon material that can greatly improve diffusion resistance at low temperature in an electric double layer capacitor, a method for producing such a porous carbon material, a porous carbon electrode material using the porous carbon material, and an electric double layer capacitor using the porous carbon electrode material.

DISCLOSURE OF THE INVENTION

According to the present invention, there is provided an electric double layer capacitor comprising an electrode formed from activated carbon, a separator, and a nonaqueous electrolytic solution, wherein the activated carbon has an average particle size not smaller than 0.1 $\mu$m but smaller than 1.0 $\mu$m.

The electrode layer has a thickness of 20 to 100 $\mu$m, and the current collector is an aluminum foil whose surface is coated with a conductive film formed from graphite and a binding resin; further, the electrode layer is basically formed from an activated carbon powder, a conductive agent, and a binder polymer, and the binder polymer is soluble in a solvent.

According to the present invention, there is also provided an electric double layer capacitor comprising a pair of electrodes forming an anode and cathode, a separator, and a nonaqueous electrolytic solution, wherein an electrode sheet is used for forming the electrodes, and an electrode layer is formed from activated carbon whose specific surface area is 500 to 2500 m$^2$/g and whose particle size at 90% cumulative volume (D90) as determined from a particle size distribution is 0.8 to 6 $\mu$m.

The particle size at 100% cumulative volume (D100) is 0.8 to 20 $\mu$m, the peak height (SRp) measured relative to a center plane on a surface of the electrode sheet is 0.01 to 4 $\mu$m, and the separator thickness is 5 to 30 $\mu$m.

According to the present invention, there is also provided an electric double layer capacitor comprising at least an anode, a cathode, a separator, and an electrolytic solution, wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and at least either the condition that the value of A in equation (1) be not smaller than -0.2 or the condition that the value of B in equation (2) be not smaller than 0.8 is satisfied, the equations (1) and (2) being given as

$$W \geq 1.5D + A \quad (1)$$

$$W \geq 1.3V + B \quad (2)$$

The container for hermetically sealing the anode, cathode, separator, and electrolytic solution is formed from a film formed in a bag-like shape.

According to the present invention, there is also provided an electric double layer capacitor wherein, on a Nyquist plot showing results of AC impedance measurements, when a difference between a real impedance component Z2 at 0.05 Hz and an impedance Z1 at a point where an impedance curve intersects a real axis on a high frequency side is denoted by Z0 = Z2 - Z1, the ratio of Z0 (-20) at -20°C to Z0 (20) at 20°C satisfies a range defined by relation (3) which is given as

$$1 < Z0(-20)/Z0(20) < 10 \quad (3)$$

BRIEF DESCRIPTION OF THE DRAWINGS

Figure 1 is a top plan view schematically showing one example of a series-connected stacked cell structure using two capacitors according to the present invention;

Figure 2 is a top plan view schematically showing an alternative example of a series-connected stacked cell structure using two capacitors according to the present invention;

Figure 3 is a cross-sectional view schematically showing the one example of the series-connected stacked cell structure using two capacitors according to the present invention;

Figure 4 is a top plan view schematically showing the alternative example of the series-connected stacked cell structure using two capacitors according to the present invention;

Figure 5 is a diagram schematically showing one example of a series-connected stacked cell structure using three capacitors according to the present invention;

Figure 6 is a top plan view schematically showing an alternative example of a series-connected stacked cell structure using three capacitors according to the present invention;

Figure 7 is a top plan view schematically showing another alternative example of a series-connected stacked cell structure using three capacitors according to the present invention;

Figure 8 is a diagram for explaining a Nyquist plot of AC impedance measurement results for the capacitor of the present invention;

Figure 9 is a schematic diagram of a power supply circuit in which the capacitor of the present invention is connected to the secondary side of a DC/DC converter;

Figure 10 is a block diagram of a power supply circuit in which the capacitor of the present invention is connected in parallel to a DC power supply;

Figure 11 is a diagram for explaining how voltage varies when power is being supplied from the DC power supply to a load; and

Figure 12 is a diagram for explaining the configuration of a control circuit for controlling the charging/discharging of the capacitor in the power supply circuit in which the capacitor of the present invention is connected in parallel to the DC power supply.

EMBODIMENTS OF THE INVENTION

[Embodiment 1]

An electric double layer capacitor according to a first embodiment achieves a higher power output, especially a higher power output under low-temperature environments, than the conventional electric double layer capacitor. Accordingly, the electric double layer capacitor of this embodiment is useful in applications that impose stringent requirements on the operating characteristics under low-temperature environments, and more specifically, in hybrid electric vehicle (HEV) and like applications.

In the first embodiment, the electric double layer capacitor comprises a pair of electrodes formed from activated carbon, a separator, and a nonaqueous electrolytic solution, and is characterized in that the average particle size of the activated carbon is not smaller than 0.1 $\mu$m but smaller than 1.0 $\mu$m. In the following description, the activated carbon used in the electric double layer capacitor of the present invention is called the submicron activated carbon. The average particle size of the activated carbon used in the conventional electric double layer capacitor is about 10 $\mu$m to 100 $\mu$m, and the average particle size of commercially available activated carbon also falls within this range. The electric double layer capacitor of the present invention achieves a higher power output, especially, a higher power output under low-temperature environments, by using the submicron carbon whose particle size is much smaller than the conventional one. When the average particle size of the activated carbon is 1 $\mu$m or larger, the contribution of the activated carbon to the increased output is not particularly noticeable, and conversely, activated carbon smaller than 0.1 $\mu$m is practically difficult to produce.

Here, the average particle size can be measured using a laser diffraction measurement technique, and the average particle size measured by this technique refers to the mean particle size (D50) in the volumetric particle size distribution. Further, the average particle size in the present invention refers to the average particle size of the primary particles. When checking the average particle size by extracting activated carbon particles from the electrodes, with the above method it may not be possible to accurately estimate the average particle size of the primary particles because of such problems as secondary aggregation. In such a case, the average particle size of the primary particles can be estimated by observing the particles under an electron microscope or the like and analyzing the captured image.

There are two major methods of obtaining the submicron activated carbon. One method is to mill a mass of activated carbon to submicron size. In this milling method, it is preferable to use a milling machine such as a jet mill, a ball mill, a bead mill, or the like and, if needed, the particles are classified according to size. Wet milling in which the milling is performed by dispersing the activated carbon in a solvent is particularly preferable, because the submicron activated carbon can be easily obtained in a short time.

The solvent used here is not specifically limited, the only requirement being that the milling be accomplished as desired, and specific examples of the solvent include water, dimethyl acetamide (DMAc), N-methylpyrrolidone (NMP), etc. It is also preferable to add a surfactant as needed. In the case of wet milling, the solvent is removed by drying after the milling, but if appreciable secondary aggregation occurs here, it will make the subsequent handling extremely difficult. In such a case, it is preferable to disaggregate the aggregated particles using a ball mill, jet mill, or the like after drying.

Here, known activated carbon, such as pitch-based carbon, phenol resin-based carbon, or coconut carbon activated in a prescribed manner, can be advantageously used as the activated carbon before milling. As for the method of activation, a known activation method, such as gas activation using steam or the like, chemical activation using a chemical such as zinc chloride, alkaline activation using an alkaline metal compound such as KOH, can be advantageously used. Among others, activated carbon produced by the alkaline activation of pitch-based carbon or phenol resin-based carbon is particularly preferable because a high capacitance can be obtained.

Further, steam-activated coconut carbon, which has previously been said to have a low capacitance characteristic, can also be used advantageously in the present invention. When conventional activated coconut carbon having a large average particle size was used, a capacitance of 12 F/cc was common. When the steam-activated coconut carbon is milled to submicron size in accordance with the present invention, it becomes possible to obtain a capacitance of 18 F/cc or larger, though the precise cause for this is not known. In this case, an electrode density of 0.75 g/cm$^3$ or greater, preferably 0.8 g/cm$^3$ or greater, must be achieved, and the cause for the increased capacitance could be that the reduction to submicron size contributes to increasing the electrode density. In this case, an electrode having a smooth and glossy surface can be obtained, which is particularly preferable for use as the electrodes of the electric double layer capacitor of the present invention.

In the case of such high-density electrodes, faults such as increased internal resistance, reduced capacitance, etc. have traditionally occurred because of the difficulty of impregnation with the electrolytic solution. Such faults do not occur in the case of the present invention, because the invention uses the submicron activated carbon, which permits the formation of flow channels for the electrolytic solution within the electrodes even when the electrode density is increased.

The other method of obtaining the submicron activated carbon is to produce the activated carbon by activating a carbon material already reduced to submicron size. Examples of such a submicron-size carbon material include a nanocarbon material such as carbon nanofiber. It is also possible to obtain such a submicron-size carbon material by milling a mass of carbon material using a method such as described earlier. As for the method of activation, a known activation method, such as gas activation using steam or the like, chemical activation using a chemical such as zinc chloride, alkaline activation using an alkaline metal compound such as KOH, can be advantageously used.

Generally, the electrodes for the electric double layer capacitor are each fabricated by forming an electrode layer of activated carbon on a current collector; the following two methods are commonly used for electrode fabrication. In one method, activated carbon, a conductive agent, and a binder polymer are mixed together and kneaded, and the mixture is molded by extrusion molding into the shape of a film, which is rolled and stretched and then laminated to the current collector. In the other method, activated carbon, a conductive agent, a binder polymer, and a solvent for dissolving the binder polymer therein are mixed to produce a slurry, and the slurry is applied over the current collector, which is then dried and pressed. In the case of the present invention, the former method is not very preferable, because the film formation is difficult, and therefore the latter method is preferred.

A suitable polymer can be used advantageously as the binder polymer, as long as the polymer is capable of electrode formation and has sufficient electrochemical stability. Specific examples preferred for use include polyvinylidene fluoride and a polyvinylidene fluoride copolymer.

A suitable solvent can be used as the solvent for the production of the slurry, as long as the solvent can dissolve the binder polymer therein. Specific examples include N-methylpyrrolidone (NMP), dimethyl acetamide (DMAc), dimethyl formamide (DMF), and dimethyl sulfoxide (DMSO), of which NMP and DMAc are particularly preferable.

However, the electrode fabrication using the submicron activated carbon is not easy even in the latter method. More specifically, the submicron activated carbon particles are difficult to disperse and tend to form aggregates during the production of the slurry, and it is extremely difficult to produce an electrode having a good surface condition. Furthermore, the slurry containing the submicron activated carbon is highly thixotropic, and it is difficult to obtain fluidity suitable for coating; if enough fluidity is to be obtained, a large quantity of solvent will have to be used, in which case the strength of the resulting electrode will be insufficient, and appreciable flaking will occur. Furthermore, if the coating is formed a little thicker, cracks will occur after drying, resulting in an inability to form an electrode.

In view of the above problems associated with the electrode fabrication using the submicron activated carbon, the present invention employs a technique that adds a slurrying agent for the production of the slurry. Specific examples of the slurrying agent include polyvinyl pyrrolidone, carboxymethyl cellulose, polyvinyl acetate, polyvinyl alcohol, etc., of which polyvinyl pyrrolidone is particularly preferable. When polyvinyl pyrrolidone is added for the production of the slurry, the thixotropy is reduced and, as a result, enough fluidity can be obtained with a relatively small quantity of solvent, and the dispersibility of the submicron activated carbon greatly improves. Furthermore, the possibility of crack formation after drying is also greatly reduced.

Here, the amount of the slurrying agent added is preferably not larger than 8% by weight but not smaller than 0.1% by weight relative to the dry weight of the electrode layer. More preferably, the amount of the slurrying agent added is not larger than 5% by weight. If the slurrying agent is added in an amount larger than 8% by weight, the viscosity of the slurry rapidly drops, and a dispersion failure occurs, making it difficult to produce a suitable slurry. If the amount is smaller than 0.1% by weight, the slurrying agent will produce little effect.

When using polyvinyl pyrrolidone as the slurrying agent, polyvinyl pyrrolidone with a molecular weight of 1000 to 50000 is preferable.

In the electrode fabrication using the submicron activated carbon, it is preferable to heat-treat the submicron activated carbon before producing the slurry. As a result of this heat treatment, the thixotropy of the slurry is significantly reduced, as is the amount of solvent necessary when producing the slurry, which serves to greatly facilitate the electrode fabrication. The heat treatment is performed preferably at a temperature not lower than 400°C but not higher than 900°C, more preferably at a temperature not lower than 400°C but not higher than 800°C, and still more preferably at a temperature not lower than 500°C but not higher than 800°C. If the heat treatment temperature is lower than 400°C, the effectiveness in reducing the thixotropy and the amount of solvent is not sufficient; conversely, if the temperature is higher than 900°C, the formation of aggregates and the reduction of capacitance become appreciable, which is not desirable. The heat treatment time is preferably 30 minutes or longer at the specified temperature. The heat treatment atmosphere is preferably nitrogen, argon, or a vacuum.

The heat treatment may cause secondary aggregation of the activated carbon, and if the slurry is produced in the presence of appreciable secondary aggregation, the electrode fabrication using the submicron activated carbon may become difficult. For this reason, it is preferable to disaggregate the aggregated particles after the heat treatment, if needed. The disaggregation is performed preferably after milling when the submicron activated carbon is produced by dry-milling a mass of activated carbon, or after removing the solvent by drying when the submicron activated carbon is produced by wet-milling a mass of activated carbon, or after activation when the submicron activated carbon is produced by activating submicron particles.

In the electrode fabrication using the submicron activated carbon, the selection of current collectors is also an important factor. Generally, aluminum foils are used as the current collectors in the nonaqueous-type electric double layer capacitor. However, if the electrode of submicron activated carbon is fabricated using a conventional aluminum foil, the electrode layer easily delaminates from the current collector. This phenomenon becomes pronounced particularly in the pressing process. Further, even if the electrode is successfully formed, the contact resistance between the electrode layer and the current collector becomes large, defeating the purpose of the submicron activated carbon used to increase the output of the electric double layer capacitor.

To address this problem, in the present invention, a metal foil coated with a conductive film formed from graphite and a binder resin is used as the current collector. An aluminum foil is particularly advantageous for use as the metal foil. When the conductive coating is applied in advance in this manner, the adhesion between the submicron activated carbon electrode layer and the current collector improves, serving to prevent delamination, and the contact resistance between the electrode layer and the current collector greatly decreases. The thickness of the conductive coating is preferably within a range of 1 to 5 $\mu$m. The conductive coating can be easily formed by applying either a slurry comprising graphite, a binder resin, and a solvent or an emulsion comprising graphite, a binder resin, and a dispersion medium onto an aluminum foil. Either a thermosetting resin or a thermoplastic resin can be advantageously used as the binder resin. In the case of a thermosetting resin, polyamide imide is particularly preferable. In the case of a thermoplastic resin, an ethylene acrylate copolymer or cellulose is particularly preferable. For the solvent or dispersion medium, water is particularly preferable from the standpoint of productivity.

As for the aluminum foil used when forming the conductive coating, a conventional aluminum foil can be used satisfactorily, but an aluminum foil treated by etching can also be used advantageously. An aluminum foil treated by etching can be easily produced by a known method. In one method, an acid or alkaline solution is applied to the aluminum foil, for example, by immersing the foil in the solution, thereby dissolving the aluminum in it. In another method, electrolytic etching is performed in an acid or alkaline solution by applying an AC or DC voltage.

Since the aluminum foil thus treated by etching has a large surface area, it not only provides good adhesion but serves to reduce the contact resistance between the electrode layer and the current collector. Compared with the case of the earlier described conductive coating, since the resistance of the conductive coating layer, as well as the contact resistance between the conductive coating and the aluminum foil, are disregarded, the etching method is effective in reducing the internal resistance of the electric double layer capacitor.

A major technical aspect of the electric double layer capacitor of the present invention is to increase the output of the electrode layer itself by using the submicron activated carbon, but if the internal resistance associated with other portions is high, it becomes difficult for the submicron activated carbon to achieve its effectiveness. It is therefore important that the internal resistance associated with portions other than the electrode layer be reduced as much as possible. From this standpoint, it is important to use as the current collector an aluminum foil coated with a conductive film or an aluminum foil treated by etching; in particular, an aluminum foil treated by etching is preferable for use as the current collector.

In the electric double layer capacitor of the present invention, the thickness of each current collector is preferably within a range of 10 to 40 $\mu$m.

In the present invention, a known material such as acetylene black, Ketjen black, vapor growth carbon fiber, graphite powder, etc. can be used advantageously as the conductive agent. Among others, acetylene black and Ketjen black are preferable. From the standpoint of producing a slurry having good electrode formability, acetylene black is preferred.

When an aluminum foil treated by etching is used as the current collector, the selection of the conductive agent also becomes an important technical consideration, and in that case, acetylene black is particularly preferable. When the current collector is an aluminum foil treated by etching, unlike the case of the aluminum foil coated with a conductive film, the electrode formability of the submicron activated carbon is degraded, tending to cause cracks or delamination. Such problems can be avoided by using acetylene black as the conductive agent, because the electrode formability then improves.

In the pressing process, it is preferable to apply heat, and the heating temperature here is preferably about 100 to 150°C. When this heat pressing process is employed, the adhesion between the electrode layer and the current collector improves, and the contact resistance between them decreases. The heat pressing process is particularly effective when an aluminum foil treated by etching is used as the current collector and acetylene black is used as the conductive agent.

In the electric double layer capacitor of the present invention, the electrode layer thickness is preferably within a range of 20 to 100 $\mu$m. If the electrode layer thickness is smaller than 20 microns, then when fabricating a cell of a given capacity, the separator and current collectors occupy a large volume, reducing the volume that the electrode layer occupies within the cell; this is not desirable from the standpoint of energy density; in addition, the range of applications is greatly limited. In particular, the output characteristic (including the low-temperature characteristic) is also important, but it is difficult to apply such a capacitor to a hybrid electric vehicle (HEV) power supply for which energy density requirements are an important factor.

Compared with the prior art electric double layer capacitor, the electric double layer capacitor of the present invention exhibits excellent output characteristics, especially under low-temperature environments, because of the use of the submicron activated carbon, and this effect is not limited to the film thickness. Rather, if the feature of the submicron activated carbon is to be exploited further, it will be preferable to apply it to 20-$\mu$m or thicker electrodes with which a high power output characteristic is difficult to achieve.

Further, considering productivity and high output, the electrode thickness is preferably 100 $\mu$m or less. More preferably, the electrode thickness is within a range of 20 to 50 $\mu$m.

In the electric double layer capacitor of the present invention, the capacitance density of the electrode layer is preferably within a range of 12 to 23 F/cm$^3$ from the standpoint of energy density. The capacitance density of the electrode layer is obtained by dividing the capacitance of the cell by the total volume of the electrode layer in the cell. To obtain such a capacitance density, the BET specific surface area of the submicron activated carbon used in the present invention is preferably within a range of 1000 to 2500 m$^2$/g.

The density of the electrode layer is preferably 0.6 g/cm$^3$ or higher, more preferably 0.65 g/cm$^3$ or higher, still more preferably 0.7 g/cm$^3$ or higher, yet more preferably 0.75 g/cm$^3$ or higher, further preferably 0.8 g/cm$^3$ or higher, and still further preferably 0.85 g/cm$^3$ or higher. If the density of the electrode layer is lower than 0.6 g/cm$^3$, the capacitance density decreases, which is not desirable from the standpoint of energy density. It is also not desirable from the standpoint of surface smoothness, and self-discharge, low production yield, or other trouble may result. Because of the use of the submicron activated carbon, the present invention is substantially free from such common problems as a decrease of electrolyte impregnating ability, a decrease of capacitance density, and an increase of internal resistance, which can occur when the density of the electrode layer is increased. As a result, in the present invention, there is no specific upper limit to the density of the electrode layer, and the density can be increased to a region that can be physically achieved by compressing with a press or the like without causing performance problems. However, the practical density is about 1 g/cm$^3$ or less because of the physical limit of the process.

In the electric double layer capacitor of the present invention, a known structure such as paper or a porous film is preferably used for the separator, and a known material, such as cellulose, aromatic polyamide, polyolefin, Teflon (registered trademark), polyphenylene sulfide, etc., is preferably used as the material for the separator. In particular, cellulose paper, aromatic polyamide paper, and an aromatic polyamide porous film are preferable from the standpoint of increasing the heat resistance and reducing the film thickness.

The electric double layer capacitor of the present invention uses submicron activated carbon electrodes; this type of electrode has excellent surface smoothness compared with the conventional type. The surface smoothness of the conventional activated carbon electrodes has not been good, and therefore a separator having a thickness of about 30 to 100 $\mu$m has been used in order to prevent short-circuiting. In the present invention, on the other hand, the excellent surface smoothness permits the use of a separator of a thickness of about 5 to 20 $\mu$m which is sufficiently thin compared with the conventional separator. Reducing the thickness of the separator contributes to reducing the internal resistance associated with the separator, and not only the output but also the energy density of the cell increases.

However, in the case of paper, the fiber diameter of the fiber forming the paper imposes a limit on how far the thickness can be reduced, and it is extremely difficult to achieve a thickness of 5 to 20 $\mu$m. Accordingly, a porous film is preferable for forming such a thin separator. Considering heat resistance, etc., a porous film made of aromatic polyamide is preferable for such a separator. Further, a porous film made of aromatic polyamide combined with nonwoven fabric is also preferable.

The electric double layer capacitor of the present invention employs a nonaqueous electrolytic solution as the electrolytic solution. Generally, compared with an aqueous electrolytic solution, a nonaqueous electrolytic solution has the advantage that the breakdown voltage is high and a high energy density can be obtained, but the disadvantage is that the output is low. In the case of the electric double layer capacitor of the present invention, since the high output is achieved by using the submicron activated carbon, a sufficiently high output can be obtained even when a nonaqueous electrolytic solution is used. Accordingly, it is preferable to use a nonaqueous electrolytic solution which is advantageous in terms of energy density.

Generally, an electrolytic solution is prepared by dissolving an electrolyte in a solvent. A nonaqueous electrolytic solution is a solution in which the solvent is a nonaqueous solvent. A known substance can be used advantageously as the solvent; specific examples include propylene carbonate, ethylene carbonate, $\gamma$-butyrolactone, $\gamma$-valerolactone, acetonitrile, nitromethane, methoxyacetonitrile, nitroethane, N,N-dimethylformamide, 3-methoxy-propionitrile, N-methylpyrrolidone, N,N'-dimethylimidazolidinone, dimethyl sulfoxide, trimethyl phosphate, N-methyloxazolidinone, butylene carbonate, glutaronitrile, adiponitrile, sulfolane, 3-methylsulfolane, dimethyl carbonate, ethyl methyl carbonate, etc.

These substances may be used singly or mixed together in a suitable combination. It is important for the solvent to have an appropriate boiling point, melting point, viscosity, and relative permittivity; from this point of view, a solvent composed principally of propylene carbonate or $\gamma$-butyrolactone is particularly preferred for use. It is generally known that, compared with propylene carbonate, $\gamma$-butyrolactone has lower viscosity and is therefore advantageous particularly in terms of the output characteristic at low temperatures. However, it is generally considered that the durability of $\gamma$-butyrolactone is inferior to that of propylene carbonate.

In the case of the electric double layer capacitor of the present invention, since the electrodes are formed from the submicron activated carbon, if propylene carbonate is used as the solvent, an output characteristic comparable to that when $\gamma$-butyrolactone is used as the solvent can be obtained even under low-temperature environments. Accordingly, in the electric double layer capacitor of the present invention, it is most preferable to use an electrolyte solvent composed principally of propylene carbonate which shows higher durability.

For the electrolyte used in the electric double layer capacitor of the present invention, a known substance can be used advantageously. Specific examples include ammonium salt, phosphonium salt, imidazolium salt, etc. These substances may be used singly or mixed together in a suitable combination. Of these substances, ammonium salt is preferable from the standpoint of durability. Among ammonium salts, $(C_2H_5)_4N^+BF_4^-$ or $(C_2H_5)_3CH_3N^+BF_4^-$ and spiro-(1, 1') -bipyrrolidinium $BF_4^-$ are particularly preferable from the standpoint of solubility in the solvent and ion conductivity. Further, an ionic liquid represented by ethyl methyl imidazolium salt can also be used advantageously, in which case the electrolyte need not necessarily be dissolved in the solvent.

Here, the advantage of $(C_2H_5)_3CH_3N^+BF_4^-$ over $(C_2H_5)4N^+BF_4^-$ is the former's high solubility, and therefore $(C_2H_5)_3CH_3N^+BF_4^-$ is generally considered to have excellent ion conductivity; in the case of the prior art electric double layer capacitors, achieving a high electrolyte concentration has been one of the means for achieving an increased output. In the case of the electric double layer capacitor of the present invention, since the electrodes are formed from the submicron activated carbon, the output characteristic does not depend much on the electrolyte concentration, and an output characteristic comparable to that achieved at an electrolyte concentration of about 1.5 M can be obtained even at an electrolyte concentration of 1.0 M or less. Accordingly, the electrolyte need only be provided in an amount sufficient for charge accumulation, and an electrolyte concentration of 0.5 to 1.2 M suffices for this purpose.

The electric double layer capacitor of the present invention is not limited to a specific cell shape, but can be embodied in any cell shape. Specific examples include such cell shapes as button shape, cylindrical shape, and square shape. Further, an outer casing such as a metal can or aluminum-laminated resin film can also be used, and the invention can be carried out advantageously in either form.

[EXAMPLES]

(Measurement of average particle size)

Measurements were made using a laser diffraction particle size analyzer "SALD-2000J" manufactured by Shimadzu Corporation. Water was used as the dispersion medium of the activated carbon, and a trace amount of nonionic surfactant "Triton X-100" was added as a dispersing agent. The circulation flow rate of the dispersion liquid was set to about 1200 cm$^3$/min., and the analysis was performed under the conditions of a maximum absorbance of 0.20, a minimum absorbance of 0.10, and a refractive index of 1.70 to 0.20i, with the number of integrations being 64. The mean particle size (D50) in the volumetric particle size distribution obtained by the analysis was taken as the average particle size.

(Measurement of BET specific surface area)

The BET specific surface area was measured using a specific surface area/pore size analyzer "NOVA 1200e" manufactured by Quantachrome. As a pretreatment, the sample was dried by heating at 250°C for 30 minutes.

[Experimental examples of activated carbon]

[Example 1]

Activated carbon with an average particle size (D50) of 10 $\mu$m (tradename MSP20 manufactured by Kansai Coke and Chemicals) was dispersed in a solvent composed of dimethyl acetamide (DMAc), and was wet-milled (by a bead mill using 2-mm diameter zirconia beads) to obtain activated carbon with an average particle size of 0.6 $\mu$m (D50). The BET specific surface area of the thus obtained activated carbon was 1531 m$^2$/g. This activated carbon is designated as the experimental activated carbon 1.

[Example 2]

100 parts by weight of poly-4-methylpentene-1 (TPX: grade RT-18 [Manufactured by Mitsui Chemicals]) as a thermoplastic resin and 11.1 parts of mesophase pitch AR-HP (manufactured by Mitsubishi Gas Chemical) as a thermoplastic carbon precursor were melted and kneaded using a co-rotating twin screw extruder (TEX-30 manufactured by Japan Steel Works, barrel temperature: 290°C, under nitrogen stream) to produce a mixture. In the mixture produced under the stated conditions, the thermoplastic carbon precursor dispersed through the thermoplastic resin had a particle size of 0.05 to 2 $\mu$m. The mixture was held at 300°C for 10 minutes, but no aggregation of the thermoplastic carbon precursor was observed, and the particle size of the dispersed carbon precursor remained unchanged at 0.05 to 2 $\mu$m.
Next, using a 0.2-mm spinning nozzle, the above mixture was spun at a rate of 1200 m/min. under a temperature of 340°C to produce a precursor fiber. Then, using 100 parts by weight of decalin per part by weight of the precursor fiber, the thermoplastic resin was melted at 150°C and filtered to produce a stabilized precursor fiber. After mixing 3 parts by weight of acetylene black per 100 parts by weight of the stabilized precursor fiber, the mixture was heat-treated at 200°C in the air for 5 hours, after which the temperature was raised from room temperature up to 650°C in a nitrogen gas atmosphere over 5 hours to produce a fibrous carbon precursor.
40 parts by weight of potassium hydroxide, 40 parts of water, and 5 parts of isopropanol were added per 10 parts by weight of the fibrous carbon precursor, and a uniform slurry solution was produced by ultrasonic means; then, while flowing a nitrogen gas at a rate of 0.3 L/min., the solution was heated from room temperature to 650°C in 2.5 hours and held at this temperature for 2 hours, and then heated from 650°C to 900°C in one hour and held at this temperature for one hour, to accomplish the activation process. The resulting sample was washed in excess water and dried at 150°C to obtain fibrous activated carbon.
Next, 98 parts by weight of 10-mm zirconia balls and 3 parts by weight of the fibrous activated carbon were placed in a 80-ml nylon container and, using a planetary potmill (part number LP-1) manufactured by Ito Seisakusho for laboratory use, the container was rotated at 200 rpm for one hour; after that, 98 parts by weight of 2-mm zirconia balls and 3 parts by weight of the thus milled fibrous activated carbon were placed in a container which was then rotated at 200 rpm for 5 hours to produce activated carbon.
The average particle size (D50) of the activated carbon was 0.9 $\mu$m, and the BET specific surface area was 1786 m$^2$/g. This activated carbon is designated as the experimental activated carbon 2.

[Example 3]

Activated carbon with an average particle size (D50) of 3 $\mu$m (tradename SC-2 manufactured by Japan Enviro Chemicals) was dispersed in a solvent composed of water, and was wet-milled (by a bead mill using 2-mm diameter zirconia beads); the resulting sample was then heat-treated at 500°C under a nitrogen atmosphere for one hour and disaggregated to obtain activated carbon with an average particle size of 0.4 $\mu$m (D50). The BET specific surface area of the thus obtained activated carbon was 1240 m$^2$/g. This activated carbon is designated as the experimental activated carbon 3.

[Example 4]

Activated carbon with an average particle size (D50) of 3 $\mu$m (tradename PC-2 manufactured by Japan Enviro Chemicals) was dispersed in a solvent composed of water, and was wet-milled (by a bead mill using 2-mm diameter zirconia beads); the resulting sample was then heat-treated at 800°C under a nitrogen atmosphere for one hour and disaggregated to obtain activated carbon with an average particle size of 0.5 $\mu$m (D50). The BET specific surface area of the thus obtained activated carbon was 1268 m$^2$/g. This activated carbon is designated as the experimental activated carbon 4.

[Example 5]

Activated carbon with an average particle size (D50) of 3 $\mu$m (tradename PC-2 manufactured by Japan Enviro Chemicals) was dispersed in a solvent composed of water, and was wet-milled (by a bead mill using 2-mm diameter zirconia beads) to obtain activated carbon with an average particle size of 0.7 $\mu$m (D50). The BET specific surface area of the thus obtained activated carbon was 1500 m$^2$/g. This activated carbon is designated as the experimental activated carbon 5.

(Reference example)

Activated carbon with an average particle size (D50) of 10 $\mu$m (tradename MSP20 manufactured by Kansai Coke and Chemicals) was dry-milled (by a bead mill using 2-mm diameter zirconia beads) to obtain activated carbon with an average particle size of 2.9 $\mu$m (D50). The BET specific surface area of the thus obtained activated carbon was 1872 m$^2$/g. This activated carbon is designated as the experimental activated carbon 6.

[Experimental examples of current collector]

[Example 1]

A conductive paint composed of graphite, polyamideimide, and a solvent (tradename Electrodag EB-815 manufactured by Acheson (Japan)) was applied over a 20-$\mu$m thick aluminum foil (manufactured by Sumikei Aluminum Foil), which was then predried at 150°C and cured at 260°C to form a 5-$\mu$m thick conductive coating film on the aluminum foil. This current collector is designated as the experimental current collector 1.

[Example 2]

A conductive paint composed of graphite, ethylene acrylate copolymer, and water (tradename Electrodag EB-012 manufactured by Acheson (Japan)) was applied over a 20-$\mu$m thick aluminum foil (manufactured by Sumikei Aluminum Foil), and was dried at 85°C to form a 10-$\mu$m thick conductive coating film on the aluminum foil. This current collector is designated as the experimental current collector 2.

[Example 3]

A conductive paint composed of graphite, cellulose, and water (tradename Varniphite T602 manufactured by Nippon Graphite Industries) was applied to a 30-$\mu$m thick, etched aluminum foil (part number 30CB manufactured by Japan Capacitor Industrial Company), and was dried at 150°C to form a 2-$\mu$m thick conductive coating film on the aluminum foil. This current collector is designated as the experimental current collector 3.

[Example 4]

A conductive paint composed of graphite, cellulose, and water (tradename Varniphite T602 manufactured by Nippon Graphite Industries) was applied over a 20-$\mu$m thick aluminum foil (manufactured by Sumikei Aluminum Foil), and was dried at 150°C to form a 2-$\mu$m thick conductive coating film on the aluminum foil. This current collector is designated as the experimental current collector 4.

[Experimental examples of electrode]

Electrodes of different electrode layer thicknesses shown in Table 1 were experimentally produced in accordance with method examples 1 to 5 and reference method examples 1 to 6 described below.

[Method example 1]

93 parts by weight of the experimental activated carbon 1, 7 parts by weight of Ketjen black, 17 parts by weight of polyvinylidene fluoride (manufactured by Kureha Chemical), 565 parts by weight of DMAc, and 4 parts by weight of polyvinyl pyrrolidone were mixed to produce a slurry. The slurry was applied over the experimental current collector 1 and dried. The structure was then pressed at normal temperature to produce an activated carbon electrode.

[Method example 2]

93 parts by weight of the experimental activated carbon 1, 7 parts by weight of acetylene black, 17 parts by weight of polyvinylidene fluoride (manufactured by Kureha Chemical), 337 parts by weight of DMAc, and 4 parts by weight of polyvinyl pyrrolidone were mixed to produce a slurry. The slurry was applied over the experimental current collector 1 and dried. The structure was then pressed at normal temperature to produce an activated carbon electrode.

[Method example 3]

93 parts by weight of the experimental activated carbon 1, 7 parts by weight of acetylene black, 17 parts by weight of polyvinylidene fluoride (manufactured by Kureha Chemical), 337 parts by weight of DMAc, and 4 parts by weight of polyvinyl pyrrolidone were mixed to produce a slurry. The slurry was applied over a current collector formed from a 20-$\mu$m thick, etched aluminum foil (part number 20CB manufactured by Japan Capacitor Industrial Company), and was dried. The structure was then pressed at a temperature of 150°C to produce an activated carbon electrode.

[Method example 4]

93 parts by weight of the experimental activated carbon 2, 7 parts by weight of Ketjen black, 17 parts by weight of polyvinylidene fluoride (manufactured by Kureha Chemical), 1710 parts by weight of NMP, and 8 parts by weight of polyvinyl pyrrolidone were mixed to produce a slurry. The slurry was applied over the experimental current collector 1 and dried. The structure was then pressed at normal temperature to produce an activated carbon electrode.

[Method example 5]

93 parts by weight of the experimental activated carbon 1, 7 parts by weight of acetylene black, 17 parts by weight of polyvinylidene fluoride (manufactured by Kureha Chemical), 337 parts by weight of DMAc, and 4 parts by weight of polyvinyl pyrrolidone were mixed to produce a slurry. The slurry was applied over the experimental current collector 2 and dried. The structure was then pressed at a temperature of 150°C to produce an activated carbon electrode.

[Method example 6]

76.9 parts by weight of the experimental activated carbon 3, 5.8 parts by weight of acetylene black, 14 parts by weight of polyvinylidene fluoride (manufactured by Kureha Chemical), 365 parts by weight of DMAc, and 3.3 parts by weight of polyvinyl pyrrolidone were mixed to produce a slurry. The slurry was applied over the experimental current collector 3 and dried. The structure was then pressed at normal temperature to produce an activated carbon electrode.

[Method example 7]

76.9 parts by weight of the experimental activated carbon 4, 5.8 parts by weight of acetylene black, 14 parts by weight of polyvinylidene fluoride (manufactured by Kureha Chemical), 308 parts by weight of DMAc, and 3.3 parts by weight of polyvinyl pyrrolidone were mixed to produce a slurry. The slurry was applied over the experimental current collector 4 and dried. The structure was then pressed at normal temperature to produce an activated carbon electrode.

[Method example 8]

93 parts by weight of the experimental activated carbon 1, 7 parts by weight of acetylene black, 17 parts by weight of polyvinylidene fluoride (manufactured by Kureha Chemical), 337 parts by weight of DMAc, and 4 parts by weight of polyvinyl pyrrolidone were mixed to produce a slurry. The slurry was applied over the experimental current collector 3 and dried. The structure was then pressed at a temperature of 150°C to produce an activated carbon electrode.

[Reference method example 1]

93 parts by weight of the experimental activated carbon 1, 7 parts by weight of Ketjen black, 17 parts by weight of polyvinylidene fluoride (manufactured by Kureha Chemical), 565 parts by weight of DMAc, and 4 parts by weight of polyvinyl pyrrolidone were mixed to produce a slurry. The slurry was applied over a current collector formed from a 20-$\mu$m thick, etched aluminum foil (part number 20CB manufactured by Japan Capacitor Industrial Company), and was dried, but cracks occurred in the electrode layer, failing to produce the electrode.

[Reference method example 2]

93 parts by weight of the experimental activated carbon 1, 7 parts by weight of acetylene black, 17 parts by weight of polyvinylidene fluoride (manufactured by Kureha Chemical), 337 parts by weight of DMAc, and 4 parts by weight of polyvinyl pyrrolidone were mixed to produce a slurry. The slurry was applied over a current collector formed from a 20-$\mu$m thick aluminum foil (manufactured by Sumikei Aluminum Foil), and was dried. The structure was then pressed at normal temperature, but the electrode layer delaminated from the aluminum foil, failing to produce the electrode.

[Reference method example 3]

93 parts by weight of the experimental activated carbon 1, 7 parts by weight of acetylene black, 17 parts by weight of polyvinylidene fluoride (manufactured by Kureha Chemical), and 337 parts by weight of DMAc were mixed to produce a slurry, but the resultant slurry lacked fluidity and was unsuitable for coating. The slurry was applied over the experimental current collector 1, resulting in the production of an electrode having insufficient surface smoothness because of the formation of conspicuous surface irregularities.

[Reference method example 4]

93 parts by weight of the experimental activated carbon 1, 7 parts by weight of Ketjen black, 17 parts by weight of polyvinylidene fluoride (manufactured by Kureha Chemical), and 2000 parts by weight of DMAc were mixed to produce a slurry, but the resultant slurry lacked fluidity and was unsuitable for coating. The slurry was applied over the experimental current collector 1, resulting in the production of an electrode having insufficient surface smoothness because of the formation of conspicuous surface irregularities.

[Reference method example 5]

93 parts by weight of the experimental activated carbon 3, 7 parts by weight of Ketjen black, 17 parts by weight of polyvinylidene fluoride (manufactured by Kureha Chemical), 304 parts by weight of DMAc, and 4 parts by weight of polyvinyl pyrrolidone were mixed to produce a slurry. The slurry was applied over the experimental current collector 1 and dried. The structure was then pressed at normal temperature to produce an activated carbon electrode.

[Reference method example 6]

Activated carbon with an average particle size of 10 $\mu$m (tradename MSP20 manufactured by Kansai Coke and Chemicals) was used. 93 parts by weight of the activated carbon 3, 7 parts by weight of Ketjen black, 17 parts by weight of polyvinylidene fluoride (manufactured by Kureha Chemical), 289 parts by weight of DMAc, and 4 parts by weight of polyvinyl pyrrolidone were mixed to produce a slurry. The slurry was applied over the experimental current collector 1 and dried. The structure was then pressed at normal temperature to produce an activated carbon electrode.

[Reference method example 7]

76.9 parts by weight of the experimental activated carbon 5, 5.8 parts by weight of acetylene black, 14 parts by weight of polyvinylidene fluoride (manufactured by Kureha Chemical), 513 parts by weight of DMAc, and 3.3 parts by weight of polyvinyl pyrrolidone were mixed to produce a slurry. The resultant slurry was highly thixotropic. The slurry was applied so as to form an electrode layer to a thickness of 30 $\mu$m on the experimental current collector 4, but many cracks were formed, rendering the electrode defective.

[Table 1]

| | METHOD | ACTIVATED CARBON | CONDUCIVE AGENT | CURRENT COLLECTOR | POLYVINYL PYRROLIDONE | ELECTRODE LAYER THICKNESS μm |
|---|---|---|---|---|---|---|
| 1-1 | EXAMPLE 1 | EXPERIMENTAL ACTIVATED CARBON 1 | KETJEN BLACK | EXPERIMENTAL CURRENT COLLECTOR 1 | ADDED | 11 |
| 1-2 | | | | | | 21 |
| 2-1 | EXAMPLE 2 | EXPERIMENTAL ACTIVATED CARBON 1 | ACETYLENE BLACK | EXPERIMENTAL CURRENT COLLECTOR 1 | ADDED | 21 |
| 2-2 | | | | | | 40 |
| 3-1 | EXAMPLE 3 | EXPERIMENTAL ACTIVATED CARBON 1 | ACETYLENE BLACK | ETCHED | ADDED | 15 |
| 4-1 | EXAMPLE 4 | EXPERIMENTAL ACTIVATED CARBON 2 | KETJEN BLACK | EXPERIMENTAL CURRENT COLLECTOR 1 | ADDED | 17 |
| 4-2 | | | | | | 32 |
| 4-3 | | | | | | 74 |
| 5-1 | REFERENCE EXAMPLE 1 | EXPERIMENTAL ACTIVATED CARBON 1 | KETJEN BLACK | ETCHED | ADDED | - |
| 6-1 | REFERENCE EXAMPLE 2 | EXPERIMENTAL ACTIVATED CARBON 1 | ACETYLENE BLACK | ALUMINUM FOIL | ADDED | - |
| 7-1 | REFERENCE EXAMPLE | EXPERIMENTAL 3 ACTIVATED CARBON 1 | ACETYLENE BLACK | EXPERIMENTAL CURRENT COLLECTOR 1 | NOT ADDED | - |
| 8-1 | REFERENCE EXAMPLE 4 | EXPERIMENTAL ACTIVATED CARBON 1 | KETJEN BLACK | EXPERIMENTAL CURRENT COLLECTOR 1 | NOT ADDED | - |
| 9-1 | REFERENCE EXAMPLE | EXPERIMENTAL 5 ACTIVATED CARBON 6 | KETJEN BLACK | EXPERIMENTAL CURRENT COLLECTOR 1 | ADDED | 19 |

(continued)

| | METHOD | ACTIVATED CARBON | CONDUCIVE AGENT | CURRENT COLLECTOR | POLYVINYL PYRROLIDONE | ELECTRODE LAYER THICKNESS μm |
|---|---|---|---|---|---|---|
| 10-1 | REFERENCE EXAMPLE 6 | COMMERCIALLY AVAILABLE ACTIVATED CARBON | KETJEN BLACK | EXPERIMENTAL CURRENT COLLECTOR 1 | ADDED | 25 |
| 11-1 | EXAMPLE 5 | EXPERIMENTAL ACTIVATED CARBON 1 | ACETYLENE BLACK | EXPERIMENTAL CURRENT COLLECTOR 2 | ADDED | 16 |
| 12-1 | EXAMPLE | 6 EXPERIMENTAL ACTIVATED CARBON 3 | ACETYLENE BLACK | EXPERIMENTAL CURRENT COLLECTOR 3 | ADDED | 20 |
| 13-1 | EXAMPLE 7 | EXPERIMENTAL ACTIVATED CARBON 4 | ACETYLENE BLACK | EXPERIMENTAL CURRENT COLLECTOR 4 | ADDED | 30 |
| 14-1 | REFERENCE EXAMPLE 7 | EXPERIMENTAL ACTIVATED CARBON 5 | ACETYLENE BLACK | EXPERIMENTAL CURRENT COLLECTOR 4 | ADDED | - |
| 15-1 | EXAMPLE 8 | EXPERIMENTAL ACTIVATED CARBON 1 | ACETYLENE BLACK | EXPERIMENTAL CURRENT COLLECTOR 3 | ADDED | 21 |

[Explanation of Table 1]

As can be seen from the results of reference method examples 3 and 4, the activated carbon electrode that uses the submicron activated carbon in the construction of the capacitor of the present invention cannot be produced without using polyvinyl pyrrolidone. Further, as can be seen from method example 3 and reference method example 1, when Ketjen black is used as the conductive agent, an aluminum foil treated by etching cannot be used as the current collector, and the formation of a conductive coating becomes mandatory. Further, if a conventional aluminum foil is used as the current collector, as shown in reference method example 1, the electrode cannot be formed. When wet-milled activated carbon is used, the thixotropy of the slurry is high, which may hinder the formation of the electrode but, as can be seen from a comparison between method example 7 and reference method example 7, the formation of the electrode becomes easier when heat-treated activated carbon is used.

[Experimental examples of separator]

Polymetaphenylene isophthalamide ("CONEX" manufactured by Teijin Techno Products) was dissolved in dimethylacetamide, and the dope was adjusted so that the concentration of the polymetaphenylene isophthalamide became 8% by weight. The dope was then cast over a polypropylene film to a thickness of 50 $\mu$m.
Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, and a permeability of 18 seconds/ 100 ml (JIS P8117).
The thus fabricated separator is designated as the experimental separator 1.

[Specific examples 1-1 to 1-8]

The experimental electrodes produced by the methods of examples 1 to 4 shown in Table 1 were each cut to form an electrode measuring 2 cm $\times$ 1.4 cm, and a lead was attached to it. Two such electrodes were produced, and were joined together with their electrode surfaces facing each other by interposing therebetween a separator formed from cellulose paper. The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.
The capacitors experimentally fabricated here are shown in Table 2.

(Comparative examples 1-1 and 1-2)

The experimental electrodes produced by the methods of reference examples 5 and 6 shown in Table 1 were each cut to form an electrode measuring 2 cm $\times$ 1.4 cm, and a lead was attached thereto. Two such electrodes were produced, and were joined together with their electrode surfaces facing each other by interposing therebetween a separator formed from 40-$\mu$m thick cellulose paper (TF-40 manufactured by Nippon Kodoshi Corporation). The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.
The capacitors experimentally fabricated here are shown in Table 2.

[Specific examples 1-9 and 1-10]

The experimental electrodes 1-1 and 1-2 shown in Table 1 were each cut to form an electrode measuring 2 cm $\times$ 1.4 cm, and a lead was attached to it. Two such electrodes were produced, and were joined together with their electrode surfaces facing each other by interposing therebetween a separator formed from 40-$\mu$m thick cellulose paper (TF-40 manufactured by Nippon Kodoshi Corporation). The electrodes were then impregnated with a propylene carbonate (PC) solution in which the electrolyte $(C_2H_5)_4N^+BF_4^-$ (TEABF$_4$) was dissolved at a concentration of 1.0 M, and were sealed into an outer casing made of an aluminum-laminated film, to fabricate an electric double layer capacitor.
The capacitors experimentally fabricated here are shown in Table 2.

(Comparative examples 1-3 and 1-4)

The experimental electrodes produced by the methods of reference examples 5 and 6 shown in Table 1 were each cut to form an electrode measuring 2 cm $\times$ 1.4 cm, and a lead was attached thereto. Two such electrodes were produced, and were joined together with their electrode surfaces facing each other by interposing therebetween a separator formed from 40-$\mu$m thick cellulose paper (TF-40 manufactured by Nippon Kodoshi Corporation). The electrodes were then impregnated with a propylene carbonate (PC) solution in which the electrolyte $(C_2H_5)_4N^+BF_4^-$ (TEABF$_4$) was dissolved at a concentration of 1.0 M, and were sealed into an outer casing made of an aluminum-laminated film, to fabricate an electric double layer capacitor.

The capacitors experimentally fabricated here are shown in Table 2.

[Specific example 1-11]

The experimental electrode 1-1 shown in Table 1 was cut to form an electrode measuring 2 cm $\times$ 1.4 cm, and a lead was attached thereto. Two such electrodes were produced, and were joined together with their electrode surfaces facing each other by interposing therebetween a separator formed from 40-$\mu$m thick cellulose paper (TF-40 manufactured by Nippon Kodoshi Corporation). The electrodes were then impregnated with a $\gamma$-butyrolactone (GBL) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.

The capacitor experimentally fabricated here is shown in Table 2.

(Comparative examples 1-5 and 1-6)

The experimental electrodes produced by the methods of reference examples 5 and 6 shown in Table 1 were each cut to form an electrode measuring 2 cm $\times$ 1.4 cm, and a lead was attached thereto. Two such electrodes were produced, and were joined together with their electrode surfaces facing each other by interposing therebetween a separator formed from 40-$\mu$m thick cellulose paper (TF-40 manufactured by Nippon Kodoshi Corporation). The electrodes were then impregnated with a $\gamma$-butyrolactone (GBL) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.

The capacitors experimentally fabricated here are shown in Table 2.

[Specific example 1-12]

The experimental electrode 1-2 shown in Table 1 was cut to form an electrode measuring 2 cm $\times$ 1.4 cm, and a lead was attached thereto. Two such electrodes were produced, and were joined together with their electrode surfaces facing each other by interposing the experimental separator 1 between them. The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.

The capacitor experimentally fabricated here is shown in Table 2.

(Comparative example 1-7)

The experimental electrode produced by the method of reference example 6 shown in Table 1 was cut to form an electrode measuring 2 cm $\times$ 1.4 cm, and a lead was attached thereto. Two such electrodes were produced, and were joined together with their electrode surfaces facing each other by interposing the experimental separator 1 between them. The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor. However, this electric double layer capacitor short-circuited, failing to operate.

The capacitor experimentally fabricated here is shown in Table 2.

[Specific example 1-13]

The experimental electrode produced by the method of example 5 shown in Table 1 was cut to form an electrode measuring 2 cm $\times$ 1.4 cm, and a lead was attached thereto. Two such electrodes were produced, and were joined together with their electrode surfaces facing each other by interposing therebetween a separator formed from 40-$\mu$m

thick cellulose paper (TF-40 manufactured by Nippon Kodoshi Corporation). The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.

The capacitor experimentally fabricated here is shown in Table 2.

[Specific examples 1-14 and 1-15]

The experimental electrodes produced by the methods of examples 6 and 7 shown in Table 1 were each cut to form an electrode measuring 2 cm × 1.4 cm, and a lead was attached thereto. Two such electrodes were produced, and were joined together with their electrode surfaces facing each other by interposing therebetween a separator formed from 40-μm thick cellulose paper (TF-40 manufactured by Nippon Kodoshi Corporation). The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.

The capacitors experimentally fabricated here are shown in Table 2.

[Specific example 1-16]

The experimental electrode produced by the method of example 8 shown in Table 1 was cut to form an electrode measuring 2 cm × 1.4 cm, and a lead was attached thereto. Two such electrodes were produced, and were joined together with their electrode surfaces facing each other by interposing therebetween a separator formed from 40-μm thick cellulose paper (TF-40 manufactured by Nippon Kodoshi Corporation). The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.

[Specific example 1-17]

The experimental electrode produced by the method of example 8 shown in Table 1 was cut to form an electrode measuring 2 cm × 1.4 cm, and a lead was attached thereto. Two such electrodes were produced, and were joined together with their electrode surfaces facing each other by interposing therebetween a separator formed from 40-μm thick cellulose paper (TF-40 manufactured by Nippon Kodoshi Corporation). The electrodes were then impregnated with a propylene carbonate (PC) solution (KKE-15 manufactured by Japan Carlit) in which the electrolyte spiro-(1,1')-bipyrrolidinium BF$_4^-$ was dissolved at a concentration of 1.5 M, and were sealed into an outer casing made of an aluminum-laminated film, to fabricate an electric double layer capacitor.

[Specific example 1-18]

The experimental electrode produced by the method of example 8 shown in Table 1 was cut to form an electrode measuring 2 cm × 1.4 cm, and a lead was attached thereto. Two such electrodes were produced, and were joined together with their electrode surfaces facing each other by interposing therebetween a separator formed from 40-μm thick cellulose paper (TF-40 manufactured by Nippon Kodoshi Corporation). The electrodes were then impregnated with a propylene carbonate (PC)/ethylene carbonate (EC)/diethyl carbonate (DEC) (39/31/30) solution (KKE-15DE manufactured by Japan Carlit) in which the electrolyte spiro-(1,1')-bipyrrolidinium BF$_4^-$ was dissolved at a concentration of 1.5 M, and were sealed into an outer casing made of an aluminum-laminated film, to fabricate an electric double layer capacitor.

[Measurement of capacitance density]

Each of the electric double layer capacitors fabricated in the above specific examples and comparative example was charged at a constant current of 1C and constant voltage of 2.5 V for two hours under a 20°C environment, and then discharged at a constant current of 1C until the voltage decreased to 0 V. The capacitance of the cell was calculated from the discharge capacity obtained here. Then, the capacitance density of the electrode layer was obtained by dividing the capacitance of the cell by the total volume of the electrode layer in the cell.

[Table 2]

| | ELECTRODE | ELECTROLYTIC SOLUTION | SEPARATOR | CAPACITANCE DENSITY F/cm$^3$ |
|---|---|---|---|---|
| SPECIFIC EXAMPLE 1-1 | 1-1 | A | CELLULOSE PAPER (TF-40) | 19 |
| SPECIFIC EXAMPLE 1-2 | 1-2 | A | CELLULOSE PAPER (TF-40) | 17 |
| SPECIFIC EXAMPLE 1-3 | 2-1 | A | CELLULOSE PAPER (TF-40) | 17 |
| SPECIFIC EXAMPLE 1-4 | 2-2 | A | CELLULOSE PAPER (TF-40) | 18 |
| SPECIFIC EXAMPLE 1-5 | 3-1 | A | CELLULOSE PAPER (TF-40) | 18 |
| SPECIFIC EXAMPLE 1-6 | 4-1 | A | CELLULOSE PAPER (TF-40) | 14 |
| SPECIFIC EXAMPLE 1-7 | 4-2 | A | CELLULOSE PAPER (TF-40) | 14 |
| SPECIFIC EXAMPLE 1-8 | 4-3 | A | CELLULOSE PAPER (TF-40) | 14 |
| SPECIFIC EXAMPLE 1-9 | 1-1 | B | CELLULOSE PAPER (TF-40) | 19 |
| SPECIFIC EXAMPLE 1-10 | 1-2 | B | CELLULOSE PAPER (TF-40) | 16 |
| SPECIFIC EXAMPLE 1-11 | 1-1 | C | CELLULOSE PAPER (TF-40) | 19 |
| SPECIFIC EXAMPLE 1-12 | 1-2 | A | EXPERIMENTAL SEPARATOR 1 | 17 |
| SPECIFIC EXAMPLE 1-13 | 11-1 | A | CELLULOSE PAPER (TF-40) | 23 |
| SPECIFIC EXAMPLE 1-14 | 12-1 | A | CELLULOSE PAPER (TF-40) | 18 |
| SPECIFIC EXAMPLE 1-15 | 13-1 | A | CELLULOSE PAPER (TF-40) | 15 |
| SPECIFIC EXAMPLE 1-16 | 15-1 | A | CELLULOSE PAPER (TF-40) | 16 |
| SPECIFIC EXAMPLE 1-17 | 15-1 | KKE-15 | CELLULOSE PAPER (TF-40) | 16 |
| SPECIFIC EXAMPLE 1-18 | 15-1 | KKE-15DE | CELLULOSE PAPER (TF-40) | 17 |
| COMPARATIVE EXAMPLE 1-1 | 9-1 | A | CELLULOSE PAPER (TF-40) | 21 |
| COMPARATIVE EXAMPLE 1-2 | 10-1 | A | CELLULOSE PAPER (TF-40) | 18 |
| COMPARATIVE EXAMPLE 1-3 | 9-1 | B | CELLULOSE PAPER (TF-40) | 20 |
| COMPARATIVE EXAMPLE 1-4 | 10-1 | B | CELLULOSE PAPER (TF-40) | 18 |

(continued)

|  | ELECTRODE | ELECTROLYTIC SOLUTION | SEPARATOR | CAPACITANCE DENSITY F/cm$^3$ |
|---|---|---|---|---|
| COMPARATIVE EXAMPLE 1-5 | 9-1 | C | CELLULOSE PAPER (TF-40) | 20 |
| COMPARATIVE EXAMPLE 1-6 | 10-1 | C | CELLULOSE PAPER (TF-40) | 19 |
| COMPARATIVE EXAMPLE 1-7 | 10-1 | A | EXPERIMENTAL SEPARATOR 1 | NOT MEASURABLE DUE TO SHORT CIRCUIT |
| A: 1.5 M TEMABF$_4$ PC<br>B: 1.0 M TEABF$_4$ PC<br>C: 1.5 M TEMAB$_4$ GBL | | | | |

[Explanation of Table 2]

As can be seen from specific example 1-12 and comparative example 1-7, a thin separator can be used in the electric double layer capacitor to which the submicron activated carbon of the present invention is applied, because the electrode produced by the invention has excellent surface smoothness.

[Effectiveness of submicron activated carbon]

[Measurement example 1]

Each of the electric double layer capacitors fabricated in specific examples 1-1 to 1-18 and comparative examples 1-1 to 1-6 was charged at a constant current of 1C and a constant voltage of 2.5 V for two hours, thus charging the electric double layer capacitor up to 2.5 V. The AC impedance of the electric double layer capacitor thus charged to 2.5 V was measured at 20°C and -20°C, respectively, under the condition of an amplitude of 10 mV and a measurement frequency of 1 Hz,. The measured AC impedance was divided into the real and imaginary components, and the resistance value ($R_{1Hz}$) and the capacitance ($C_{1Hz}$) were calculated from the real and imaginary components, respectively. The capacitance component was divided by the value of the cell capacitance ($C_0$) obtained from the earlier described capacitance density measurement, and the resulting value was taken as a measure of the response of the capacitance components. The results are shown in Table 3.

[Table 3]

|  | 20°C | | -20°C | |
|---|---|---|---|---|
|  | $R_{1Hz}$ (ohm) | $C_{1Hz}/C_0 \times 100$ (%) | $R_{1Hz}$ (ohm) | $C_{1Hz}/C_0 \times 100$ (%) |
| SPECIFIC EXAMPLE 1-1 | 1.6 | 90 | 3.6 | 70 |
| SPECIFIC EXAMPLE 1-2 | 1.8 | 91 | 3.7 | 64 |
| SPECIFIC EXAMPLE 1-3 | 1.9 | 90 | 3.7 | 64 |
| SPECIFIC EXAMPLE 1-4 | 2.0 | 91 | 4.3 | 56 |
| SPECIFIC EXAMPLE 1-5 | 0.7 | 93 | 2.5 | 66 |
| SPECIFIC EXAMPLE 1-6 | 1.1 | 91 | 3.0 | 64 |
| SPECIFIC EXAMPLE 1-7 | 2.6 | 70 | 4.9 | 55 |
| SPECIFIC EXAMPLE 1-8 | 2.6 | 49 | 6.5 | 20 |
| SPECIFIC EXAMPLE 1-9 | 2.1 | 87 | 4.4 | 62 |
| SPECIFIC EXAMPLE 1-10 | 1.7 | 90 | 3.8 | 60 |
| SPECIFIC EXAMPLE 1-11 | 2.0 | 85 | 2.8 | 77 |
| SPECIFIC EXAMPLE 1-12 | 1.6 | 91 | 3.1 | 64 |

(continued)

| | 20°C | | -20°C | |
|---|---|---|---|---|
| | $R_{1Hz}$ (ohm) | $C_{1Hz}/C_0 \times 100$ (%) | $R_{1Hz}$ (ohm) | $C_{1Hz}/C_0 \times 100$ (%) |
| SPECIFIC EXAMPLE 1-13 | 0.9 | 80 | 3.1 | 51 |
| SPECIFIC EXAMPLE 1-14 | 0.8 | 84 | 3.3 | 51 |
| SPECIFIC EXAMPLE 1-15 | 1.0 | 89 | 3.8 | 41 |
| SPECIFIC EXAMPLE 1-16 | 0.6 | 93 | 2.6 | 64 |
| SPECIFIC EXAMPLE 1-17 | 0.6 | 94 | 2.1 | 73 |
| SPECIFIC EXAMPLE 1-18 | 0.5 | 100 | 1.4 | 97 |
| COMPARATIVE EXAMPLE 1-1 | 1.6 | 66 | 7.8 | 11 |
| COMPARATIVE EXAMPLE 1-2 | 2.4 | 44 | 10.8 | 5 |
| COMPARATIVE EXAMPLE 1-3 | 1.8 | 60 | 8.4 | 9 |
| COMPARATIVE EXAMPLE 1-4 | 2.8 | 36 | 10.0 | 5 |
| COMPARATIVE EXAMPLE 1-5 | 1.4 | 80 | 4.6 | 23 |
| COMPARATIVE EXAMPLE 1-6 | 2.9 | 51 | 9.1 | 9 |

[Explanation of Table 3]

Since the electric double layer capacitor of the present invention uses the submicron activated carbon, the response of the capacitance component is exceptionally excellent. Even when the electrode is thick as shown in specific example 1-8, the electrode shows a response comparable to that of an electrode formed from conventional activated carbon and having a one-third thickness (comparative example 2). Further, at low temperatures, the electric double layer capacitor of the present invention is far superior in terms of the response of the capacitance component to any capacitor formed from conventional activated carbon.

As for the resistance value, at normal temperature there is no appreciable difference between the conventional capacitor and the capacitor of the present invention but, at low temperatures, the increase in resistance value is suppressed in the present invention. Therefore, it can be said that the electric double layer capacitor of the present invention is superior to the conventional one in terms of the resistance value as well.

Further, in the conventional capacitor, the response of the capacitance component tends to drop as the electrolyte concentration decreases, but in the present invention, this tendency is significantly suppressed. The fact that the output characteristic is not degraded appreciably even at low electrolyte concentrations is one of the features of the electric double layer capacitor of the present invention.

When an electrolyte solvent such as GBL having lower viscosity than PC and therefore advantageous in terms of the output characteristic is used in the conventional capacitor, the response of the capacitance greatly improves and the resistance value decreases, but in the case of the electric double layer capacitor of the present invention, the improvement is still not so good as when PC is used as the electrolyte solvent. Further, in the electric double layer capacitor of the present invention, the difference between GBL and PC is not as appreciable as in the convention capacitor. Accordingly, in the electric double layer capacitor of the present invention, PC which excels in durability is preferred for use as the electrolyte solvent, and even when PC is used, the output characteristic is better than that of the conventional capacitor that uses GBL.

The excellent output characteristic, i.e., the excellent response of the capacitance component, the reduced increase in the resistance value at low temperatures, and the reduced dependence on electrolyte concentration and electrolyte solvent, demonstrates the effectiveness of the submicron activated carbon that the present invention features. It will, however, be noted that a particularly good characteristic can be obtained when spiro-(1,1')-bipyrrolidinium $BF_4^-$ is used as the electrolyte.

Specific example 1-14 has shown an example in which a high-density electrode (capacitance density: 18 F/cm$^3$) was produced using steam-activated coconut carbon, but this example shows a characteristic that is comparable to that of specific example 1-15 and other specific examples and that is far superior to the comparative examples. The fact that the performance is not degraded even when the electrode density is increased also demonstrates the effectiveness of the submicron activated carbon. [Effectiveness of etched aluminum foil current collector]

[Measurement example 2]

The electric double layer capacitors of specific examples 1-3 to 1-5 were discharged (almost to 0 V), and in this condition, the AC impedance of each capacitor was measured at 20°C under the conditions of an amplitude of 10 mV and a frequency of 1 kHz. The measured AC impedance was divided into the real and imaginary components, and the resistance value ($R_{1kHz}$) was obtained from the real component. The results are shown in Table 4.

[Table 4]

|  | $R_{1kHz}$ (ohm) |
|---|---|
| SPECIFIC EXAMPLE 1-3 | 1.8 |
| SPECIFIC EXAMPLE 1-4 | 1.9 |
| SPECIFIC EXAMPLE 1-5 | 0.45 |
| [Explanation of Table 4] | |

The contact resistance between the electrode layer and the current collector is reflected in the resistance value at this frequency. Among these specific examples 1-3 to 1-5, the one that used the etched aluminum foil current collector showed the lowest resistance value. This resistance component is independent of the effectiveness of the submicron activated carbon described above, and should be minimized because then the effectiveness of the submicron activated carbon further increases. From this standpoint, in the electric double layer capacitor of the present invention, it is preferable to use the etched aluminum foil as the current collector.

[Effectiveness of thin-film separator]

[Measurement example 3]

Each of the electric double layer capacitors fabricated in specific examples 1-2 and 1-12 was charged at a constant current of 1C and a constant voltage of 2.5 V for two hours, thus charging the electric double layer capacitor up to 2.5 V. The AC impedance of the electric double layer capacitor thus charged to 2.5 V was measured at 20°C under the condition of an amplitude of 10 mV and a measurement frequency of 1 kHz. The measured AC impedance was divided into the real and imaginary components, and the resistance value ($R_{1kHz}$) was obtained from the real component. The results are shown in Table 5.

[Table 5]

|  | $R_{1kHz}$ (ohm) |
|---|---|
| SPECIFIC EXAMPLE 1-2 | 1.5 |
| SPECIFIC EXAMPLE 1-12 | 1.2 |
| [Explanation of Table 4] | |

The internal resistance associated with the separator is reflected in the resistance value at this frequency. From a comparison between specific examples 1-2 and 1-12, it can be seen that the internal resistance is reduced as the separator thickness is reduced. In the electric double layer capacitor of the present invention, the submicron activated carbon permits the use of such a thin separator, and reducing the separator thickness contributes to further reducing the internal resistance.

As described above, in the electric double layer capacitor of the present invention, the power output is increased by enhancing the response of the capacitance and reducing the internal resistance. This feature is particularly pronounced under low-temperature environments. Accordingly, the capacitor of the present invention is capable of handling an instantaneous load over a wide temperature range, and is advantageous for use in a hybrid electric vehicle (HEV) or as an auxiliary power source for assisting a secondary battery.

[Embodiment 2]

The invention according to a second embodiment concerns a capacitor that has a high power output characteristic and a high capacitance density, and more particularly a capacitor that is small and ultra-thin and yet has a high power output characteristic and a high capacitance density. According to the invention of the first embodiment, a capacitor can be achieved that has a high power output characteristic and high volumetric energy density which has not been possible with the prior art.

The invention of the second embodiment will be described below by way of example.

The capacitor of this invention comprises at least an anode, a cathode, a separator, and an electrolytic solution, wherein when the overall thickness of the capacitor, including the thickness of a container for hermetically sealing the anode, cathode, separator, and electrolytic solution, is denoted by D (mm), the volume of the capacitor is denoted by V ($cm^3$), and the volumetric energy density of the capacitor at a discharge rate of 1000C at 25°C is denoted by W (Wh/L), then the value of W is at least 0.05 Wh/L, and at least either the condition that the value of A in equation (1) below be not smaller than -0.2 or the condition that the value of B in equation (2) below be not smaller than 0.8 is satisfied.

$$W \geq 1.5D + A \qquad (1)$$

$$W \geq 1.3V + B \qquad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour; this value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure to indicate whether the capacitor can achieve a high volumetric energy density and a high power output characteristic simultaneously.

Generally, as is well known to those skilled in the art, as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease; taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously. Considering the fact that prior known capacitors have not been able to satisfy the preferable range of the value of A or B in the above equation, the capacitor of the present invention offers an enormous potential as the only capacitor that can meet the stringent demands of the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally known as the resin mold type; among others, in the case of cylindrical capacitors, it is often difficult to define the thickness of the capacitor from its casing shape.

In view of the above, when implementing the capacitor of the present invention as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as earlier described, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equation (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is determined by the sum of the thickness of the electrode element comprising one or more anode/cathode pairs and separators and the thickness of the container itself (the thickness of the container wall), but it may include some dead space (for example, a space containing only an electrolytic solution) if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

When implementing the capacitor of the present invention among others as a thin capacitor suitable for mounting in a portable device or the like, it is preferable that the overall thickness (D) of the capacitor be held to 2 mm or less, more preferably to 1.5 mm or less, still more preferably to 1 mm or less, and most preferably to 0.7 mm or less. There is no specific limit to how far the overall thickness of the capacitor may be reduced, but based on the relationship with the thicknesses of the electrodes, separator, and container, the practical thickness is preferably 0.2 mm or larger, and more preferably 0.3 mm or larger.

When implementing a small capacitor suitable for mounting in a portable device or the like, it is preferable that the volume (V) of the capacitor be held to 1 cm$^3$ or less, more preferably to 0.7 cm$^3$ or less, still more preferably to 0.5 cm$^3$ or less, and most preferably to 0.3 cm$^3$ or less. There is no specific limit to how far the volume of the capacitor may be reduced, but based on the relationship with the volumes of the electrodes, separator, and container, the practical volume is preferably 0.05 cm$^3$ or larger, and more preferably 0.1 cm$^3$ or larger.

On the other hand, when considering mounting the capacitor in a device such as a personal computer having a relatively large volume, a capacitor volume larger than 1 cm$^3$ may not impair the mounting suitability, but in this case also, by reducing the capacitor thickness to 2 mm or less, the mounting can be suitability enhanced.

In this way, the field of applications in which the capacitor of the present invention has mounting suitability differs somewhat, depending on the range of its thickness and volume or on the combination of the thickness and the volume, and the suitable field of applications also differs somewhat, depending on the combination of the mounting suitability and the charge/discharge performance of the capacitor (for example, the volumetric energy density at a discharge rate of 1000C).

Here, since the volumetric energy density at a discharge rate of 1000C is equal to the product of the volumetric energy density when charged and discharged at 1C and the 1000C discharge efficiency, as described earlier, it can be used to indicate the magnitude of the current output (or energy output) that the capacitor can discharge during a given length of time, and further, it can be considered as indicating the length of time that the capacitor can be discharged at a current somewhere between a current equivalent to 100C to a current equivalent to 1000C (for example, a current output of the order of several amperes which is preferred when the capacitor is used as an auxiliary power source for assisting a secondary battery or the like); therefore, the value of the volumetric energy density is useful as a criterion based on which to determine whether the capacitor of the present invention is suitable for a particular application through a comparison with the performance required in that application.

As for the relationship between the suitable application and the combination of the capacitor thickness and the volumetric energy density at a discharge rate of 1000C, for example, the capacitor of the present invention whose thickness is about 0.2 to 0.4 mm, and whose volumetric energy density at a discharge rate of 1000C is about 0.4 Wh/L or higher, is particularly suitable, for example, for applications where the capacitor is used as an auxiliary power source in a thin and flexible electronic display medium (electronic paper) or the like or where the capacitor is built into an intelligent thin card, such as an IC card or a wireless communication card, equipped with various information processing, storage, display, and communication functions.

On the other hand, the capacitor of the present invention whose thickness is about 0.3 to 0.6 mm, and whose volumetric energy density at a discharge rate of 1000C is about 0.7 Wh/L or higher, is particularly suitable, for example, for applications where the capacitor is built into a wireless IC tag (in particular, an active-type wireless IC tag) and used to supply power for information communication, processing, etc.

Further, the capacitor of the present invention whose thickness is about 0.5 to 1.2 mm, and whose volumetric energy density at a discharge rate of 1000C is about 1.3 Wh/L or higher, is particularly suitable, for example, for applications where the capacitor is integrally built into a battery or battery pack such as a lithium-ion secondary battery, or where the capacitor is built into a mobile phone or other portable information terminal, a digital still camera, a remote controller, or the like; such suitable applications include, for example, power supply for various kinds of communications and power supply to various kinds of motors (DC motor, pulse motor, ultrasonic motor, spindle motor, etc.) used for camera lens zooming control or shutter control or for driving various kinds of disks (hard disks, etc.).

Further, the capacitor of the present invention whose thickness is about 1 to 2 mm, and whose volumetric energy density at a discharge rate of 1000C is about 2.7 Wh/L or higher, is particularly suitable, for example, for applications where the capacitor is built into a handheld terminal, a personal computer, a robot (in particular, an autonomous mobile robot), a power tool, medical equipment (for example, portable medical equipment), or the like and is used to supply power for information communication, for lighting illumination (such as an LCD backlight), or for driving a machine such as a motor.

It will be appreciated that the capacitor of the present invention is not limited to the particular applications illustrated above, but has the potential of being used in a wider range of applications by using its characteristic features.

In the capacitor of the present invention, for both the anode and cathode, it is preferable to use activated carbon whose specific surface area, as measured by the BET method, is 500 m$^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 m$^2$/g but not larger than 2500 m$^2$/g, and more preferably not smaller than 1000 m$^2$/g but not larger than 2500 m$^2$/g. The specific surface area smaller than 500 m$^2$/g or larger than 2500 m$^2$/g is not desirable, because in that case, a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. The "average particle size" here refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles come off the electrode more easily as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size that falls within the preferable range according to the present invention. For the milling, it is preferable to use a milling machine such as a jet mill, a ball mill, or the like and, if necessary, the particles are classified according to size.

The anode and cathode electrodes of the present invention are each formed by adding a binder and a conductive agent as needed to the activated carbon having the above average particle size, and by molding the mixture into the shape of the electrode. Each electrode is formed on one or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/cm$^3$ or higher for both the anode and cathode electrodes of the present invention, more preferably 15 F/cm$^3$ or higher, still more preferably 18 F/cm$^3$ or higher, and most preferably 21 F/cm$^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, aluminum foil, stainless steel foil, or the like is preferable, and for the cathode current collector, aluminum foil, copper foil, stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 μm or less, more preferably 25 μm or less, and most preferably 20 μm or less.

For the anode and cathode of the capacitor of the present invention, it is preferable to use an electrode structure that does not develop visible surface defects (such as cracking, delamination, etc.) when subjected to a 4-mm radius bending test. The electrodes can then be used advantageously, for example, when implementing a capacitor of reduced thickness, and the structure not only has the effect of significantly suppressing the separation between the current collector and the electrode which tends to occur from portions such as a cutting edge in the electrode cutting (or punching) process when fabricating the capacitor by stacking a pair of precut anode/cathode electrodes together with a separator, but also has the effect of increasing the resistance of the completed capacitor to external forces such as bending.

In the 4-mm radius bending test, visible surface defects tend to occur, for example, when the electrode thickness is greater than 60 μm, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and matters such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

In the present invention, the electrode thickness of each of the anode and cathode is preferably 60 μm or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, an electrode thickness exceeding the above upper limit is not desirable, because it would then become difficult to obtain a desired output characteristic.

The electrode thickness is preferably 60 μm or less, as described above, but from the standpoint of achieving higher 1000C discharge efficiency or higher output efficiency even at a current output greater than 1000C, the electrode thickness is more preferably 50 μm or less, and still more preferably 40 μm or less; in particular, for the purpose of achieving a particularly excellent output characteristic at low temperatures of 0°C or below, an electrode thickness of 30 μm or less is most preferable.

There is no specific limit to how far the electrode thickness may be reduced, but the thickness that can be used in practice is about 5 μm or greater. However, as the electrode thickness decreases, it becomes more difficult to achieve a high volumetric energy density for the capacitor; therefore, the electrode thickness is preferably not smaller than 10 μm, and more preferably not smaller than 15 μm.

In the present invention, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 μm, the thickness of the separator is preferably 50 μm or less, and when the electrode thickness is 20 μm, the thickness of the separator is preferably 100 μm or less.

Further, for the purpose of achieving a higher volumetric energy density or higher output characteristic, the thickness of the separator is preferably 80 μm or less, more preferably 60 μm or less, still more preferably 40 μm or less, and most preferably 20 μm or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 μm, and more preferably not smaller than 10 μm.

Further preferably, the separator has a porosity of 30 to 80%, a permeability of 5 to 300 seconds/100 cc (JIS P8117), and an average internal pore size of 0.01 to 5 μm.

Here, the porosity is calculated from the following equation.

$$\texttt{Porosity (\%) = (1-d}_\texttt{f}\texttt{/d}_\texttt{0}\texttt{)} \times \texttt{100}$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator' volume per unit area (cm$^3$/cm$^3$) .

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. The average internal pore size here is computed by performing image processing on a cross-sectional photograph taken through an SEM. An average internal pore size smaller than the lower limit value is not desirable, because the ion conductivity of the electrolyte would drop significantly. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 cc, and more preferably 10 to 100 seconds/100 cc.

A permeability exceeding the upper limit value is not desirable, because ion conduction would then be impeded and the output characteristic would appreciably degrade. A permeability lower than the lower limit value is also undesirable, because then not only would self-discharge be accelerated, but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

In the electric double layer capacitor of the present invention, the material for forming the separator is not specifically limited. For example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor, because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor of the present invention can be suitably selected by comprehensively considering the operating conditions, etc., such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as LiPF$_6$, LiBF$_4$, etc. For the solvent for dissolving the electrolyte, use may be made of propylene carbonate, ethylene carbonate, diethyl carbonate, dimethyl carbonate, methylethyl carbonate, dimethoxyethane, $\gamma$-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/l is preferable.

The electric conductivity at 25°C of the electrolytic solution is preferably $1\times10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor of the present invention may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, a container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melted at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In another preferred method, a plurality of capacitor cells are electrically connected in series outside the container, and not inside the container.

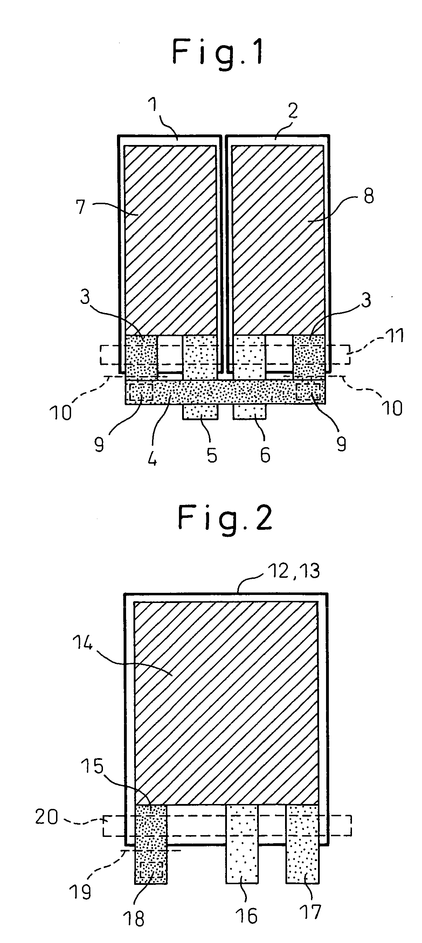

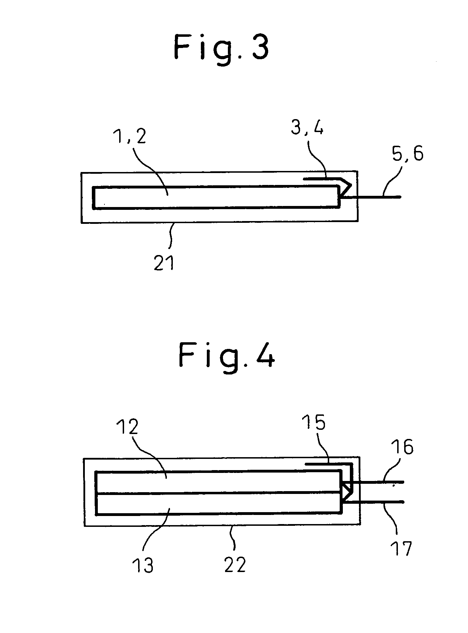

Examples of such a structure are shown in Figures 1 to 4, in which two capacitors are connected in series outside the capacitor container. Figures 1 and 2 show plan views of the capacitors as seen from the top, and Figures 3 and 4 show transverse cross-sectional views of the capacitors. Figures 1 and 3 show an example in which the two capacitors are arranged in the same plane to reduce the thickness of the entire structure, while Figures 2 and 4 show an example in which the two capacitors are stacked one on top of the other.

In Figure 1, reference numeral 1 designates a capacitor cell A having an activated carbon electrode forming portion 7, and 2 a capacitor cell B having an activated carbon electrode forming portion 8; here, a common electrode terminal 3 and an input/output terminal 5 (a1) are attached to the capacitor cell A, and a common electrode terminal 3 and an input/output terminal 6 (a2) are attached to the capacitor cell B. The two common electrode terminals 3 are connected to a common connector 4 by such means as ultrasonic welding. The weld positions are indicated at reference numeral 9.

The capacitor cells A and B are thermally bonded at seal position 11 for sealing, thus completing the capacitor structure. After that, as shown in Figure 3, the common electrode terminals 3 are folded at the folding position indicated at reference numeral 10, and the structure is then packaged in a heat shrinkable laminated film.

In Figures 2 and 4, capacitor cells 12(A) and 13(B) identical in structure, each having an activated carbon electrode forming portion 14, are stacked one on top of the other. Here, a common electrode terminal 15 and an input/output terminal 16 (b1) are attached to the capacitor cell A, and a common electrode terminal 15 and an input/output terminal 17 (b2) are attached to the capacitor cell B. The two common electrode terminals 15 are connected together directly at weld position 18 by such means as ultrasonic welding.

The capacitor cells A and B are thermally bonded at seal position 20 for sealing, thus completing the capacitor structure. After that, as shown in Figure 4, the common electrode terminal 15 is folded at the folding position indicated at reference numeral 19, and the entire structure is then packaged in a heat shrinkable laminated film.

In this way, the structure in which there is no coupling of the electrolytic solutions between the different electrode elements, that is, the electrode elements are considered to be completely isolated from each other electrochemically, is preferably used.

In one preferred method for implement such a structure, one electrode interposed between the series-connected electrode elements is formed as a common electrode, as illustrated in specific example 1-7 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (common electrode terminal) is electrically connected to the corresponding terminal of the other cell so that a higher voltage output can be taken between the other two electrode terminals.

In the later structure, it is also preferable to fold the common electrode terminals over the capacitor cell structure and then package the entire structure comprising the plurality of cells in a thin laminated film (for example, a heat shrinkable film), thereby holding the cells in an integral fashion as shown.

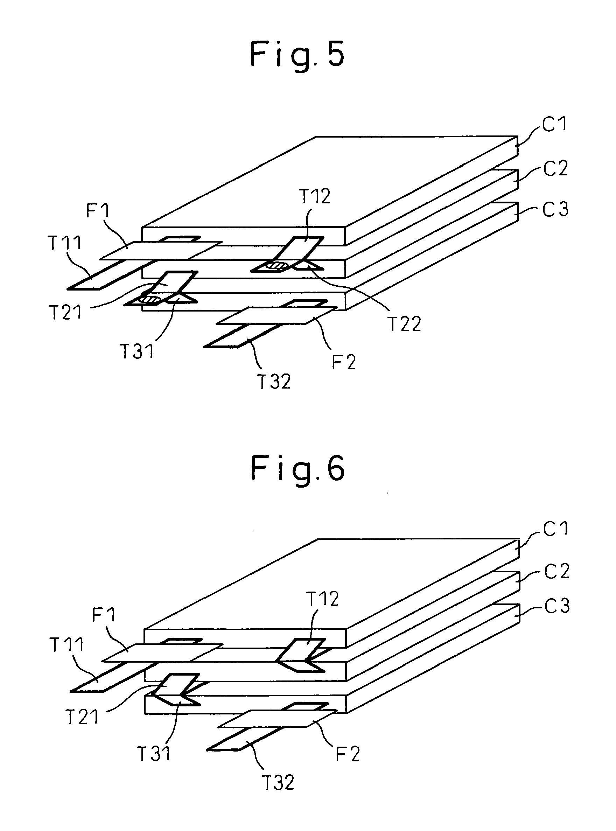

Next, Figures 5 to 7 show examples of a structure in which three or more capacitors are connected in series. In each example, three capacitors C1 to C3, completely isolated from one another electrochemically, are typically shown stacked one on top of another. Electrode terminals T11 and T12 are attached to the capacitor C1, electrode terminals T21 and T22 are attached to the capacitor C2, and electrode terminals T31 and T32 are attached to the capacitor C3. One terminal T11 of the uppermost capacitor, C1 in the illustrated example, and one terminal T32 of the lowermost capacitor, C3 in the illustrated example, are covered with insulating films F1 and F2, respectively, in order to provide electrical insulation from the underlying or overlying electrode terminal.

The stacked capacitor structure is packaged (immobilized), for example, in a heat shrinkable film or the like.

In the example shown in Figure 5, the capacitors C1 to C3 are overlaid one on top of another, and the electrode terminal T12 of the capacitor C1 is welded directly to the electrode terminal T22 of its adjacent capacitor C2, and the electrode terminal T21 of the capacitor C3 directly to the electrode terminal T31 of its adjacent capacitor C3, by such means as ultrasonic welding, thereby connecting the respective capacitors C1 to C3 in series.

In the example shown in Figure 6, the respective capacitors C1 to C3 are connected in series, as in Figure 5, but the way the electrode terminals are connected is different from that shown in Figure 5. For example, when connecting the electrode terminal T12 of the capacitor C1 to the electrode terminal T22 of the capacitor C2, first the electrode terminal T12 of the capacitor C1 is welded directly to the electrode terminal T22 of the capacitor C2 by such means as ultrasonic welding, while holding the capacitors C1 and C2 in the same positional relationship as that shown in Figure 5.

Then, the capacitors C1 and C2 are turned over each other, and while bending the electrode terminals T12 and T22, the capacitors C1 and C2 are overlaid one on top of the other so that the welded portion of the electrode terminals is sandwiched between the capacitors C1 and C2, as shown in Figure 6.

In this structure, when packaged, only the electrode terminals T11 and T32 as the input/output terminals protrude outside, and the other electrode terminals are housed inside the packaging container.

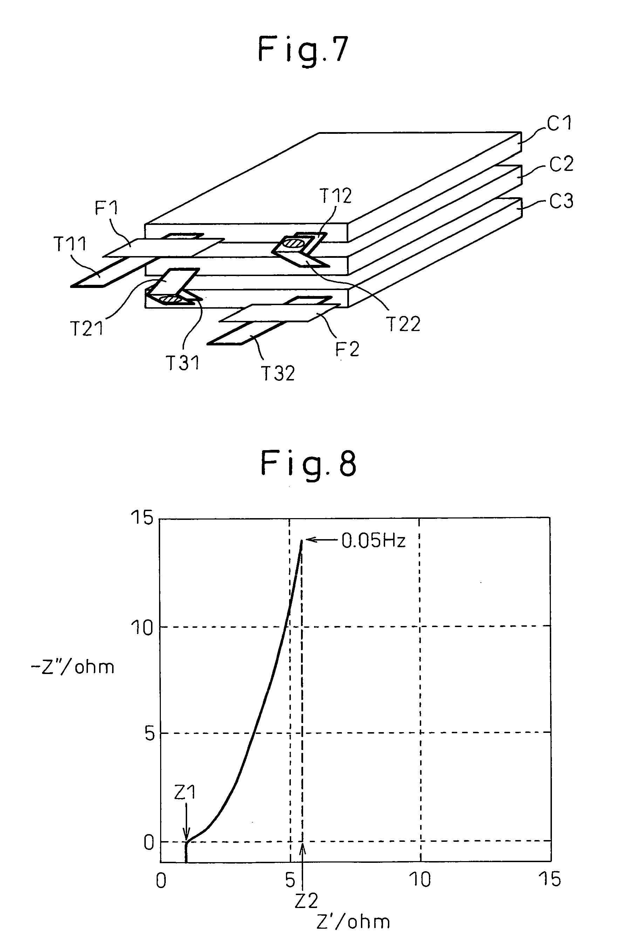

In the example shown in Figure 7, the electrode terminals of the respective capacitors are connected in fundamentally the same way as that shown in Figure 5, but in the example of Figure 5, the electrode terminals connected together are left protruding outside, which can cause inconvenience when packaged. In view of this, in Figure 7, these electrode terminals, for example, T12 and T22, and T21 and T31, are bent inward so that they do not protrude outside the packaging container.

[EXAMPLES]

To further clarify the features of the present invention, the capacitor of the present invention will be described below with reference to specific examples, but it will be appreciated that the invention is by no means limited by the examples described herein. In each example, measurements were made in the following manner.

(1) Particle size distribution (average particle size):

Measurements were made using a laser diffraction particle size analyzer "SALD-2000J" manufactured by Shimadzu Corporation. Water was used as the dispersion medium of the activated carbon, and a trace amount of nonionic surfactant "Triton X-100" was added as a dispersing agent. The circulation flow rate of the dispersion liquid was set to about 1200 $cm^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from 10 arbitrarily selected points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from five arbitrarily selected points on the sample, and their average value was taken as the measured value.

(5) Capacitance density of activated carbon:

An evaluation cell having electrodes each measuring 20 mm × 1.4 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.
Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density (F/cm$^3$) per unit volume of the electrode layer was calculated by dividing the capacitance (F) of the evaluation cell by the total volume of the two electrode layers.

[Specific example 2-1]

RP-20 manufactured by Kuraray Chemical was used as the activated carbon. The BET specific surface area of this activated carbon was about 1450 m$^2$/g, the average particle size was about 7 μm, and the capacitance density was about 28 F/g. 77 parts by weight of the activated carbon, 6 parts by weight of acetylene black, 17 parts by weight of polyvinylidene fluoride, and 225 parts by weight of N-methylpyrrolidone were mixed to produce a slurry. A conductive adhesive (EB-815 manufactured by Acheson (Japan)) using a polyamide-based thermosetting resin as the binder was applied over one surface of a 20-μm thick aluminum foil (manufactured by Nippon Foil Mfg. Co., Ltd.), and then dried and heat-treated to form a 2-μm thick conductive adhesive layer thereon; the resultant structure was used as a current collector.
The slurry was applied over the surface of the current collector on which the conductive adhesive layer was formed, and the structure was dried by heating and pressed to produce an electrode having an electrode thickness of 50 μm (excluding the thickness of the current collector). The capacitance density of the thus produced electrode was about 15.3 F/cm$^3$.
The electrode was subjected to a 4-mm radius bending test, but no surface detects visible to the naked eye were observed.
The thus produced electrode was cut to form a pair of anode and cathode electrodes; then, using a separator formed from 40-μm thick cellulose paper (TF-40 manufactured by Nippon Kodoshi Corporation), an electrolytic solution prepared by dissolving triethylmethylammonium·BF$^4$ in propylene carbonate at a concentration of 1.5 mol/l, and a container formed from a 150-μm thick aluminum/resin laminated film, a capacitor was fabricated in the following manner. That is, the electrode forming the cathode (with its electrode surface facing the separator), the separator, and the electrode forming the anode (with its electrode surface facing the separator) were stacked in this order, and the stack was impregnated with the electrolytic solution; the stack was then placed into the outer casing formed from the aluminum/resin laminated film, and was vacuum-sealed.
Here, the anode/cathode size (the portion where the electrode was formed) was 14 mm × 20 mm, and the other portion of the current collector where the electrode was not formed was formed as a terminal lead portion. The size of the separator was 16 × 22 mm, the size of the container formed from the aluminum/resin laminated film was 18 mm × 28 mm, and the size of the seal portion was about 18 mm × 4 mm.
The capacitor was charged at a constant current and a constant voltage for 10 minutes, that is, the capacitor was first charged up to 2.5 V at a current of 0.3 mA, and then a constant voltage of 2.5 V was applied. After that, the capacitor was discharged at a constant current of 0.3 mA until the voltage decreased to 0 V. The discharge capacity (1C discharge capacity) obtained from the discharge curve was about 0.293 mAh, and the discharged energy was about 0.366 mWh.
Further, after fully charging the capacitor in the same manner as described above, when the capacity was measured under a constant discharge current of 300 mA (1000C) it was found that the capacitor retained a capacity about 81% of the 1C discharge capacity (the 1000C discharge efficiency was 81%), and that the energy when discharged at 1000C was about 0.24 mWh.
Since the overall thickness (D) of the capacitor was about 0.49 mm, and the volume (V) was about 0.24 cm$^3$, the volumetric energy density (W) of the capacitor when discharged at 1000C was about 1 Wh/L. Here, the value of A in the equation (1) was 0.27, which was within the preferable range defined for the capacitor according to the present invention; this shows that a capacitor having a high power output characteristic and a high volumetric energy density was achieved. On the other hand, the value of B in the equation (2) was 0.69, which was outside the preferable range.

[Specific example 2-2]

MSP-20 manufactured by Kansai Coke and Chemicals was used as the activated carbon, and the activated carbon was milled for 50 hours by a bead mill using 2-mm diameter zirconia beads, to obtain activated carbon with an average particle size of 2.9 $\mu$m. The BET specific surface area of the thus obtained activated carbon was about 2310 $m^2$/g, and the capacitance density was about 42 F/g. 93 parts by weight of the activated carbon, 7 parts by weight of Ketjen black, 17 parts by weight of polyvinylidene fluoride, 4 parts by weight of polyvinyl pyrrolidone, and 300 parts by weight of N-methylpyrrolidone were mixed to produce a slurry.

Using the above slurry and a current collector similar to that used in specific example 2-1, an electrode having an electrode thickness of 15 $\mu$m (excluding the thickness of the current collector) was produced by the same method as that used in specific example 2-1.

The capacitance density of the thus produced electrode was about 19.3 F/$cm^3$.

The electrode was subjected to a 4-mm radius bending test, but no surface detects visible to the naked eye were observed.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 $\mu$m. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/ 100 ml (JIS P8117).

Using the thus produced electrode and the separator, a capacitor was fabricated in the same manner as in specific example 1-1.

The capacitor was charged at a constant current and a constant voltage for 10 minutes, that is, the capacitor was first charged up to 2.5 V at a current of 0.12 mA, and then a constant voltage of 2.5 V was applied. After that, the capacitor was discharged at a constant current of 0.12 mA until the voltage decreased to 0 V. The discharge capacity (1C discharge capacity) obtained from the discharge curve was about 0.119 mAh, and the discharged energy was about 0.149 mWh.

Further, after fully charging the capacitor in the same manner as described above, when the capacity was measured under a constant discharge current of 120 mA (1000C), it was found that the capacitor retained a capacity about 91% of the 1C discharge capacity (the 1000C discharge efficiency was 91%), and that the energy when discharged at 1000C was about 0.123 mWh.

Since the overall thickness (D) of the capacitor was about 0.39 mm, and the volume (V) was about 0.2 $cm^3$, the volumetric energy density of the capacitor when discharged at 1000C was about 0.62 Wh/L. Here, the value of A in the equation (1) was 0.04, which was within the preferable range defined for the capacitor according to the present invention; this shows that a capacitor having a high power output characteristic and a high volumetric energy density was achieved. On the other hand, the value of B in the equation (2) was 0.36, which was outside the preferable range.

[Specific example 2-3]

Using the same slurry and current collector as those in specific example 2-2, an electrode having an electrode thickness of 21 $\mu$m (excluding the thickness of the current collector) was produced in a similar manner. In this example, however, two kinds of electrodes were produced, one with the electrode formed on both sides (in this case, conductive adhesive layers were formed on both sides of the current collector), and the other with the electrode formed only on one side.

The electrode was subjected to a 4-mm radius bending test, but no surface detects visible to the naked eye were observed. The thus produced electrode with the electrode formed on one side or on both sides of the current collector was cut to form anode and cathode electrodes; then, using a separator formed from an 11-$\mu$m thick polymetaphenylene isophthalamide porous film, the same one as that used in specific example 2-2, an electrolytic solution prepared by dissolving triethylmethylammonium·$BF^4$ in propylene carbonate at a concentration of 1.5 mol/1, and a container formed from a 150-$\mu$m thick aluminum/resin laminated film, a capacitor was fabricated in the following manner. That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed into the aluminum laminated film container preformed in a bag-like shape, the electrolytic solution was vacuum-injected, and the cell was sealed, completing the fabrication of a stacked capacitor comprising a stack of four anode/cathode pairs. Here, the current collectors of the same polarity were connected to each other by ultrasonic welding at their electrode lead portions, and the anode and cathode terminals were brought outside the capacitor.

Here, as in specific example 2-1, the anode/cathode size (the portion where the electrode was formed) was 14 mm $\times$ 20 mm, the size of the separator was 16 $\times$ 22 mm, the size of the container was 18 mm $\times$ 28 mm, and the size of the seal portion was about 18 mm $\times$ 4 mm.

The capacitor was charged at a constant current and a constant voltage for 10 minutes, that is, the capacitor was first charged up to 2.5 V at a current of 0.66 mA, and then a constant voltage of 2.5 V was applied. After that, the capacitor was discharged at a constant current of 0.66 mA until the voltage decreased to 0 V. The discharge capacity (1C discharge capacity) obtained from the discharge curve was about 0.662 mAh, and the discharged energy was about 0.828 mWh.

Further, after fully charging the capacitor in the same manner as described above, when the capacity was measured under a constant discharge current of 660 mA (1000C), it was found that the capacitor retained a capacity about 85% of the 1C discharge capacity (the 1000C discharge efficiency was 85%), and that the energy when discharged at 1000C was about 0.6 mWh.

Since the overall thickness (D) of the capacitor was about 0.63 mm, and the volume (V) was about 0.32 cm$^3$, the volumetric energy density of the capacitor when discharged at 1000C was about 1.9 Wh/L.

Here, the value of A in the equation (1) was 0.95, and the value of B in the equation (2) was 1.48, both falling within the preferable range defined in the present invention. This shows that a capacitor having a high power output characteristic and a high volumetric energy density was achieved.

[Specific example 2-4]

Using the same single-sided electrode and separator as those in specific example 2-3, a capacitor was fabricated in the same manner as in specific example 1-1, except that the electrode size was 28 mm $\times$ 40 mm, the separator size was 30 mm $\times$ 42 mm, and the aluminum/resin laminated film size was 32 mm $\times$ 48 mm.

The capacitor was charged at a constant current and a constant voltage for 10 minutes, that is, the capacitor was first charged up to 2.5 V at a current of 0.67 mA, and then a constant voltage of 2.5 V was applied. After that, the capacitor was discharged at a constant current of 0.67 mA until the voltage decreased to 0 V. The discharge capacity (1C discharge capacity) obtained from the discharge curve was about 0.67 mAh, and the discharged energy was about 0.84 mWh.

Further, after fully charging the capacitor in the same manner as described above, when the capacity was measured under a constant discharge current of 670 mA (1000C), it was found that the capacitor retained a capacity about 87% of the 1C discharge capacity (the 1000C discharge efficiency was 87%), and that the energy when discharged at 1000C was about 0.64 mWh.

Since the overall thickness (D) of the capacitor was about 0.4 mm, and the volume (V) was about 0.61 cm$^3$, the volumetric energy density of the capacitor when discharged at 1000C was about 1.05 Wh/L.

Here, the value of A in the equation (1) was 0.45, which was within the preferable range defined for the capacitor according to the present invention; this shows that a capacitor having a high power output characteristic and a high volumetric energy density was achieved. On the other hand, the value of B in the equation (2) was 0.26, which was outside the preferable range.

[Specific example 2-5]

MSP-20 manufactured by Kansai Coke and Chemicals was dispersed in a solvent, and was milled for 75 minutes by a bead mill using 2-mm diameter zirconia beads. Dimethylacetamide was used as the solvent. Activated carbon with an average particle size of 0.7 $\mu$m was thus obtained. The BET specific surface area of the thus obtained activated carbon was about 1760 m$^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A current collector similar to that used in specific example 2-1 was also used here.

The slurry was applied over the surface of the current collector on which the conductive layer was formed, and the structure was dried by heating and pressed to produce an electrode having an electrode thickness of 25 $\mu$m (excluding the thickness of the current collector).

The capacitance density of the thus produced electrode was about 18.2 F/cm $^3$

The electrode was subjected to a 4-mm radius bending test, but no surface detects visible to the naked eye were observed.

Using the thus produced electrode and the same separator as that used in specific example 2-2, a capacitor was fabricated in the same manner as in specific example 2-1.

The capacitor was charged at a constant current and a constant voltage for 10 minutes, that is, the capacitor was first charged up to 2.5 V at a current of 0.18 mA, and then a constant voltage of 2.5 V was applied. After that, the capacitor was discharged at a constant current of 0.18 mA until the voltage decreased to 0 V. The discharge capacity (1C discharge capacity) obtained from the discharge curve was about 0.177 mAh, and the discharged energy was about 0.221 mWh.

Further, after fully charging the capacitor in the same manner as described above, when the capacity was measured under a constant discharge current of 180 mA (1000C), it was found that the capacitor retained a capacity about 92% of the 1C discharge capacity (the 1000C discharge efficiency was 92%), and that the energy when discharged at 1000C was about 0.187 mWh.

Here, the value of A in the equation (1) was 0.28, which was within the preferable range defined for the capacitor according to the present invention; this shows that a capacitor having a high power output characteristic and a high volumetric energy density was achieved. On the other hand, the value of B in the equation (2) was 0.62, which was outside the preferable range.

[Specific example 2-6]

Using the same activated carbon and slurry as those in specific example 2-5, an electrode having a thickness of 40 $\mu$m (excluding the thickness of the current collector) was fabricated. In this example, however, two kinds of electrodes were produced, one with the electrode formed on both sides of the current collector (in this case, conductive adhesive layers were also formed on both sides) and the other with the electrode formed only on one side, as in specific example 1-3.

The capacitance density of the thus produced electrode was about 18.0 F/cm$^3$.

The electrode was subjected to a 4-mm radius bending test, but no surface detects visible to the naked eye were observed.

Using the thus produced electrode and the same separator as that used in specific example 2-2, a stacked capacitor comprising a stack of four anode/cathode pairs was fabricated in the same manner as in specific example 1-3.

The capacitor was charged at a constant current and a constant voltage for 10 minutes, that is, the capacitor was first charged up to 2.5 V at a current of 1.1 mA, and then a constant voltage of 2.5 V was applied. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor in the same manner as described above, when the capacity was measured under a constant discharge current of 1120 mA (1000C), it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 cm$^3$, the energy density of the capacitor when discharged at 1000C was about 2.55 Wh/L.

Here, the value of A in the equation (1) was 1.47, and the value of B in the equation (2) was 2.08, both falling within the preferable range. This shows that a capacitor having a high power output characteristic and a high volumetric energy density was achieved.

[Specific example 2-7]

Electrodes and separators similar to those used in specific example 2-6 were used here. A component A having a size of 14 mm $\times$ 20 mm was produced by forming an electrode layer only on one side, a component B having a size of 14 mm $\times$ 20 mm was produced by forming electrode layers on both sides, and a component C having an electrode layer size of 14 mm $\times$ 20 mm and a component size of 18 mm $\times$ 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in specific example 1-1, and aluminum/resin laminated films, each having a thickness of 150 $\mu$m and measuring 18 mm × 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C), it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range. This shows that a capacitor having a high power output characteristic and a high volumetric energy density was achieved.

[Specific example 2-8]

Using the same single-sided electrode and separator as those in specific example 2-3, a capacitor was fabricated in the same manner as in specific example 2-1, except that a 80-μm thick aluminum/resin laminated film was used instead of the 150-μm thick aluminum/resin laminated film.

The capacitor was charged at a constant current and a constant voltage for 10 minutes, that is, the capacitor was first charged up to 2.5 V at a current of 0.17 mA, and then a constant voltage of 2.5 V was applied. After that, the capacitor was discharged at a constant current of 0.66 mA until the voltage decreased to 0 V. The discharge capacity (1C discharge capacity) obtained from the discharge curve was about 0.168 mAh, and the discharged energy was about 0.21 mWh.

Further, after fully charging the capacitor in the same manner as described above, when the capacity was measured under a constant discharge current of 170 mA (1000C), it was found that the capacitor retained a capacity about 87% of the 1C discharge capacity (the 1000C discharge efficiency was 85%), and that the energy when discharged at 1000C was about 0.159 mWh.

Since the overall thickness (D) of the capacitor was about 0.26 mm, and the volume (V) was about 0.13 cm$^3$, the volumetric energy density of the capacitor when discharged at 1000C was about 1.2 Wh/L.

Here, the value of A in the equation (1) was 0.81, and the value of B in the equation (2) was 1.03, both falling within the preferable range. This shows that a capacitor having a high power output characteristic and a high volumetric energy density was achieved.

[Specific example 2-9]

Using the same activated carbon and slurry as those in specific example 2-5, an electrode having a thickness of 20 μm (excluding the thickness of the current collector) was fabricated. In this example, however, two kinds of electrodes were produced, one with the electrode formed on both sides of the current collector (in this case, conductive adhesive layers were also formed on both sides) and the other with the electrode formed only on one side, as in specific example 1-3.

The capacitance density of the thus produced electrode was about 18.3 F/cm$^3$.

The electrode was subjected to a 4-mm radius bending test, but no surface detects visible to the naked eye were observed.

Using the thus produced electrode and the same separator as that used in specific example 2-2, a stacked capacitor comprising a stack of four anode/cathode pairs was fabricated in the same manner as in specific example 2-3.

The capacitor was charged at a constant current and a constant voltage for 10 minutes, that is, the capacitor was first charged up to 2.5 V at a current of 0.6 mA, and then a constant voltage of 2.5 V was applied. After that, the capacitor was discharged at a constant current of 0.6 mA until the voltage decreased to 0 V. The discharge capacity (1C discharge capacity) obtained from the discharge curve was about 0.58 mAh, and the discharged energy was about 0.73 mWh.

Further, after fully charging the capacitor in the same manner as described above, when the capacity was measured under a constant discharge current of 580 mA (1000C), it was found that the capacitor retained a capacity about 93% of the 1C discharge capacity (the 1000C discharge efficiency was 93%), and that the energy when discharged at 1000C was about 0.63 mWh.

Since the overall thickness (D) of the capacitor was about 0.56 mm, and the volume (V) was about 0.28 cm$^3$, the energy density of the capacitor when discharged at 1000C was about 2.25 Wh/L.

Here, the value of A in the equation (1) was 1.41, and the value of B in the equation (2) was 1.89, both falling within the preferable range. This shows that a capacitor having a high power output characteristic and a high volumetric energy density was achieved.

[Specific example 2-10]

Two capacitors, each identical to that fabricated in specific example 2-9, were connected in series and combined in one capacitor in the same manner as shown in Figures 2 and 4. The overall thickness (D) of the resultant capacitor was about 1.2 mm, and its volume (V) was about 0.6 cm$^3$.

The capacitor was charged at a constant current and a constant voltage for 10 minutes, that is, the capacitor was first charged up to 5.0 V at a current of 0.6 mA, and then a constant voltage of 5.0 V was applied. After that, the capacitor was discharged at a constant current of 0.6 mA until the voltage decreased to 0 V. The discharge capacity (1C discharge capacity) obtained from the discharge curve was about 0.57 mAh, and the discharged energy was about 1.43 mWh.

Further, after fully charging the capacitor in the same manner as described above, when the capacity was measured under a constant discharge current of 570 mA (1000C), it was found that the capacitor retained a capacity about 92% of the 1C discharge capacity (the 1000C discharge efficiency was 92%), and that the energy when discharged at 1000C was about 1.21 mWh. The energy density of this capacitor when discharged at 1000C was about 2.02 Wh/L.

Here, the value of A in the equation (1) was 0.2, and the value of B in the equation (2) was 1.2, both falling within the preferable range. This shows that a capacitor having a high power output characteristic and a high volumetric energy density was achieved.

(Comparative example 2-1)

Using the same slurry and current collector as those in specific example 2-2, an electrode having a thickness of 4 $\mu$m (excluding the thickness of the current collector) was produced, and then, using the thus produced electrode and the same 40-$\mu$m thick separator as that used in the first embodiment, a capacitor was fabricated using the same method as in specific example 2-1.

The capacitor was charged at a constant current and a constant voltage for 10 minutes, that is, the capacitor was first charged up to 2.5 V at a current of 0.03 mA, and then a constant voltage of 2.5 V was applied. After that, the capacitor was discharged at a constant current of 0.03 mA until the voltage decreased to 0 V. The discharge capacity (1C discharge capacity) obtained from the discharge curve was about 0.032 mAh, and the discharged energy was about 0.04 mWh.

Further, after fully charging the capacitor in the same manner as described above, when the capacity was measured under a constant discharge current of 32 mA (1000C), it was found that the capacitor retained a capacity about 98% of the 1C discharge capacity (the 1000C discharge efficiency was 98%), and that the energy when discharged at 1000C was about 0.038 mWh.

Since the overall thickness (D) of the capacitor was about 0.4 mm, and the volume (V) was about 0.2 cm$^3$, the energy density of the capacitor when discharged at 1000C was about 0.19 Wh/L.

Here, the value of A in the equation (1) was -0.41, and the value of B in the equation (2) was -0.07, both falling outside the preferable range. This shows that when the electrode thickness is smaller than 5 $\mu$m, it becomes difficult to achieve a capacitor having a high power output characteristic and a high volumetric energy density.

(Comparative example 2-2)

MSP-20 manufactured by Kansai Coke and Chemicals was used as the activated carbon, but unlike the second embodiment, the activated carbon was not milled but was used directly. The BET specific surface area of this activated carbon was about 2310 m$^2$/g, the average particle size was about 11 $\mu$m, and the capacitance density was about 42 F/g. 77 parts by weight of the activated carbon, 6 parts by weight of acetylene black, 17 parts by weight of polyvinylidene fluoride, and 225 parts by weight of N-methylpyrrolidone were mixed to produce a slurry. A conductive adhesive (EB-815 manufactured by Acheson (Japan)) was applied over one surface of a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

The slurry was applied over the surface of the current collector on which the conductive adhesive layer was formed, and the structure was dried by heating and pressed to produce an electrode having an electrode thickness of 80 $\mu$m (excluding the thickness of the current collector). The capacitance density of the thus produced electrode was about 19.3 F/cm$^3$.

When the electrode was subjected to a 4-mm radius bending test, cracks visible to the naked eye were observed in the electrode layer.

Using this electrode and a separator formed from 40-$\mu$m cellulose paper, a capacitor was fabricated in the same manner as in specific example 1-1.

The capacitor was charged at a constant current and a constant voltage for 10 minutes, that is, the capacitor was first charged up to 2.5 V at a current of 0.87 mA, and then a constant voltage of 2.5 V was applied. After that, the capacitor was discharged at a constant current of 0.87 mA until the voltage decreased to 0 V. The discharge capacity (1C discharge capacity) obtained from the discharge curve was about 0.865 mAh, and the discharged energy was about 1.08 mWh.

Further, after fully charging the capacitor in the same manner as described above, the capacity was measured under a constant discharge current of 1080 mA (1000C), but discharge was almost impossible (the 1000C discharge efficiency was less than 1%).

The overall thickness (D) of the capacitor was about 0.55 mm, and the volume (V) was about 0.28 cm$^3$, and from the foregoing, the energy density of the capacitor when discharged at 1000C was almost 0 Wh/L.

Here, the value of A in the equation (1) was -0.83, and the value of B in the equation (2) was -0.36, both falling outside the preferable range. This shows that when the electrode thickness far exceeds 60 $\mu$m, it becomes difficult to achieve a capacitor having a high power output characteristic and a high volumetric energy density.

(Comparative example 2-3)

Activated carbon having a BET specific surface area of about 2510 m$^2$/g, an average particle size of about 23 $\mu$m, and a capacitance density of about 40 F/g was used as the activated carbon. 77 parts by weight of the activated carbon, 6 parts by weight of acetylene black, 17 parts by weight of polyvinylidene fluoride, and 225 parts by weight of N-methylpyrrolidone were mixed to produce a slurry. A conductive adhesive (EB-815 manufactured by Acheson (Japan)) was applied over one surface of a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

The slurry was applied over the surface of the current collector on which the conductive adhesive layer was formed, trying to form an electrode with a thickness of 20 $\mu$m, but particles and streaks were observed on the surface, failing to produce an electrode of sufficient quality. This shows that when activated carbon having a large particle size is used, it is difficult to reduce the thickness of the electrode, thus making it difficult to fabricate a capacitor.

When the thus produced electrode was subjected to a 4-mm radius bending test, cracks visible to the naked eye were observed in the electrode layer.

(Comparative example 2-4)

A capacitor was fabricated in the same manner as in specific example 1-2, except that 100-$\mu$m cellulose paper was used in specific example 2-2.

The discharge capacity (1C discharge capacity) of this capacitor was about 0.119 mAh, and the discharged energy was about 0.149 mWh, as in specific example 1-2.

Further, after fully charging the capacitor, when the capacity was measured under a constant discharge current of 120 mA (1000C), it was found that the capacitor retained a capacity about 74% of the 1C discharge capacity (the 1000C discharge efficiency was 74%), and that the energy when discharged at 1000C was about 0.082 mWh.

Since the overall thickness (D) of the capacitor was about 0.48 mm, and the volume (V) was about 0.24 cm$^3$, the volumetric energy density of the capacitor when discharged at 1000C was about 0.34 Wh/L. Here, the value of A in the equation (1) was -0.38, and the value of B in the equation (2) was -0.03, both falling outside the preferable range defined in the present invention. This shows that when the separator thickness is greater than five times the electrode thickness, it becomes difficult to achieve a capacitor having a high power output characteristic and a high volumetric energy density.

(Comparative example 2-5)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.047 F. The overall thickness (D) of the capacitor was about 2 mm, and the volume (V) was about 1.8 cm$^3$; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Comparative example 2-6)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm$^3$; assuming a full charge voltage of 3.6 V, the energy density of the capacitor when discharged at 1000C was 0.61 Wh/L. Here, the value of B in the equation (2) was -0.82, which was outside the preferable range. Accordingly, the capacitor of this example would not be adequate as a capacitor that can simultaneously achieve a high power output characteristic and a high volumetric energy density.

[Specific example 2-11]

A commercial DC/DC converter (three-terminal regulator) having a rated output of 5V/0.5A was used and, as shown in Figure 6, the primary side (input side) of the converter was connected to a DC power supply having an output of 10 V (maximum output: 50W), while the capacitor of the 10th embodiment and a load resistor were connected in parallel with each other on the secondary side (output side); in this condition, the current flowing through the load resistor was controlled on and off by using a commercial FET (ON resistance: 40 mΩ max.) and a function generator.

The ON time of the load resistor was set to 1 second, and the OFF time to 9 seconds, and while changing the load resistance from 5 Ω to 4 Ω and then to 3 Ω, the waveform of the voltage appearing on the secondary output terminal of the converter was monitored on an oscilloscope, and the magnitude of the voltage drop during the load current ON time (the average value during the one-second current ON time) was measured.

The results showed that when the load resistance was 5 Ω, no voltage drop occurred, while when it was 4 Ω, the voltage drop was on the average about 0.4 V, and when 3 Ω, the voltage drop was on the average about 1.0 V. (Comparative example 2-7)

Measurements were made in exactly the same manner as in specific example 2-9, except that the capacitor of specific example 1-10 connected in parallel in specific example 2-11 was removed and only the load resistor was connected on the primary side of the converter.

The results showed that when the load resistance was 5 Ω, no voltage drop occurred, but when it was 4 Ω, the voltage drop was on average as large as about 0.8 V, and when 3 Ω, the voltage drop was on average as large as about 2.2 V.

[Embodiment 3]

A third embodiment provides an electric double layer capacitor wherein the volumetric capacitance density is further increased by using in the capacitor an electrode sheet according to the present invention and thereby reliably preventing short-circuiting between the capacitor electrodes or substantially preventing short-circuiting between the capacitor electrodes even when a separator thinner than a conventional one is used.

Examples according to the third embodiment will be described in detail below.

The third embodiment concerns a capacitor comprising a pair of electrodes forming an anode and cathode, a separator, and a nonaqueous electrolytic solution, and more specifically an electrode sheet to be used for forming the electrodes of the capacitor, wherein an electrode layer is formed from activated carbon whose specific surface area, as measured by the BET method, is 500 to 2500 m$^2$/g and whose particle size at 90% cumulative volume (D90) as determined from a particle size distribution is 0.8 to 6 μm, and a capacitor using such an electrode sheet.

As a result of a study conducted in relation to the previously described problem, it was discovered that when an electrode sheet fabricated using an electrode layer formed from activated carbon having a specific particle size distribution was used for the electrodes forming the anode and cathode of the capacitor, short-circuiting between the electrodes could be substantially prevented even when the separator thickness was reduced, and the electrode sheet according to the present invention was thus completed.

The particle size distribution of the activated carbon refers to the volumetric particle size distribution measured by the laser diffraction method to be described later. The average particle size of commercially available activated carbon is generally in the range of about 5 to 100 μm, which does not satisfy the requirements of the activated carbon particle size distribution preferred for use in the present invention.

More specifically, regarding the particle size distribution of the activated carbon, a result was obtained showing that when activated carbon whose particle size at 90% cumulative volume (D90) was about 6 µm or less was used for the polarizable electrodes, short-circuiting between the electrodes could be substantially prevented even when a thin-film separator was used.

This result can be explained, for example, as follows.

That is, when activated carbon whose D90 value is larger than the above value is used, the electrodes will contain many activated carbon particles having a relatively large particle size, and as a result, it is considered that the probability of such large activated carbon particles remaining on the electrode surface and coming off the electrode surface increases, increasing the probability of short-circuiting occurring between the electrodes with the large activated carbon particles piercing through the separator.

Here, from the standpoint of preventing short-circuiting, it is preferable that the value of D90 be reduced as the thickness of the separator used in the capacitor decreases; preferably, the value of D90 is 5 µm or less, and more preferably 4 µm or less. According to a study, for the purpose of enhancing the output characteristic when fully discharging within one second or of obtaining a high output characteristic in a low-temperature region of 0°C or lower, it is preferable to further reduce the value of D90, and the value of D90 is more preferably 3 µm or less, and most preferably 2 µm or less.

The lower limit value of D90 is preferably about 0.8 µm. The reason is that, if extremely fine activated carbon is used, activated carbon particles become easier to come off the electrode layer, tending to accelerate the self-discharge. In particular, this problem tends to become pronounced in the present invention because of the use of a thin-film separator.

According to a study conducted by the present inventors, it was found that for the purpose of further reliably preventing the occurrence of electrode short-circuiting, it was more preferable to use activated carbon whose D90 value was within the prescribed range described above and whose particle size at 100% cumulative volume (D100) was 20 µm or less.

This shows that, as in the above-described case, inclusion of large activated carbon particles in the electrodes is not desirable from the standpoint of preventing short-circuiting.

For the purpose of preventing short-circuiting, the value of D100 is more preferably 15 µm or less, and most preferably 10 µm or less.

The method of obtaining activated carbon having a particle size distribution preferred for use in the present invention is not specifically limited, and various methods can be used; for example, activated carbon having a preferable particle size distribution can be obtained by milling the previously described commercially available activated carbon. For the milling, it is preferable to use a milling machine such as a jet mill, a ball mill, a bead mill, or the like. It is also preferable to obtain the desired particle size distribution by classifying the particles according to size, if needed, by using suitable means after the milling.

The BET specific surface area of the activated carbon used for forming the electrode layer for the electrode sheet of the present invention is preferably 500 to 2500 m$^2$/g, and more preferably 1000 to 2500 m$^2$/g. A specific surface area of the activated carbon smaller than the lower limit or larger than the upper limit is not desirable, because in that case, a sufficient capacity cannot be obtained when a high output is applied.

The electrode layer is formed by adding a binder and, if necessary, a conductive agent, to the activated carbon, and by molding the mixture. The electrode layer is formed on one side or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVdF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent. The conductive agent used here is not limited to any specific material, but use may be made, for example, of Ketjen black, acetylene black, natural graphite, or artificial graphite.

As described above, the present inventors discovered that, from the standpoint of preventing electrode short-circuiting, it is preferable to form the electrode layer by using activated carbon having a specific particle size distribution and to fabricate the capacitor by using the electrode sheet with the electrode layer formed on the current collector; in addition to that, a result was obtained showing that, for the prevention of electrode short-circuiting, it is preferable that the peak height (SRp) relative to the center plane of the electrode surface of the electrode sheet be held to about 4 µm or less.

The electrode surface of the electrode sheet refers to the surface of the electrode layer formed on the current collector, and more specifically to the surface that faces the separator in the capacitor.

The peak height (SRp) relative to the center plane is defined as follows: That is, when reference coordinate axes $\times$ and y are taken in the center plane (average plane) of the roughness curvature (the curvature of the electrode surface), and the center plane is expressed as $0 = f(x,y)$ and the roughness curvature as $z = f(x,y)$, then SRp is defined as the highest point on the roughness curvature, i.e., the maximum value of z ($z_{max}$). Here, the positive direction of the z axis is the direction pointing from the electrode surface toward the separator that faces the electrode.

The above result can be explained, for example, as follows.

That is, the electrode surface is a rough surface with pits and projections, though the degree of roughness varies, and it is presumed that stress concentrations occur on the electrode/separator contact surface at positions where the projections on the electrode surface contact the separator. Here, if there is a projection having a large SRp, i.e., a significantly high projection, on the electrode surface, the separator may partially rupture near the projection due to an extremely high stress concentration, presumably increasing the probability of the projection piercing through the separator and contacting the polarizable electrode on the opposite side, resulting in a short circuit.

When using an extremely thin separator, for example, with a thickness smaller than 15 $\mu$m, in the capacitor, it is preferable to further reduce the value of SRp, preferably to less than 3 $\mu$m, and more preferably to less than 2 $\mu$m.

There is no specific limit to how far the SRp value may be reduced, and the lower the SRp value is, the better result can be obtained, but the practical lower limit value of SRp is about 0.01 $\mu$m.

From the standpoint of preventing short-circuiting between the electrodes, not only is it preferable that the SRp value be held within the above range, but it is also preferable that the surface roughness (SRa) relative to the center plane of the electrode surface be less than 1 $\mu$m. The surface roughness relative to the center plane is a three-dimensional extension of the average surface roughness relative to the center line as defined in JIS B0601, and is expressed as an average value of the distance ($|z|$) between the roughness curvature f = (x,y) and the center plane 0 = (X,y). The value of SRa is more preferably less than 0.5 $\mu$m.

The electrode density is also an important factor when obtaining the above SRp and SRa values. In the electrode fabrication, sufficiently pressing the electrode in the pressing process and thereby increasing the electrode density is effective in obtaining the above SRp and SRa values. The electrode density is preferably 0.6 g/cm$^3$ or greater, more preferably 0.65 g/cm$^3$ or greater, still more preferably 0.7 g/cm$^3$ or greater, further preferably 0.75 g/cm$^3$ or greater, and still further preferably 0.8 g/cm$^3$ or greater, though the preferable value may vary, depending on the kind of activated carbon used. The density can be further increased, as long as the electrode is not broken by pressing, and the upper limit need not be specifically imposed, but 1.0 g/cm$^3$ is a practical limit.

Usually, increasing the electrode density as described above would adversely affect the output characteristic. However, in the present invention, since activated carbon having a small particle size, the value of D90 being 5 $\mu$m or less, is used, the adverse effect on the output characteristic can be greatly reduced.

There is no specific limit to the anode/cathode electrode thickness. If the purpose is limited to maximizing the volumetric capacitance density or the volumetric energy density of the capacitor, generally the greater the electrode thickness the better, but the preferable range is from about 60 to 200 $\mu$m. A thickness greater than 200 $\mu$m is not desirable, because in that case the mechanical strength of the electrode and the adhesion to the current collector would drop, making it difficult to stably fabricate the electrode.

On the other hand, if the purpose is to enhance the output characteristic of the capacitor and obtain a sufficiently high electric capacity and energy when fully discharging the fully charged capacitor within a few seconds, the electrode thickness is preferably 60 $\mu$m or less, more preferably 50 $\mu$m or less, and still more preferably 40 $\mu$m or less. If it is desired to enhance the output characteristic when fully discharging within one second or to obtain a high output characteristic in a low-temperature region of 0°C or lower, an electrode thickness of 30 $\mu$m or less is further preferable.

The electrode thickness here refers to the thickness only of the molded layer containing the activated carbon and binder and responsible for the major portion of the capacitance of the capacitor, and does not include the thickness of the current collector and its surface treatment layers. When the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2.

If the electrode thickness is 5 $\mu$m or less, a high output characteristic can be easily obtained but, since the electrode surface has to be increased in order to obtain the necessary capacity of the capacitor, the volumetric capacitance density of the capacitor tends to decrease, which is not desirable.

For the purpose of increasing the volumetric capacitance density of the capacitor, the electrode thickness is preferably 10 $\mu$m or greater, more preferably 14 $\mu$m or greater, still more preferably 18 $\mu$m or greater, and most preferably 20 $\mu$m or greater.

Other effective methods for increasing the volumetric capacitance density of the capacitor include a method that increases the capacitance density (F/cm$^3$) per unit volume of the electrode, i.e., a method that increases either the activated carbon capacitance density (F/g) or the electrode density (g/cm$^3$) or both, and such methods are preferably employed in the present invention as needed.

The value of the time constant expressed by the product CR of the capacitance C (F) of the capacitor and the internal resistance R ($\Omega$) of the capacitor is often used as the parameter to define the output characteristic of the capacitor;

generally, as the time constant becomes smaller, it is easier to obtain a high output characteristic. In connection with this, the previously described Tokuhyou (Published Japanese translation of PCT application) No. 2002-532869 provides for a capacitor whose time constant is smaller than 0.03 msec. However, the capacitor described in this patent document is designed to achieve a high output characteristic at some sacrifice of the volumetric capacitance density (or the volumetric energy density), and a high volumetric capacitance density is not achieved for the capacitor. That is, if it is desired to ensure a capacitance larger than a specified value according to the purpose of the capacitor and, at the same time, achieve a high volumetric capacitance density, the value of the CR product must lie within a prescribed preferable range.

For the capacitor of the present invention, the value of the CR product is preferably within a range of 0.03 to 3 seconds, more preferably 0.05 to 2 seconds, and still more preferably 0.07 to 1 second.

Further, for the purpose of enhancing the discharge efficiency when fully discharging the capacitor within a few seconds, the time constant is preferably 0.5 seconds or less, more preferably 0.3 seconds or less, still more preferably 0.2 seconds or less, and most preferably 0.1 second or less.

Here, the internal resistance of the capacitor is found by a known impedance measuring method, for example, at a measuring frequency of 1000 Hz.

The present inventors have discovered that when the internal resistance value measured at a measuring frequency of 0.1 kHz or at DC is used as the internal resistance value of the capacitor for the calculation of the CR product, better correlation can be obtained with respect to the high output characteristic of the capacitor, especially when discharging the capacitor for more than a few hundred milliseconds, but in the present embodiment, the value of the equivalent parallel resistance (ESR) widely used for the evaluation of the internal resistance value of commercial capacitors is employed in accordance with general practice, and the internal resistance value measured at a measuring frequency of 1000 Hz is used for the calculation.

The current collector that serves as the electrode substrate is not limited to any specific material, but an aluminum foil, a stainless steel foil, etc. may be used for the anode current collector, and an aluminum foil, a copper foil, a stainless steel foil, etc. may be used for the cathode current collector. From the standpoint of increasing the volumetric capacitance density of the capacitor, it is preferable to make the current collector as thin as possible, preferably 30 $\mu$m or less, and more preferably 20 $\mu$m or less.

For such purposes as enhancing the adhesion of the current collector to the electrode and reducing the contact resistance between them, it is preferable to apply a surface treatment such as chemical etching or plasma processing and/or to form a conductive adhesive layer on the surface.

It will be recalled that the present invention aims to increase the volumetric capacitance density of the capacitor by using a thin separator; for this purpose, it is preferable to reduce the thickness of the separator at least to less than 30 $\mu$m, more preferably to less than 25 $\mu$m, still more preferably to less than 20 $\mu$m, and most preferably to less than 15 $\mu$m. In general, however, reducing the separator thickness tends to cause problems in terms of the mechanical strength and ease-of-handling of the separator, as well as such problems as increased self-discharge of the capacitor; therefore, the practical lower limit of the thickness is about 5 $\mu$m.

When using such a thin separator, the particle size distribution of the activated carbon such as described earlier becomes a very important factor in order to secure insulation, but in addition to that, the morphology of the separator is important. In particular, in the capacitor of the present invention, it is preferable to use a porous film. Compared with paper represented by commonly used cellulose paper, a porous film is particularly preferable from the standpoint of ensuring insulation in a thin region. To define the preferred morphology of the porous film by parameters, the porosity is 30 to 80%, the permeability (JIS P8117) is 5 to 300 seconds/100 ml, and the average internal pore size is 0.01 to 5 $\mu$m.

The porosity is calculated from the following equation.

$$\text{Porosity (\%)} = (1 - d_f/d_0) \times 100$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas. On the other hand, the apparent density do is obtained by dividing the separator's weight per unit area (g/cm$^2$) by the separator's volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably the upper limit is 1 $\mu$m or less. The average internal pore size here is computed by performing image processing on a cross-sectional photograph taken through an SEM. An average internal pore size smaller than the lower limit value is not desirable, because the ion conductivity of the electrolyte would significantly drop. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 cc, and more preferably 10 to 100 seconds/100 cc.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of paper.

In the present invention, the material for forming the separator is not specifically limited. For example, use may be made of polyolefin such as polyethylene or polypropylene, aromatic polyamide, polysulfone, polytetrafluoroethylene, etc. However, a material having high heat resistance is preferable for the separator of the capacitor, because it can then be dried at a higher temperature. Considering the heat resistance and moldability, aromatic polyamide is preferable, and a separator composed principally of a metaphenyleneisophthalamide-based polymer is particularly preferable.

The porous film can be easily obtained by a known method. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor of the present invention can be suitably selected by comprehensively considering the operating conditions, etc. such as the charging voltage of the capacitor. A specific example is a solution in which a quaternary ammonium salt or a lithium salt such as $LiPF_6$ or $LiBF_4$, which is commonly used in an electric double layer capacitor, is dissolved in an organic solvent composed of one or two or more materials selected from the group consisting of propylene carbonate, ethylene carbonate, diethyl carbonate, dimethyl carbonate, methylethyl carbonate, dimethoxyethane, $\gamma$-butyrolactone, acetonitrile, etc. The salt concentration in the electrolytic solution is not specifically limited, but the concentration is usually about 0.5 to 2 mol/l.

Among others, the electric conductivity at 25°C of the electrolytic solution is preferably $1 \times 10^{-2}$ S/cm or higher; an example is an electrolytic solution in which an electrolyte such as a quaternary ammonium salt, for example, $(C_2H_5)_3CH_3NBF_4$, is dissolved in a solvent such as propylene carbonate.

The capacitor of the present invention comprises at least a pair of electrodes forming an anode and cathode, a separator, and a nonaqueous electrolytic solution, and its configuration and shape are basically the same as the commonly employed ones. For the outer casing of the capacitor, any suitable type, such as cylindrical type, square type, aluminum resin laminated casing type, coin type, or film type, can be selected according to the purpose.

[EXAMPLES]

The features of the present invention will be further described in detail below with reference to specific examples of the electric double layer capacitor according to the present invention, but it will be appreciated that the invention is by no means limited by the examples described herein.

(Method of measurement)

The measurement of each item in the present embodiment was performed in the following manner.

(1) Particle size distribution (D90, D100):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 cm$^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from 10 arbitrarily selected points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from five arbitrarily selected points on the sample, and their average value was taken as the measured value.

(5) Capacitance density of activated carbon and electrode:

An evaluation cell having electrodes each measuring 20 mm $\times$ 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V. Further, the capacitance (F) of the evaluation cell was divided by the total weight (g) of the activated carbon used for the two electrodes, to calculate the capacitance per unit weight of the activated carbon (F/g). Further, the capacitance density (F/cm$^3$) per unit volume of the electrode layer was calculated by dividing the capacitance (F) of the evaluation cell by the total volume of the two electrode layers.

(6) Peak height relative to center plane (SRp):

Measurements were made using a three-dimensional contact probe type surface roughness measuring instrument "SE-3CKT" manufactured by Kosaka Laboratory Ltd. The scanning line pitch of the probe and the sampling pitch in the scanning direction were both set to 1 $\mu$m, the measuring area was 200 $\mu$m $\times$ 1000 $\mu$m, and the cutoff was 0.25 mm. Here, the magnification (range) in the height direction (Z direction) is suitably chosen so that the surface rightness of the sample can be measured with the highest sensitivity; generally, a magnification of the order of 1000 to 2000 times is preferable in the case of a sample whose surface roughness is relatively large, while a magnification of the order of 5000 to 10000 times is preferable in the case of a sample whose surface roughness is relatively small.

Measurements were taken from 10 arbitrarily selected different points on the surface of the sample, and the maximum value of SRp obtained through the measurements of the 10 points was taken as the peak height (SRp) relative to the center plane of the sample.

[Preparation of various kinds of activated carbons]

Activated carbons used in specific examples and comparative examples were prepared in the following manner. The particle size distributions and specific surface areas of these activated carbons (Nos. 1 to 5) are shown in Table 1.

[Preparation example 1]

Activated carbon MSP-20 (capacitance: about 44 F/g) manufactured by Kansai Coke and Chemicals was dry-milled for 12 hours by a bead mill using 2-mm diameter zirconia beads. This activated carbon is designated as the activated carbon No. 1.

[Preparation example 2]

Activated carbon MSP-20 (capacitance: about 44 F/g) manufactured by Kansai Coke and Chemicals was dry-milled for 100 hours by a bead mill using 2-mm diameter zirconia beads. This activated carbon is designated as the activated carbon No. 2.

[Preparation example 3]

Activated carbon MSP-20 (capacitance: about 44 F/g) manufactured by Kansai Coke and Chemicals was dispersed in a solvent, and was wet-milled for 75 minutes by a bead mill using 2-mm diameter zirconia beads. Dimethylacetamide was used as the solvent. This activated carbon is designated as the activated carbon No. 3.

[Preparation example 4]

100 parts by weight of poly-4-methylpentene-1 (TPX: grade RT-18 [Manufactured by Mitsui Chemicals]) as a thermoplastic resin and 11.1 parts of mesophase pitch AR-HP (manufactured by Mitsubishi Gas Chemical) as a thermoplastic carbon precursor were melted and kneaded using a co-rotating twin screw extruder (TEX-30 manufactured by Japan Steel Works, barrel temperature: 290°C, under nitrogen stream) to produce a mixture. In the mixture produced under the stated conditions, the thermoplastic carbon precursor dispersed through the thermoplastic resin had a particle size of 0.05 to 2 $\mu$m. The mixture was held at 300°C for 10 minutes, but no aggregation of the thermoplastic carbon precursor was observed, and the particle size of the dispersed carbon precursor remained unchanged at 0.05 to 2 $\mu$m.
Next, using a 0.2-mm spinning nozzle, the above mixture was spun at a rate of 1200 m/min. under a temperature of 340°C to produce a precursor fiber. Then, using 100 parts by weight of decalin per part by weight of the precursor fiber, the thermoplastic resin was melted at 150°C and filtered to produce a stabilized precursor fiber. After mixing 3 parts by weight of acetylene black per 100 parts by weight of the stabilized precursor fiber, the mixture was heat-treated at 200°C in the air for 5 hours, after which the temperature was raised from room temperature up to 650°C in a nitrogen gas atmosphere over 5 hours to produce a fibrous carbon precursor.
40 parts by weight of potassium hydroxide, 40 parts of water, and 5 parts of isopropanol were added per 10 parts by weight of the fibrous carbon precursor, and a uniform slurry solution was produced by ultrasonic means; then, while flowing a nitrogen gas at a rate of 0.3 L/min., the solution was heated from room temperature to 650°C in 2.5 hours and held at this temperature for 2 hours, and then heated from 650°C to 900°C in one hour and held at this temperature for one hour, to accomplish the activation process. The resulting sample was washed in excess water and dried at 150°C to obtain fibrous activated carbon.
Next, 98 parts by weight of 10-mm zirconia balls and 3 parts by weight of the fibrous activated carbon were placed in a 80-ml nylon container and, using a planetary potmill (part number LP-1) manufactured by Ito Seisakusho for laboratory use, the container was rotated at 200 rpm for one hour; after that, 98 parts by weight of 2-mm zirconia balls and 3 parts by weight of the thus milled fibrous activated carbon were placed in a container which was then rotated at 200 rpm for 5 hours to produce activated carbon. This activated carbon is designated as the activated carbon No. 4.

[Preparation example 5]

20 parts by weight of the activated carbon No. 1 and 80 parts by weight of the activated carbon No. 3 were thoroughly mixed. The resultant activated carbon is designated as the activated carbon No. 5.

[Fabrication of separator]

Polymetaphenylene isophthalamide ("CONEX" manufactured by Teijin Techno Products) was dissolved in dimethylacetamide, and the dope was adjusted so that the concentration of the polymetaphenylene isophthalamide became 8% by weight. The dope was then cast over a polypropylene film to a thickness of 50 $\mu$m.
Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/100 ml (JIS P8117).

[Fabrication of capacitor]

The 11-$\mu$m thick polymetaphenylene isophthalamide porous film fabricated above was used as the separator. The electrode size was 1.4 cm $\times$ 2.0 cm, and the separator size was 1.6 cm $\times$ 2.2 cm; the electrolytic solution was prepared by dissolving $(C_2H_5)_3CH_3NBF_4$ (triethylmethylammonium tetrafluoroborate) in propylene carbonate at a concentration of 1.5 mol/l. A 100-$\mu$m thick aluminum/resin laminated film was used as the cell casing material, and the casing size excluding the terminals was 1.8 cm × 2.8 cm. A polyolefin-based sealant was used to seal the cell, and the size of the seal portion was about 1.8 cm × 0.4 cm.

The short-circuit withstand capability of the thus fabricate capacitor was evaluated.

For the evaluation of the short-circuit withstand capability, 100 capacitor cells were fabricated using exactly the same method and, with the completed cells sandwiched between flat plates such as glass plates, the capacitors were charged (at 1C) while applying loads of 0.196 MPa (2 kg/cm$^2$) and 0.490 MPa (5 kg/cm$^2$); in this condition, the number of capacitors that substantially failed to be sufficiently charged, due to short-circuit current, was taken as the failure rate (%) based on which the evaluation was made.

Here, the loads were applied during the evaluation of the short-circuit withstand capability by assuming, in the case of an aluminum-laminated type cell, the surface pressure expected to be applied by the press in the cell fabrication process and the external force expected to be applied to the capacitor under actual use conditions after fabrication and, in the case of a wound type cell, the surface pressure expected to be applied to the electrode sheet and separator due to the tension when winding the electrode sheet and separator during the fabrication of the electrode element using a winding machine.

At the same time, the 1C volumetric capacitance density and 1000C discharge efficiency of each capacitor were evaluated in order to evaluate the volumetric capacitance density and high output characteristic of the capacitor.

Here, the volumetric capacitance density of the capacitor was considered as representing the capacitance density per unit volume of the electrode element comprising the current collectors with the anode and cathode formed thereon and the separator, and was calculated by excluding the volume of the cell casing and the volume of the terminal portions (electrode leads, etc.).

The value of the 1C volumetric capacitance density (mAh/cm$^3$) of the electrode element was calculated from the following equation.

$$D = C/V$$

where D is the 1C volumetric capacitance density of the electrode element, C is the 1C discharge capacity (mAh) of the capacitor, and V is the volume (cm$^3$) of the electrode element.

The volume of the electrode element is given as

$$V = S \times (T1 + T2 + T3)$$

where S is the area of the separator (cm$^2$, 1.6 cm × 2.2 cm), T1 is the thickness of the anode and cathode electrodes, T2 is the thickness of the anode and cathode current collectors, and T3 is the thickness of the separator.

In the specific examples and comparative examples shown herein, any capacitor in which the 1C volumetric capacitance density of the electrode element was lower than 2 mAh/cm$^3$ was judged to be an inadequate capacitor having an insufficient volumetric capacitance density. In the capacitor of the present invention, the 1C volumetric capacitance density of the electrode element is preferably at least 2 mAh/cm$^3$ or higher, more preferably 3 mAh/cm$^3$ or higher, still more preferably 4 mAh/cm$^3$ or higher, and most preferably 5 mAh/cm$^3$ or higher.

The 1C discharge capacity of the capacitor refers to the total amount of electricity discharged from the capacitor when the capacitor is discharged to 0 V at a constant current of 1C after the capacitor has been nearly fully charged under an ambient temperature of 25°C by being charged first at a constant current of 1C for one hour and then at a constant voltage of 2.5 V for two hours (1C is the amount of current when fully charging/discharging the capacitor in one hour at a constant current).

Further, it is to be understood that the thickness of the aluminum foil or conductive adhesive layer used as the current collector is included in the thickness of the current collector but not included in the thickness of the electrode.

The 1000C discharge efficiency of the capacitor is expressed by the ratio (expressed as %) of the 1000C discharge capacity (the amount of current (mAh) obtained when the fully charged capacitor is discharged to 0 V under an ambient temperature of 25°C at a constant current whose amount is 1000 times that of the 1C discharge current) to the 1C discharge capacity (mAh). That is

$$1000C \text{ discharge efficiency} = \{(1000C \text{ discharge capacity})/(1C \text{ discharge capacity})\} \times 100$$

In the specific examples and comparative examples shown herein, any capacitor whose 1000C discharge efficiency was lower than about 70% was judged to be a defective capacitor having a poor high output characteristic. In the capacitor of the present invention, the 1000C discharge efficiency is preferably at least 70% or higher, more preferably 80% or higher, still more preferably 85% or higher, and most preferably 90% or higher.

It is also to be understood that when obtaining the amount of current for 1000C discharge above, the charging of the capacitor is done in exactly the same manner as when measuring the 1C discharge capacity.

[Table 6]

| ACTIVATED CARBON | PARTICLE SIZE DISTRIBUTION | | SPECIFIC SURFACE AREA ($m^2$/g) | CAPACITANCE DENSITY OF ACTIVATED CARBON (F/g) |
|---|---|---|---|---|
| | D100 ($\mu$m) | D90 ($\mu$m) | | |
| No. 1 | 24.7 | 7.8 | 2340 | 42 |
| No. 2 | 15.2 | 5.4 | 2310 | 42 |
| No. 3 | 5.0 | 1.8 | 1760 | 39 |
| No. 4 | 5.2 | 1.8 | 1730 | 35 |
| No. 5 | 22.6 | 3.4 | 1820 | 39 |
| [Specific examples 1 to 8 and comparative examples 1 and 2] | | | | |

Using the above activated carbons (Nos. 1 to 5), electrodes (A to K) were produced in the following manner.

That is, a conductive paste composed of graphite and polyamideimide (manufactured by Acheson (Japan)) was applied over a current collector formed from a 20-$\mu$m thick aluminum foil (manufactured by Nippon Foil Mfg. Co., Ltd.), and was heat-treated to form a 2-$\mu$m thick conductive adhesive layer thereon. 93 parts by weight of activated carbon, 7 parts by weight of Ketjen black, 21 parts by weight of polyvinylidene fluoride, an appropriate amount of N-methylpyrrolidone as a solvent (the amount being selected from within a range of about 150 to 350 parts by weight, depending on the electrode thickness), and an appropriate amount or 4 parts by weight of polyvinyl pyrrolidone as a dispersion accelerating agent (the amount being selected from within a range of about 2 to 6 parts by weight, depending on the amount of the solvent) were to produce a slurry; then, the slurry was applied over the current collector surface on which the conductive adhesive layer was formed, and the resulting structure was dried and pressed under heat, to produce an electrode.

The thickness, the peak height relative to the center line (SRp), and the capacitance density of each of the thus produced electrodes (A to K) are shown in Table 7. For the electrode K, however, since cracks visible to the naked eye were observed in a portion of the electrode layer, the remainder of the evaluation was discontinued.

Next, capacitors were fabricated using the respective electrodes as anode/cathode pairs, and their characteristics were evaluated. The results are shown in Table 8.

[Table 7]

| ELECTRODE | ACTIVATED CARBON | ELECTRODE THICKNESS LAYER ($\mu$m) | PEAK HEIGHT RELATIVE TO CENTER PLANE (SRp) ($\mu$m) | ELECTRODE CAPACITANCE DENSITY (F/cm$^3$) |
|---|---|---|---|---|
| A | No. 1 | 30 | 5.6 | 19.3 |
| B | No. 2 | 30 | 3.2 | 19.5 |
| C | No. 3 | 30 | 1.3 | 18.3 |
| D | No. 4 | 30 | 2.0 | 16.4 |
| E | No. 5 | 30 | 4.9 | 18.6 |
| F | No. 3 | 18 | 1.2 | 18.1 |
| G | No. 3 | 10 | 1.4 | 17.9 |
| H | No. 3 | 50 | 1.5 | 18.4 |

(continued)

| ELECTRODE | ACTIVATED CARBON | ELECTRODE THICKNESS LAYER ($\mu$m) | PEAK HEIGHT RELATIVE TO CENTER PLANE (SRp) ($\mu$m) | ELECTRODE CAPACITANCE DENSITY (F/cm$^3$) |
|---|---|---|---|---|
| I | No. 3 | 80 | 1.7 | 18.3 |
| J | No. 3 | 130 | 2.5 | 18.1 |
| K | No. 3 | 240 | - | - |
| [Specific example 9] | | | | |

A capacitor was fabricated in the same manner as in specific example 2, except that a commercially available 14-$\mu$m polyethylene microporous film (with a porosity of about 50%, an average internal pore size of 0.08 $\mu$m, and a permeability (JIS P8117) of 120 seconds/100 cc) was used as the separator. The evaluation results of this capacitor are shown in Table 8.

(Comparative example 3)

A capacitor was fabricated in the same manner as in specific example 9, except that the electrode A was used. The evaluation results of this capacitor are shown in Table 8.

(Comparative example 4)

A capacitor was fabricated in exactly the same manner as in specific example 5, except that 50-$\mu$m cellulose paper was used as the separator. The evaluation results of this capacitor are shown in Table 8.

[Table 8]

| | ELECTRODE | CELL FAILURE RATE (%) | | DISCHARGE EFFICIENCY (%) | 1C VOLUMETRIC CAPACITANCE DENSITY OF CAPACITOR (mAh/cm$^3$) | CR PRODUCT (seconds) |
|---|---|---|---|---|---|---|
| | | TEST LOAD 0.196 MPa (2 kg/cm$^2$) | TEST LOAD 0.490 MPa (5 kg/cm$^2$) | | | |
| SPECIFIC EXAMPLE 1 | B | 0 | 0 | 83 | 5.88 | 0.23 |
| SPECIFIC EXAMPLE 2 | C | 0 | 0 | 85 | 5.48 | 0.21 |
| SPECIFIC EXAMPLE 3 | D | 0 | 0 | 87 | 4.91 | 0.19 |
| SPECIFIC EXAMPLE 4 | F | 0 | 0 | 91 | 4.18 | 0.13 |
| SPECIFIC EXAMPLE 5 | G | 0 | 0 | 95 | 2.83 | 0.07 |
| SPECIFIC EXAMPLE 6 | H | 0 | 0 | 75 | 6.72 | 0.34 |
| SPECIFIC EXAMPLE 7 | I | 0 | 0 | 61 | 7.77 | 0.56 |
| SPECIFIC EXAMPLE 8 | J | 0 | 0 | 34 | 8.61 | 0.95 |
| SPECIFIC EXAMPLE 9 | C | 0 | 0 | 84 | 5.34 | 0.22 |

(continued)

| | ELECTRODE | CELL FAILURE RATE (%) | | DISCHARGE EFFICIENCY (%) | 1C VOLUMETRIC CAPACITANCE DENSITY OF CAPACITOR (mAh/cm$^3$) | CR PRODUCT (seconds) |
|---|---|---|---|---|---|---|
| | | TEST LOAD 0.196 MPa (2 kg/cm$^2$) | TEST LOAD 0.490 MPa (5 kg/cm$^2$) | | | |
| COMPARATIVE EXAMPLE 1 | A | 2 | 7 | 82 | 5.82 | 0.23 |
| COMPARATIVE EXAMPLE 2 | E | 0 | 2 | 83 | 5.55 | 0.22 |
| COMPARATIVE EXAMPLE 3 | A | 1 | 3 | 81 | 5.67 | 0.24 |
| COMPARATIVE EXAMPLE 4 | G | 0 | 0 | 93 | 1.83 | 0.09 |
| [Evaluation] | | | | | | |

As shown in Table 8, in the case of the capacitors of specific examples 1 to 9, each fabricated using an electrode sheet in which the particle size distribution (D90, D100) of the activated carbon used for the electrodes was within the preferable range of the present invention, and in which the value of the electrode peak height SRp was within the preferable range of the present invention, short-circuiting did not occur and it can therefore be said that these capacitors are capable of substantially preventing the occurrence of short-circuiting. Further, in the case of the capacitors of specific examples 1 to 6 and 9, each fabricated using an electrode sheet whose electrode thickness was within the more preferable range of the present invention, a value as high as 70% or more was obtained as the 1000C discharge efficiency, which shows that these capacitors achieve a high power output. Furthermore, the electrode volume ratio is generally high, showing that a high capacitance density can be achieved.

On the other hand, in the case of the capacitors of the comparative examples 1 to 3, each fabricated using an electrode sheet formed from activated carbon whose particle size distribution was outside the preferable range of the present invention, significant short-circuiting was observed, and the results were not desirable.

In the case of the capacitor of the comparative example 4 which used a separator whose thickness was outside the preferable range of the present invention, short-circuiting was not observed, but the volumetric capacitance density of the capacitor significantly decreased, which was not desirable.

[Embodiment 4]

A fourth embodiment concerns the provision of a porous carbon material that can significantly improve diffusion resistance at low temperature in an electric double layer capacitor, a method for producing the porous carbon material, a porous carbon electrode material using the porous carbon material, and an electric double layer capacitor using the porous carbon electrode material.

As a result of a study conducted by the present inventors, it has been discovered that a porous carbon material that satisfies a specific structural parameter serves to dramatically improve diffusion resistance at low temperature in an electric double layer capacitor that uses such a carbon material as the electrode material.

In the fourth embodiment, a porous carbon material that satisfies such a specific structural parameter, an electrode material composed of such a carbon material, and an electric double layer capacitor using such an electrode material will be described in detail below. In the following, the specific surface area S (m$^2$/g) of the porous carbon material is the total specific surface area obtained from a nitrogen absorption isotherm (the absorption isotherm at the temperature of liquid nitrogen) by the BET method, as is commonly practiced, and the total pore volume V (m$^3$/g) is the absorption volume obtained from the amount of absorbed nitrogen at a relative pressure of 0.98 on the nitrogen absorption isotherm, while the average particle size R (m) is the value of the mean particle size (D50) in the volumetric particle size distribution obtained by a Mie scattering method.

Further, a low-temperature diffusion resistance ratio is defined as described hereinafter to provide a measure of the amount of increase of the diffusion resistance component in the electrical resistance component at low temperature in the electric double layer capacitor.

That is, as shown in Figure 8, for example, on the Nyquist plot showing the results of the measurements of the AC impedance of the electric double layer capacitor, the difference Z0 between the real component Z2 of the impedance at 0.05 Hz and the impedance Z1 at the point

where the impedance curve intersects the real axis on the high frequency side (Z0 = Z2 - Z1) is defined as the quasi-diffusion resistance; here, the low-temperature diffusion resistance ratio is defined as the ratio of the quasi-diffusion resistance at -20°C to the quasi-diffusion resistance at 20°C. Accordingly, the greater the degradation of the output characteristic at low temperature due to the increase in the diffusion resistance component of the impedance at low temperature, the greater the low-temperature diffusion resistance ratio.

Generally, the magnitude of the internal resistance of the electric double layer capacitor depends on the electrolytic solution, the thickness, and the electrode configuration used, but when the same kind of electrolytic solution is used, the low-temperature diffusion resistance ratio is presumably predominantly dependent on the characteristic of the porous carbon electrode material used for the polarizable electrodes. Further, the low-temperature diffusion resistance ratio usually takes a value not smaller than 1.

The porous carbon material of the present invention simultaneously satisfies the relations defined by the following equations (3) and (4) for the specific surface area S ($m^2/g$), the total pore volume V ($m^3/g$), and the average particle size R (m).

$$1000 < S < 3500 \quad (3)$$

$$7 \times 10^7 < (V/S)/R^3 < 2 \times 10^{12} \quad (4)$$

If S is 1000 or smaller, the capacitance of the electric double layer of the porous carbon material drops, and conversely, if S is larger than 3500, the capacitance of the electric double layer per unit specific surface area of the porous carbon material drops, and an electrode having a high capacitance density cannot be achieved.

Further, if the value of $(V/S)/R^3$ is not larger than $7 \times 10^7$, then in the case of the electric double layer capacitor that uses the porous carbon material as the polarizable electrode material and also uses a propylene carbonate solution containing $(C_2H_5)_3CH_3NBF_4$ at a concentration of 1.5 mol/l as the electrolytic solution, the low-temperature diffusion resistance ratio becomes 10 or larger and the low-temperature output characteristic degrades, and conversely, if the value is larger than $2 \times 10^{12}$, then either the pore size of the porous carbon material becomes too large and the capacitance of the electric double layer per unit volume drops or the particle size of the porous carbon material becomes so small that it becomes difficult to mold the material to form a closely packed electrode, and as a result, the capacitance of the electric double layer per unit volume of the polarizable electrode formed from the porous carbon material drops.

The more preferable range of S can be defined by the following equation (5).

$$1200 < S < 3500 \quad (5)$$

The more preferable range of $(V/S)/R^3$ can be defined by the following equation (6).

$$3 \times 10^8 < (V/S)/R^3 < 1 \times 10^{12} \quad (4)$$

The reason that the diffusion resistance in the electric double layer capacitor that uses the porous carbon material as the polarizable electrode material depends on the parameter of $(V/S)/R^3$ is not fully known, but can be deduced as follows. Here, V/S can be interpreted as representing a quantity proportional to a certain kind of average pore size of the porous carbon material. If the electric double layer capacitor that uses the porous carbon material as the polarizable electrode material is to have a capacitance, it is necessary for ion components in the electrolytic solution to be diffused through the fine pores of the porous carbon material and move closer to the walls of the pores. The behavior of the ions inside fine pores under the influence of an AC field is explained by R. deLevie et al. using an equivalent model analogous to an AC transmission channel (Electrochim. Acta Vol. 8, p. 751, Electrochim. Acta Vol. 8, p. 1231).

According to this model, under certain conditions such as low temperatures where the diffusion of ions is suppressed, it is expected that the diffusion resistance will increase appreciably with the increase of frequency. The simplest method to address this is either by making the pore size excessively large or by reducing the pore length. However, making the pore size excessively large would result in a decrease in the capacitance of the electric double layer per unit volume of the electrode material, and therefore this method can only be used restrictively. As for the method of reducing the pore length, on the other hand, means capable of controlling this method is not yet known, and further, it is difficult to make the measurement; as a result, this method cannot be applied in practice. As a result of a study, the present inventors has discovered that when the ratio of $R^3$, a quantity proportional to a certain kind of average volume of the porous carbon material, to V/S is within a certain range, the impedance due to the diffusion resistance can improve dramatically, and have arrived at this invention.

The method for producing the porous carbon material of the present invention is not specifically limited; in one preferred method, the material can be produced by milling a porous carbon material whose specific surface area, as measured by the BET method, is 1000 $m^2/g$ or larger. However, in a conventional milling method, special care must be taken, because the pore size distribution may greatly vary as a result of the milling, making it difficult to obtain a porous carbon material that simultaneously satisfies the relations defined by the above equations (3) and (4). A preferred method of milling is, for example, a wet milling method using zirconia beads. Here, the zirconia bead size is preferably 2 mm or less.

In a more preferred method for producing the porous carbon material of the present invention, a carbon precursor composed of a polymer or an aromatic polynuclear condensed ring compound or pitch, coke, or the like is activated by a chemical or physical means to form a porous structure, wherein the total specific surface area of the carbon precursor is not smaller than 0.5 $m^2/g$ but not larger than 100 $m^2/g$, and after activation, the porous carbon material is milled as needed. If the total specific surface area is smaller than 0.5 $m^2/g$, the pore size distribution tends to change before and after the milling when obtaining the porous carbon material that simultaneously satisfies the above equations (3) and (4) by milling; conversely, if the total specific surface area is larger than 100 $m^2/g$, the volume density of the carbon precursor decreases, degrading the efficiency of activation. The total specific surface area of the carbon precursor is more preferably not smaller than 1 $m^2/g$ but not larger than 50 $m^2/g$.

The porous carbon material of the present invention has an excellent absorption capability characterized by its fast absorption speed, and is of enormous usefulness in various applications. It can be used advantageously as an absorbing material, a deodorizing material, a water/waste water treating material, a catalyst supporting material, etc.

The porous carbon material of the present invention is particularly advantageous for use as the polarizable electrode material for electric double layer capacitors. According to the present invention, there is also provided an electric double layer capacitor that uses this porous carbon material as the polarizable electrode material.

The polarizable electrodes can be produced using a commonly employed method. Generally, the porous carbon material, to which, if necessary, a binder and a conductive agent are added in suitable quantities, is molded in the form of a circular or rectangular disk or sheet to form a porous carbon material layer.

Examples of the binder include a fluorine-based resin such as polytetrafluoroethylene (PTFE), polyvinylidene fluoride (PVDF), a polyvinylidene fluoride copolymer, etc., a rubber-based material such as fluoro-rubber, SBR, etc., polyolefin such as polyethylene, polypropylene, etc., and an acrylic resin; here, carboxymethyl cellulose, polyvinyl pyrrolidone, or the like may be added as an assisting agent.

The binder can usually be used in an amount of about 0.1 to 20% by mass relative to the porous carbon material. If the amount of the binder added is too large, the internal resistance of the cell increases, and conversely, if the amount is too small, the adhesion between the porous carbon material particles, and the adhesion to the current collector tends to be insufficient.

For the conductive agent, use is made of such materials as carbon black such as acetylene black or Ketjen black, natural graphite, artificial graphite, carbon nanotube, or ultra-fine carbon fiber with an average diameter of 1 $\mu$m or less. The amount used is usually about 1 to 20% by mass relative to the porous carbon material.

The polarizable electrode has a structure in which a conductive current collector layer is formed on one or both sides of the porous carbon material layer; here, the conductive current collector layer may be formed simultaneously when forming the porous carbon material layer from a mixture composed of the porous carbon material, the binder, and the conductive agent, or the current collector may be electrically connected to one side of the porous carbon material layer formed in advance by compression molding or like method.

When forming the current collector made of a metal or the like simultaneously with the porous carbon material layer having a thickness of about 1 to 200 $\mu$m, it is preferable to use the binder described above. More specifically, when using polyvinylidene fluoride as the binder, preferably polyvinylidene fluoride is dissolved in a solvent of N-methyl-2-pyrrolidone or the like, and the porous carbon material, and if necessary, the conductive agent, dispersing agent, etc., are added to it to form a paste which is evenly applied over the current collector and then dried.

In this case, the current collector is preferably an aluminum foil whose surface is coated with a conductive film formed from graphite and a binding resin. The binding resin is preferably polyamideimide, cellulose, or the like. The aluminum foil may be an aluminum foil treated by etching.

Further, the dried structure may be pressed at normal temperature or under heat to increase the packing density of the porous carbon material layer.

When molding the porous carbon material in the form of a disk or a thick sheet, polytetrafluoroethylene or the like is preferably used as the binder, and it is preferable to knead the porous carbon material, the binder, and if necessary, the conductive agent, at normal temperature or under heat and to compression-mold the mixture at normal temperature or under heat.

There are several methods of electrically connecting the current collector to the porous carbon material layer: in one method, the current collector is formed by thermally spraying a metal such as aluminum over the porous carbon material layer, and in another method, the current collector formed from an aluminum foil or a metal net is bonded under pressure.

The unit cell in the electric double layer capacitor is fabricated by using a pair of polarizable electrodes produced as described above, one disposed opposite the other, if necessary, with a liquid-permeable separator made of an nonwoven fabric or other porous material interposed therebetween, and by immersing them in an electrolytic solution. The paired polarizable electrodes may be identical or different in structure. To implement the electric double layer capacitor, the above unit cell may be used singly or a plurality of such unit cells may be connected in series and/or in parallel.

Either a nonaqueous solution or an aqueous solution may be used as the electrolytic solution. A nonaqueous electrolytic solution is a solution prepared by dissolving the electrolyte in an organic solvent; examples of the organic solvent include ethylene carbonate, propylene carbonate, $\gamma$-butyrolactone, dimethyl sulfoxide, dimethyl formamide, acetonitrile, tetrahydrofuran, dimethoxyethane, etc. A mixture of two or more of these materials may also be used.

For the electrolyte, use may be made of spiro-(1, 1') -bipyrrolidinium $BF_4$, $(C_2H_5)_4PBF_4$, $(C_3H_7)_4PBF_4$, $(C_2H_5)_4NBF_4$, $(C_3H_7)_4NBF_4$, $(C_2H_5)_4PPF_6$, $(C_2H_5)_4PCF_3SO_3$, $LiBF_4$, $LiClO_4$, $LiCF_3SO_3$, etc. For the electrolyte in an aqueous electrolytic solution, use may be made of $NaCl$, $NaOH$, $HCl$, $H_2SO_4$, $Li_2SO_4$, etc.

In the present invention, the material for forming the separator to be interposed between the pair of anode and cathode electrodes is not specifically limited, and use may be made, for example, of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor, because it can then be dried at a higher temperature. Examples of materials having high heat resistance include a cellulose-based material, and more preferably, aromatic polyamide; among others, a separator composed principally of a metaphenyleneisophthalamide-based polymer is preferable. In particular, it is preferable to form the separator from a porous film made of a metaphenyleneisophthalamide-based polymer.

In the thus fabricated electric double layer capacitor, the low-temperature diffusion resistance ratio is preferably 10 or less, and more preferably 6 or less.

[EXAMPLES]

[Measurement of average particle size]

Measurements were made using a laser diffraction particle size analyzer "SALD-2000J" manufactured by Shimadzu Corporation. Water was used as the dispersion medium of the activated carbon, and a trace amount of nonionic surfactant "Triton X-100" was added as a dispersing agent. The circulation flow rate of the dispersion liquid was set to about 1200 $cm^3$/min., and the analysis was performed under the conditions of a maximum absorbance of 0.20, a minimum absorbance of 0.10, and a refractive index of 1.70 to 0.20i, with the number of integrations being 64. The mean particle size (D50) in the volumetric particle size distribution obtained by the analysis was taken as the average particle size R (m).

[Measurement of total pore volume and total specific surface area]

A nitrogen absorption/desorption isothermal curve was measured at 77K by using a specific surface area/pore size analyzer "NOVA 1200e" manufactured by Quantachrome, and after converting the amount of nitrogen gas absorption ($cm^3$/g) at a relative pressure of 0.98 into an STP value, the value was multiplied by 0.001555 and the result was taken as the total pore volume. Further, the specific surface area estimated by the BET method was taken as the total specific surface area.

[Measurement of AC impedance]

The AC impedance of the electric double layer capacitor was measured at a measurement voltage of 2.5 V with an amplitude of 10 mV over a frequency range of 100 kHz to 0.05 Hz.

[Experimental fabrication of separator]

Polymetaphenylene isophthalamide was dissolved in dimethylacetamide, and the dope was adjusted so that the concentration of the polymetaphenylene isophthalamide became 8% by weight. The dope was then cast over a polypropylene film to a thickness of 50 $\mu$m.

Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, and a permeability of 18 seconds/100 ml (JIS P8117). In the specific examples given hereinafter, the porous film of polymetaphenylene isophthalamide thus fabricated was used as the separator.

[Specific example 4-1]

Activated carbon with an average particle size (D50) of 8.9 $\mu$m (tradename MSP20 manufactured by Kansai Coke and Chemicals) was dispersed in a solvent composed of dimethyl acetamide (DMAc), and was wet-milled (by a bead mill using 2-mm diameter zirconia beads) to obtain activated carbon with an average particle size R of 0.7 $\mu$m (D50). The BET specific surface area S of the thus obtained activated carbon was 1531 ($m^2$/g), and the total pore volume V was $9.8 \times 10^{-7}$ ($m^3$/g). (V/S) /$R^3$ of this activated carbon was $1.9 \times 10^9$.

A conductive paint composed of graphite, polyamideimide, and a solvent (tradename Electrodag EB-815 manufactured by Acheson (Japan)) was applied over a 20-$\mu$m thick aluminum foil (manufactured by Sumikei Aluminum Foil), which was then predried at 150°C and cured at 260°C to form a 5-$\mu$m thick conductive coating film on the aluminum foil, thus fabricating a current collector.

93 parts by weight of the experimental activated carbon 3, 7 parts by weight of Ketjen black, 17 parts by weight of polyvinylidene fluoride (manufactured by Kureha Chemical), 304 parts by weight of DMAc, and 4 parts by weight of polyvinyl pyrrolidone were mixed to produce a slurry. The slurry was applied over the current collector and dried. The structure was then pressed at normal temperature to produce an activated carbon electrode. The thickness of the electrode was 21 $\mu$m.

The activated carbon electrode was cut to form an electrode measuring 2 cm $\times$ 1.4 cm, and a lead was attached to it. Two such electrodes were produced, and were joined together with their electrode surfaces facing each other by interposing a separator therebetween. The electrodes were then impregnated with a propylene carbonate (PC) solution in which the electrolyte $(C_2H_5)_3CH_3N^+BF_4^-$ (TEMABF$_4$) was dissolved at a concentration of 1.5 M, and were sealed into an outer casing made of an aluminum-laminated film, to fabricate an electric double layer capacitor.

When the AC impedance of this electric double layer capacitor was measured, Z0(20) was 0.92 ohms, Z0(-20) was 2.4 ohms, and Z0(-20)/Z0(20) was 2.5, thus showing a good low-temperature characteristic.

[Specific example 4-2]

100 parts by weight of poly-4-methylpentene-1 (TPX: grade RT-18 [Manufactured by Mitsui Chemicals]) as a thermoplastic resin and 11.1 parts of mesophase pitch AR-HP (manufactured by Mitsubishi Gas Chemical) as a thermoplastic carbon precursor were melted and kneaded using a co-rotating twin screw extruder (TEX-30 manufactured by Japan Steel Works, barrel temperature: 290°C, under nitrogen stream) to produce a mixture. In the mixture produced under the stated conditions, the thermoplastic carbon precursor dispersed through the thermoplastic resin had a particle size of 0.05 to 2 $\mu$m. The mixture was held at 300°C for 10 minutes, but no aggregation of the thermoplastic carbon precursor was observed, and the particle size of the dispersed carbon precursor remained unchanged at 0.05 to 2 $\mu$m.

Next, using a 0.2-mm spinning nozzle, the above mixture was spun at a rate of 1200 m/min. under a temperature of 340°C to produce a precursor fiber. Then, using 100 parts by weight of decalin per part by weight of the precursor fiber, the thermoplastic resin was melted at 150°C and filtered to produce a stabilized precursor fiber. After mixing 3 parts by weight of acetylene black per 100 parts by weight of the stabilized precursor fiber, the mixture was heat-treated at 200°C in the air for 5 hours, after which the temperature was raised from room temperature up to 650°C in a nitrogen gas atmosphere over 5 hours to produce a fibrous carbon precursor.

40 parts by weight of potassium hydroxide, 40 parts of water, and 5 parts of isopropanol were added per 10 parts by weight of the fibrous carbon precursor, and a uniform slurry solution was produced by ultrasonic means; then, while flowing a nitrogen gas at a rate of 0.3 L/min., the solution was heated from room temperature to 650°C in 2.5 hours and held at this temperature for 2 hours, and then heated from 650°C to 900°C in one hour and held at this temperature for one hour, to accomplish the activation process. The resulting sample was washed in excess water and dried at 150°C to obtain fibrous activated carbon.

Next, 98 parts by weight of 10-mm zirconia balls and 3 parts by weight of the fibrous activated carbon were placed in a 80-ml nylon container and, using a planetary potmill (part number LP-1) manufactured by Ito Seisakusho for laboratory use, the container was rotated at 200 rpm for one hour; after that, 98 parts by weight of 2-mm zirconia balls and 3 parts by weight of the thus milled fibrous activated carbon were placed in a container which was then rotated at 200 rpm for 5 hours to produce activated carbon.

The average particle size (D50) of this activated carbon was 1.0 $\mu$m, the BET specific surface area S was 1786 (m$^2$/g), and the total pore volume V was $1.0 \times 10^{-6}$ (m$^3$/g). (V/S)/R$^3$ of this activated carbon was $6.0 \times 10^8$.

The activated carbon electrode was produced in exactly the same manner as in specific example 4-1. The thickness of the electrode was 36 $\mu$m. Using this activated carbon electrode, an electric double layer capacitor was fabricated in exactly the same manner as in specific example 4-1.

When the AC impedance of the thus fabricated electric double layer capacitor was measured, Z0(20) was 1.2 ohms, Z0(-20) was 1.8 ohms, and 20(-20)/20(20) was 1.5, thus showing a good low-temperature characteristic.

(Comparative example)

Using activated carbon with an average particle size (D50) of 8.9 $\mu$m (tradename MSP20 manufactured by Kansai Coke and Chemicals), an activated carbon electrode was produced in exactly the same manner as in specific example 4-1, but without milling the activated carbon. The BET specific surface area S of the activated carbon was 1872 (m$^2$/g), and the total pore volume V was $1.0 \times 10^{-6}$ (m$^3$/g). (V/S)/R$^3$ of this activated carbon was $7.8 \times 10^5$. The thickness of the electrode was 25 $\mu$m. Using this activated carbon electrode, an electric double layer capacitor was fabricated in exactly the same manner as in specific example 4-1.

When the AC impedance of the thus fabricated electric double layer capacitor was measured, Z0 (20) was 11.9 ohms, Z0 (-20) was 26.8 ohms, and Z0(-20)/Z0(20) was 14.4.

The first to fourth embodiments described above have each shown an electric double layer capacitor that has a high power output characteristic and a high capacitance density, that can be constructed in a compact and thin structure, that comprises a pair of electrode sheets forming an anode and cathode, a separator, and a nonaqueous electrolytic solution, that can achieve a high power output even under low-temperature environments, and that uses polarizable electrodes formed from a porous carbon material.

Next, application examples of the electric double layer capacitor fabricated in accordance with each of the above embodiments will be described below.

[Application example 1]

Application example 1 deals with the way how power can be supplied from the capacitor to various kinds of loads. Specifically, when supplying power from the capacitor, any electric double layer capacitor fabricated in accordance with the above embodiments of the invention can be used as the power supply capacitor.

Examples of methods that can be employed to supply power from the capacitor of the present invention to various kinds of loads are shown below, and a suitable one is selected according to the purpose.

(1) The input/output terminals of the capacitor are connected directly to the load.
(2) The input/output terminals of the capacitor are connected to the load via a current regulating circuit to output a constant current.
(3) The input/output terminals of the capacitor are connected to the load via a voltage regulating circuit to output a constant voltage.

Examples of methods that can be employed for charging the capacitor of the present invention from various power supply sources are shown below, and a suitable one is selected according to the purpose.

(1) The input/output terminals of the capacitor are connected directly to the power supply source.
(2) The input/output terminals of the capacitor are connected to the power supply source via a current regulating circuit to charge the capacitor with a constant current.
(3) The input/output terminals of the capacitor are connected to the power supply source via a voltage regulating circuit to charge the capacitor with a constant voltage.

In the above connection method examples, the charge/discharge timing of the capacitor can be controlled by connecting a suitable switching device between the capacitor (a terminal not connected to the load or the power supply source) and the ground line.

Specific examples of an application circuit that uses the capacitor of the present invention will be described below.

First, a description will be given of a power supply system in which the capacitor of the present invention (including a capacitor constructed by connecting more than one capacitor of the present invention in series) is connected to the output side (secondary side) of a suitable DC voltage regulating circuit (DC/DC converter, AC/DC converter, etc.).

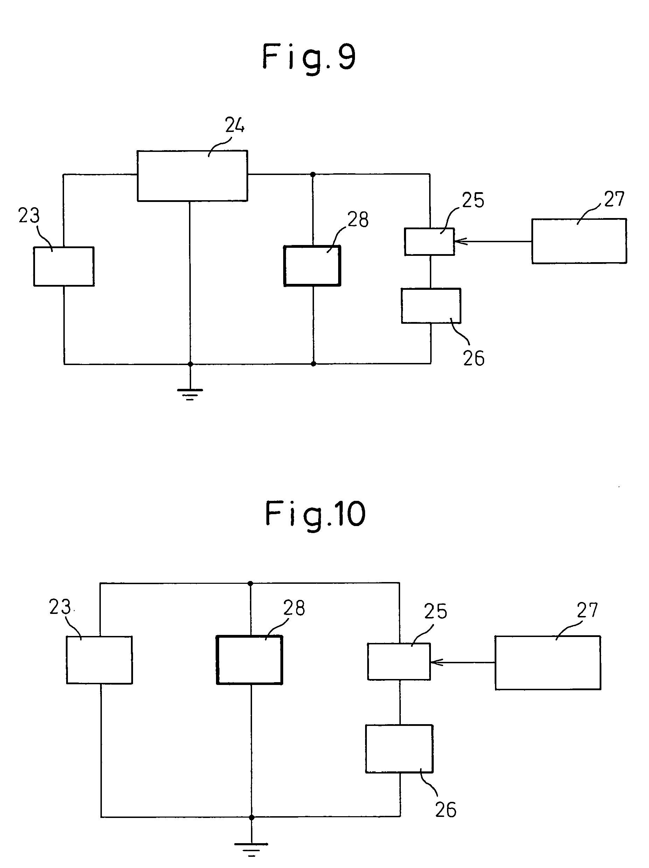

Figure 9 shows one example of the circuit of this power supply system. Reference 23 is a power supply, for example, a 12-V DC power supply, and 24 is a DC/DC converter, for example, a DC/DC converter with an input voltage of 12 V and an output voltage of 5 V (in the illustrated example, a three-terminal regulator). The DC output of the DC/DC converter 24 is coupled to a load 26 via a switching device (for example, an FET) 25 which is controlled by an energization timing control circuit 27. The capacitor 28 of the present invention (in the illustrated example, two capacitors connected in series) is connected on the DC output side of the DC/DC converter 24. The circuit is designed so that the DC output voltage of the DC/DC converter 24 does not exceed the breakdown voltage of the capacitor 28.

Here, there is usually an upper limit to the output current of the voltage regulating circuit, because of its internal circuit structure. Accordingly, if the amount of current that the load (application) requires increases instantaneously and exceeds the upper limit value, the output voltage of the circuit drops significantly, resulting in an inability to supply stable power to the load 26; however, in the power supply system in which the capacitor 28 of the present invention is connected on the output side (secondary side) of the voltage regulating circuit, the capacitor supplies a current in a timely manner to compensate for the increase of the load current, thereby effectively preventing the output voltage from dropping.

This power supply system permits the use of a DC voltage regulating circuit having a specification that allows the upper limit value of the output current to be further reduced; this serves to further reduce the size of the circuit. In addition, because of the thin and small-volume structure that characterizes the capacitor of the present invention, the power supply system as a whole can be reduced significantly in size.

Furthermore, when, for example, the power from the power supply 23 is instantaneously interrupted for some reason (power interruption due to lightning, etc.), the capacitor 28 instantly supplies power to the load, thus avoiding a detrimental effect that an instantaneous power interruption may have.

In this power supply system, the capacitor 28 is automatically charged when the load current is sufficiently lower than the upper limit value of the output current of the voltage regulating circuit 24.

In the case of an AC voltage regulating circuit (DC/AC converter, AC/AC converter, etc.), if the internal circuit is such that the input is at least once regulated at a constant DC voltage level and then converted to an AC voltage for output, the same effect as described above can be obtained by connecting the capacitor of the invention to the load side of this DC voltage regulating circuit. In the above power supply system, for the purpose of reducing the size of the system as a whole, it is preferable to use a voltage regulating circuit whose maximum output power is about 20 W or less, more preferably 10 W or less, still more preferably 5 W or less, and most preferably 2.5 W or less.

Next, a description will be given of the configuration of a power supply system in which the capacitor is directly connected in parallel to a suitable DC power supply. The capacitor is charged by the DC power supply to a prescribed voltage, that is, to the output voltage of the power supply. One example of this power supply system is shown in Figure 10.

The power supply system shown in Figure 10 is similar in configuration to the power supply system shown in Figure 9, and the same parts are designated by the same reference numerals. However, the power supply system shown in Figure 10 differs from that of Figure 9 in that the capacitor 28 is connected in parallel to the power supply (in this case, DC power supply) 23 directly without the invention of the voltage regulating circuit. The capacitor 28 is charged by the power supply 23 to a prescribed voltage, that is, to the output voltage of the power supply 23.

This power supply system configuration is also useful for a power supply system in which a suitable voltage regulating circuit (DC/DC converter, DC/AC converter, etc.) is placed between the load and the capacitor 28 and power supply 23 connected in parallel.

The advantage of these power supply systems is considerable when the power supply is a battery (for example, a fuel cell battery, a dry cell battery, a lithium-ion battery, etc.). In particular, when a large current flows instantaneously due to the temporal variation of the consumption current on the load side, if the power supply were constructed from the battery alone, the output voltage would drop significantly due to the voltage drop defined by the product of the output current and the internal resistance of the battery, but in the system of the invention in which the capacitor is connected in parallel with the battery, the output current of the battery can be reduced due to the superimposition of the output current of the capacitor, and as a result, the power supply voltage drop can be greatly suppressed. Suppression of such voltage drop contributes, for example, to extending the battery life.

In this power supply system also, when, for example, the power from the power supply 23 is instantaneously interrupted for some reason (power interruption due to lightning, etc.), the capacitor 28 instantly supplies power to the load, thus avoiding a detrimental effect that an instantaneous power interruption may have.

A further detailed description will be given below of the operation of the power supply system in which the power supply is constructed by connecting the capacitor in parallel with a suitable kind of battery.

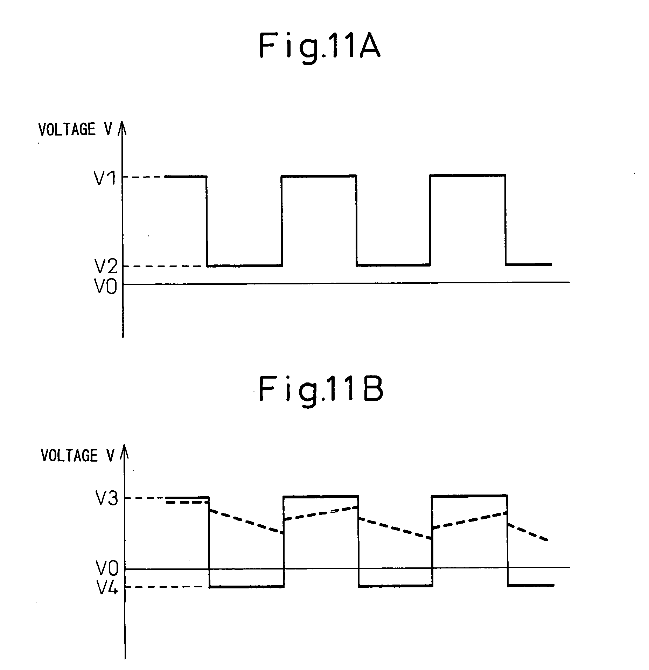

That is, depending on the load, i.e., the device or apparatus to be supplied with power, the supply of power may abruptly increase in an intermittent or pulse-like manner, for example, as will be described in other application examples given herein. In this case, if the power supply system is constructed using only a battery without connecting the capacitor, then when the switching device 25 is turned on and thus conducts, as shown in Figure 11A the supply voltage, which is V1 when the switching device 25 is off and in a nonconducting state, drops to V2 due to the voltage drop defined by the product of the output current and the internal resistance of the battery.

Generally, a power supply system using a battery is designed to monitor the remaining capacity of the battery based on the change of the output voltage and to generate a warning such as "REPLACE BATTERY" when the capacity decreases to a predetermined level. That is, when the monitored value of the supply voltage decreases close to the reference voltage (cutoff voltage) V0, a warning is generated first, and then, when the battery capacity is further used, and the supply voltage drops below V0, a procedure is initiated to terminate the use of the battery (system off).

Figure 11B shows the condition in which the battery is further used and the remaining capacity of the battery has decreased further, causing the supply voltage in the nonconducting period to drop from V1 to V3. In this case, the supply voltage in the conducting period drops from V2 to V4, as shown. Here, when the voltage V4 decreases close to the reference voltage V0, a warning such as "REPLACE BATTERY" is generated (an indicator is displayed on the screen, or a lamp is lighted), and when V4 drops below V0, the battery ceases operating (system off).

On the other hand, as shown by a dashed line, when the capacitor 28 is connected in parallel to the battery 23, the supply voltage V2, V4 in the conducting period increases relatively due to the assisting effect of the output current from the capacitor 28. Here, the increase of V4 results in making V3 lower than when V4 $\leq$ V0 ; this means that a larger battery capacity can be consumed from the beginning to the end of the use of the battery, that is, the battery life can be extended.

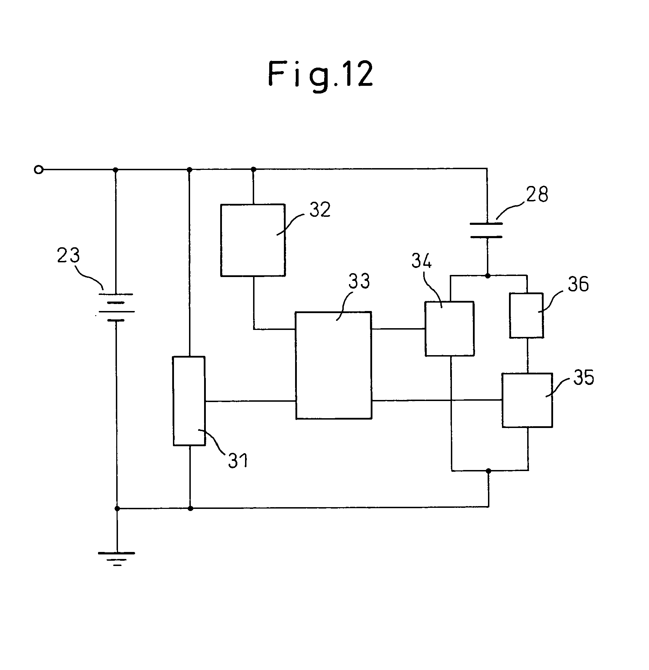

As can be understood from the above explanation, the advantage of the power supply system shown in Figure 10 is most notable when the battery capacity is further consumed and V4 has dropped closer to V0 (the last stage of the battery capacity). This in turn means that there is little value in connecting the capacitor to the battery when the battery capacity is not that low. Rather, considering the power loss within the capacitor associated with charging and discharging and the capacity loss due to self-discharge, it is preferable to not connect the capacitor in parallel to the battery until the battery capacity reaches its last stage. To achieve this, a control circuit, for example, for controlling the charge/discharge timing of the capacitor must be provided. Figure 12 shows a specific example of the control circuit for controlling the charge/discharge timing of the capacitor 28 in the power supply system shown in Figure 10.

The control circuit comprises (a) a supply voltage monitor circuit 32, (b) a reference voltage generating circuit 31, (c) a comparison circuit 33 for making a comparison with the reference voltage, and (d) switching circuits 34 and 35 for controlling the charging/discharging of the capacitor 28.

    (a) The supply voltage monitor circuit 32 is provided, for example, to monitor the supply voltage during the nonconducting period, and includes, for example, a circuit for detecting a maximum value, average value, minimum value, etc. in a predetermined period of time.

    (b) The reference voltage generating circuit 31 includes a circuit for generating the reference voltage which is at least higher than the end-of-life voltage V0 of the battery 23 but is not higher than the breakdown voltage of the capacitor 28. It is more preferable to include a circuit for generating at least two reference voltages, one being a relatively high reference voltage (VH) and the other a relatively low reference voltage (VL).

    (c) The comparison circuit 33 for making a comparison with the reference voltage includes a circuit that compares the voltage monitored by (a) with the reference voltage, and that outputs an OFF signal to the switching circuit 35 when the monitored voltage is higher than the reference voltage VH, an OFF signal to the switching circuit 34 when the monitored voltage is higher than the reference voltage VL, an ON signal to the switching circuit 35 when the monitored voltage is equal to the reference voltage VH, and an ON signal to the switching circuit 34 when the monitored voltage is equal to the reference voltage VL.

    (d) The switching circuits 34 and 35 for controlling the charging/discharging of the capacitor 28 each include a circuit that includes, for example, a variable resistance device and that is switched ON and OFF in accordance with the output of the comparison circuit 33. The switching circuit 35 is provided to control only the initial charge timing for the capacitor 28 to be charged by the battery 23, and has a function that can limit the charge current by a resistor 36, etc. connected in series.

The purpose of limiting the charge current is to suppress the output voltage drop of the battery 23 thereby preventing the supply voltage from dropping to the battery's end-of-life voltage V0 or to the voltage that triggers the "REPLACE BATTERY" warning. On the other hand, the switching circuit 34 controls the timing for actually initiating the operation of the capacitor 28 charged under the control of the switching circuit 35; the charge/discharge current between the capacitor 28 and the load or the battery flows primarily through this circuit.

Accordingly, the switching circuit 34 is preferably a bipolar type that can flow current in both directions, and it is preferable that the ON resistance of the switching device connected in series to the capacitor 28 be made as low as possible. A device, such as a transistor, FET, IGBT, or the like, that has a rated current value larger than a specified value can be used as the switching device.

Though not shown in Figure 12, a method is also preferably used that reduces the series resistance component of the capacitor 28 by separately providing a control circuit which, when the switching circuit 34 is turned on, connects the switching circuit 35 directly to the capacitor 28 without the intervention of the resistor 36.

When providing such a control circuit, preferably provision may be made so that a portion of a processing circuit or device used in a battery monitoring peripheral circuit (such as a remaining capacity monitoring circuit, a charge/ discharge control circuit, a protection circuit, etc.) commonly incorporated in an apparatus in which the battery and capacitor are mounted, or a portion of a processing circuit or device used for other applications in the apparatus, can be used during the processing or as an electrically common circuit or the like.

Such a control circuit is extremely effective in controlling the charge/discharge timing of the capacitor of the present invention, but the control circuit can also be used for capacitors other than the present invention.

[Application example 2]

Application example 2 concerns an example in which the ultra-thin, small-volume capacitor having a high power output characteristic and a high capacitance density according to the present invention is incorporated in a contactless IC card or an RF-IC tag.

Generally, in a contactless IC card or an RF-IC tag, operations such as the processing and recording of various kinds of information and communications with an external device (reader/writer) are performed by a built-in IC while supplying power in a contactless fashion by electromagnetic waves from the external device. Accordingly, it has been difficult to incorporate an active device, such as an image display device, illumination device, speaker, or the like, that requires continuous power supply. To drive such active devices, a charge storage device for storing electrical energy has to be incorporated in the card or the tag, but the following problem has precluded the use of such a charge storage device.

That is, a capacitor would be the best choice as a device capable of quick charging within a short period of a few seconds, but a capacitor has not been available that has such a quick charging capability and yet has a sufficiently small volume or thickness compared with the volume or thickness of the card or tag, and in practice, it has been difficult to incorporate such a capacitor.

To solve this problem, Japanese Unexamined Patent Publication No. 2005-010940, for example, proposes an IC card that incorporates a substantially planar charge storage device by embedding one end face thereof into an opening formed in the uppermost layer of the card, but this does not solve the problem fundamentally.

According to the application example 2, by incorporating the capacitor of the present invention, a contactless IC card or an RF-IC tag capable of active operation (image display, flashing illumination, voice transmission, and electromagnetic transmission) can be achieved.

The mode of the application example 2 will be described in detail below.

The present invention concerns a contactless IC card or an RF-IC tag which incorporates at least a capacitor having an electric capacity of 0.1 mAh or higher and an overall thickness of 2 mm or less, an antenna, and a semiconductor device for processing and storing information, and which includes a system for storing power in the capacitor, the power being transmitted in a contactless fashion by means of an electromagnetic wave from outside the card or tag, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and the value of A in equation (1) below is not smaller than -0.2 or the value of B in equation (2) below is not smaller than 0.8, thus satisfying at least either one of the relations defined by the equations (1) and (2).

$$W \geq 1.5D + A \quad (1)$$

$$W \geq 1.3V + B \quad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour. This value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

Generally, as is well known to those skilled in the art, that as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease; taking into account such variable factors associated with the variation of the thickness or volume of the capacitor, the preferable range defined by the above equation (1) or (2) defines the excellent characteristic of the capacitor of the invention in which both a high volumetric energy density and a high power output characteristic are achieved simultaneously.

Considering the fact that prior known capacitors have not been able to satisfy the preferable range defined by the above equation (1) or (2), the capacitor of the present invention offers enormous potential as the only capacitor that can meet the stringent demands of the market in applications where a high power output characteristic is required along with a high volumetric energy density.

Preferably, the capacitor of the present invention satisfies at least one of the preferable ranges defined by the above equations (1) and (2), but from the standpoint of expanding the range of applications, it is more preferable for the capacitor to satisfy both the preferable range defined by the equation (1) and the preferable range defined by the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor of the present invention as a capacitor having an outer casing shape from which it is difficult to clearly define the capacitor thickness, only the preferable range defined by the above equation (2) is used to define the excellent characteristic of the capacitor of the present invention.

The value of the volumetric energy density W at a discharge rate of 1000C is preferably 0.05 Wh/L or larger, as earlier described, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, in the preferable range defined by the above equation (1), the value of A is preferably at least -0.2, and if a wider range of applications is desired, the value is preferably 0.2 or larger, more preferably 0.5 or larger, still more preferably 1.4 or larger, and most preferably 2 or larger.

On the other hand, in the preferable range defined by the above equation (2), the value of B is preferably 0.8, and if a wider range of applications is desired, the value is more preferably 1.3 or larger, still more preferably 1.8 or larger, and most preferably 2.3 or larger.

In the above equation (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is determined by the sum of the thickness of the electrode element comprising one or more anode/cathode pairs and separators and the thickness of the container itself (the thickness of the container wall), but it may include some dead space (for example, a space containing only an electrolytic solution), if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger, and more preferably 0.3 mm or larger.

The volume (V) of the capacitor is preferably 1 cm$^3$ or less, more preferably 0.7 cm$^3$ or less, still more preferably 0.5 cm$^3$ or less, and most preferably 0.3 cm$^3$ or less. There is no specific limit to how far the volume of the capacitor may be reduced, but from the relationship with the volumes of the electrodes, separator, and container, the practical volume is preferably 0.05 cm$^3$ or larger, and more preferably 0.1 cm$^3$ or larger.

In contactless IC card and RF-IC tag applications, considering the power requirements of various kinds of loads (various kinds of active devices, etc.) it is preferable that the capacitor have an electric capacity of at least 0.1 mAh, more preferably 0.25 mAh or larger, still more preferably 0.5 mAh or larger, and most preferably 1 mAh or larger. The upper limit value of the voltage that can be used with the capacitor is at least 2 V or higher, more preferably 3 V or higher, and still more preferably 4.5 V or higher.

Examples of methods that can be employed to supply power from the capacitor to various kinds of active devices are shown below, and a suitable one is selected according to the purpose.

(1) The terminals of the capacitor are connected directly to the terminals of the active device.
(2) The terminals of the capacitor are connected to the terminals of the active device via a current regulating circuit to output a constant current.
(3) The terminals of the capacitor are connected to the terminals of the active device via a voltage regulating circuit to output a constant voltage.

On the other hand, in one method of charging the capacitor of the present invention by contactless power transmission, the terminals of the capacitor are connected, for example, via an AC/DC converter.

Examples of such active devices preferably include LEDs, LCDs, various kinds of electronic paper, speakers (oscillating devices), and electromagnetic wave transmitting devices (coils, antennas, etc.).

The capacitor of the present invention that can be advantageously used in an IC card or an RF-IC tag will be described in detail below.

For both the anode and cathode of the capacitor, it is preferable to use activated carbon whose specific surface area, as measured by the BET method, is 500 $m^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 $m^2$/g but not larger than 2500 $m^2$/g, and more preferably not smaller than 1000 $m^2$/g but not larger than 2500 $m^2$/g. A specific surface area smaller than 500 $m^2$/g or larger than 2500 $m^2$/g is not desirable, because in that case, a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. In this patent specification, the "average particle size" refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, and various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size that falls within the preferable range according to the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape.

The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/cm$^3$ or higher for both the anode and cathode of the capacitor of the present invention, more preferably 15 F/cm$^3$ or higher, still more preferably 18 F/cm$^3$ or higher, and most preferably 21 F/cm$^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 μm or less, more preferably 25 μm or less, and most preferably 20 μm or less.

For the anode and cathode, it is preferable to use an electrode structure that does not develop visible surface defects (such as cracking, delamination, etc.) when subjected to a 4-mm radius bending test. Such an electrode structure is advantageously used, for example, when achieving a thinner capacitor; the structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 μm, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and matters such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 μm or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, an electrode thickness exceeding the above upper limit is not desirable, because it would then become difficult to obtain a desired output characteristic.

The electrode thickness is preferably 60 μm or less, as described above, but from the standpoint of achieving higher 1000C discharge efficiency or higher output efficiency even at a current output greater than 1000C, the electrode thickness is more preferably 50 μm or less, and still more preferably 40 μm or less; in particular, for the purpose of achieving a particularly excellent output characteristic at low temperatures of 0°C or below, an electrode thickness of 30 μm or less is most preferable.

There is no specific limit to how far the electrode thickness may be reduced, but the thickness that can be used in practice is about 5 μm or greater. However, as the electrode thickness decreases, it becomes more difficult to achieve a high volumetric energy density for the capacitor; therefore, the electrode thickness is preferably not smaller than 10 μm, and more preferably not smaller than 15 μm.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 μm, the thickness of the separator is preferably 50 μm or less, and when the electrode thickness is 20 μm, the thickness of the separator is preferably 100 μm or less.

Further, for the purpose of achieving a higher volumetric energy density or higher output characteristic, the thickness of the separator is preferably 80 μm or less, more preferably 60 μm or less, still more preferably 40 μm or less, and most preferably 20 μm or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 μm, and more preferably not smaller than 10 μm.

Further preferably, the separator has a porosity of 30 to 80%, a permeability of 5 to 300 seconds/100 cc (JIS P8117), and an average internal pore size of 0.01 to 5 $\mu$m. Here, the porosity is calculated from the following equation.

$$\texttt{Porosity (\%) = (1-d_f/d_0) \times 100}$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator' volume per unit area (cm$^3$/cm$^3$) .

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. The average internal pore size here is computed by performing image processing on a cross-sectional photograph taken through an SEM. The average internal pore size smaller than the lower limit value is not desirable, because the ion conductivity of the electrolyte would significantly drop. The average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 cc, and more preferably 10 to 100 seconds/100 cc.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as LiPF$_6$, LiBF$_4$, etc. For the solvent for dissolving the electrolyte, use may be made of propylene carbonate, ethylene carbonate, diethyl carbonate, dimethyl carbonate, methylethyl carbonate, dimethoxyethane, $\gamma$-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/L is preferable.

The electric conductivity at 25°C of the electrolytic solution is preferably $1 \times 10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 2-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (hereinafter called the common electrode terminal) is electrically connected to the corresponding terminal of the other cell so that a higher voltage output can be taken between the other two electrode terminals.

In the latter structure, it is also preferable to fold the common electrode terminals over the capacitor cell structure and then package the entire structure comprising the plurality of cells in a thin laminated film (for example, a heat shrinkable film), thereby holding the cells in an integral fashion as shown.

[Specific fabrication examples of capacitor]

Specific fabrication examples of the capacitor suitable for incorporation in a contactless IC card or an RF-IC tag according to the present invention will be shown below. In the fabrication examples, the measurement of each item was performed in the following manner.

(1) Particle size distribution (average particle size):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 cm$^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from arbitrarily selected 10 points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from arbitrarily selected five points on the sample, and their average value was taken as the measured value.

(5) Capacitance density of activated carbon:

An evaluation cell having electrodes each measuring 20 mm $\times$ 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.

Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density (F/cm$^3$) per unit volume of the electrode layer was calculated by dividing the capacitance (F) of the evaluation cell by the total volume of the two electrode layers.

[Capacitor fabrication example 2-1]

RP-20 manufactured by Kuraray Chemical was used as the activated carbon. The BET specific surface area of this activated carbon was about 1450 m$^2$/g, the average particle size was about 7 $\mu$m, and the capacitance density was about 28 F/g. 77 parts by weight of the activated carbon, 6 parts by weight of acetylene black, 17 parts by weight of polyvinylidene fluoride, and 225 parts by weight of N-methylpyrrolidone were mixed to produce a slurry. A conductive adhesive (EB-815 manufactured by Acheson (Japan)) using a polyamide-based thermosetting resin as the binder was applied over one surface of a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

The slurry was applied over the surface of the current collector on which the conductive adhesive layer was formed, and the structure was dried by heating and pressed to produce an electrode having an electrode thickness of 50 $\mu$m (excluding the thickness of the current collector). The capacitance density of the thus produced electrode was about 15.3 F/cm$^3$.

The electrode was subjected to a 4-mm radius bending test, but no surface detects visible to the naked eye were observed.

The thus produced electrode was cut to form a pair of anode and cathode electrodes; then, using a separator formed from 40-$\mu$m thick cellulose paper (TF-40 manufactured by Nippon Kodoshi Corporation), an electrolytic solution prepared by dissolving triethylmethylammonium·BF$^4$ in propylene carbonate at a concentration of 1.5 mol/l, and a container formed from a 150-$\mu$m thick aluminum/resin laminated film, a capacitor was fabricated in the following manner. That is, the electrode forming the cathode (with its electrode surface facing the separator), the separator, and the electrode forming the anode (with its electrode surface facing the separator) were stacked in this order, and the stack was impregnated with the electrolytic solution; the stack was then placed into the outer casing formed from the aluminum/ resin laminated film, and was vacuum-sealed.

Here, the anode/cathode size (the portion where the electrode was formed) was 14 mm $\times$ 20 mm, and the other portion of the current collector where the electrode was not formed was formed as a terminal lead portion. The size of the separator was 16 $\times$ 22 mm, the size of the container formed from the aluminum/resin laminated film was 18 mm $\times$ 28 mm, and the size of the seal portion was about 18 mm $\times$ 4 mm.

The capacitor was charged at a constant current and a constant voltage for 10 minutes, that is, the capacitor was first charged up to 2.5 V at a current of 0.3 mA, and then a constant voltage of 2.5 V was applied. After that, the capacitor was discharged at a constant current of 0.3 mA until the voltage decreased to 0 V. The discharge capacity (1C discharge capacity) obtained from the discharge curve was about 0.293 mAh, and the discharged energy was about 0.366 mWh.

Further, after fully charging the capacitor in the same manner as described above, when the capacity was measured under a constant discharge current of 300 mA (1000C) it was found that the capacitor retained a capacity about 81% of the 1C discharge capacity (the 1000C discharge efficiency was 81%), and that the energy when discharged at 1000C was about 0.24 mWh.

Since the overall thickness (D) of the capacitor was about 0.49 mm, and the volume (V) was about 0.24 cm$^3$, the volumetric energy density (W) of the capacitor when discharged at 1000C was about 1 Wh/L. Here, the value of A in the equation (1) was 0.27, which was within the preferable range defined for the capacitor according to the present invention; this shows that a capacitor having a high power output characteristic and a high volumetric energy density was achieved. On the other hand, the value of B in the equation (2) was 0.69, which was outside the preferable range.

[Capacitor fabrication example 2-2]

MSP-20 manufactured by Kansai Coke and Chemicals was used as the activated carbon, and the activated carbon was milled for 50 hours by a bead mill using 2-mm diameter zirconia beads, to obtain activated carbon with an average particle size of 2.9 $\mu$m. The BET specific surface area of the thus obtained activated carbon was about 2310 m$^2$/g, and the capacitance density was about 42 F/g. 93 parts by weight of the activated carbon, 7 parts by weight of Ketjen black, 17 parts by weight of polyvinylidene fluoride, 4 parts by weight of polyvinyl pyrrolidone, and 300 parts by weight of N-methylpyrrolidone were mixed to produce a slurry.

Using the above slurry and a current collector similar to that used in fabrication example 2-1, an electrode having an electrode thickness of 15 $\mu$m (excluding the thickness of the current collector) was produced by the same method as that used in fabrication example 2-1.

The capacitance density of the thus produced electrode was about 19.3 F/cm$^3$.

The electrode was subjected to a 4-mm radius bending test, but no surface detects visible to the naked eye were observed.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 $\mu$m. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/ 100 cc (JIS P8117).

Using the thus produced electrode and the separator, the capacitor according to the present invention was fabricated.

The capacitor was charged at a constant current and a constant voltage for 10 minutes, that is, the capacitor was first charged up to 2.5 V at a current of 0.12 mA, and then a constant voltage of 2.5 V was applied. After that, the capacitor was discharged at a constant current of 0.12 mA until the voltage decreased to 0 V. The discharge capacity (1C discharge capacity) obtained from the discharge curve was about 0.119 mAh, and the discharged energy was about 0.149 mWh.

Further, after fully charging the capacitor in the same manner as described above, when the capacity was measured under a constant discharge current of 120 mA (1000C) it was found that the capacitor retained a capacity about 91% of the 1C discharge capacity (the 1000C discharge efficiency was 91%), and that the energy when discharged at 1000C was about 0.123 mWh.

Since the overall thickness (D) of the capacitor was about 0.39 mm, and the volume (V) was about 0.2 cm$^3$, the volumetric energy density of the capacitor when discharged at 1000C was about 0.62 Wh/L. Here, the value of A in the equation (1) was 0.04, which was within the preferable range defined for the capacitor according to the present invention; this shows that a capacitor having a high power output characteristic and a high volumetric energy density was achieved. On the other hand, the value of B in the equation (2) was 0.36, which was outside the preferable range.

[Capacitor fabrication example 2-3]

Using the same slurry and current collector as those in the above fabrication example 2-2, an electrode having an electrode thickness of 21 $\mu$m (excluding the thickness of the current collector) was produced in a similar manner. In this example, however, two kinds of electrodes were produced, one with the electrode formed on both sides (in this case, conductive adhesive layers were formed on both sides of the current collector) and the other with the electrode formed only on one side.

The electrode was subjected to a 4-mm radius bending test, but no surface detects visible to the naked eye were observed.

The thus produced electrode with the electrode formed on one side or on both sides of the current collector was cut to form anode and cathode electrodes; then, using a separator formed from an 11-$\mu$m thick polymetaphenylene isophthalamide porous film, the same one as that used in fabrication example 2-2, an electrolytic solution prepared by dissolving triethylmethylammonium·BF$^4$ in propylene carbonate at a concentration of 1.5 mol/l, and a container formed from a 150-$\mu$m thick aluminum/resin laminated film, a capacitor was fabricated in the following manner. That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed into the aluminum laminated film container preformed in a bag-like shape, the electrolytic solution was vacuum-injected, and the cell was sealed, completing the fabrication of a stacked capacitor comprising a stack of four anode/cathode pairs. Here, the current collectors of the same polarity were connected to each other by ultrasonic welding at their electrode lead portions, and the anode and cathode terminals were brought outside the capacitor.

Here, as in fabrication example 2-1, the anode/cathode size (the portion where the electrode was formed) was 14 mm × 20 mm, the size of the separator was 16 × 22 mm, the size of the container was 18 mm × 28 mm, and the size of the seal portion was about 18 mm × 4 mm.

The capacitor was charged at a constant current and a constant voltage for 10 minutes, that is, the capacitor was first charged up to 2.5 V at a current of 0.66 mA, and then a constant voltage of 2.5 V was applied. After that, the capacitor was discharged at a constant current of 0.66 mA until the voltage decreased to 0 V. The discharge capacity (1C discharge capacity) obtained from the discharge curve was about 0.662 mAh, and the discharged energy was about 0.828 mWh.

Further, after fully charging the capacitor in the same manner as described above, when the capacity was measured under a constant discharge current of 660 mA (1000C), it was found that the capacitor retained a capacity about 85% of the 1C discharge capacity (the 1000C discharge efficiency was 85%), and that the energy when discharged at 1000C was about 0.6 mWh.

Since the overall thickness (D) of the capacitor was about 0.63 mm, and the volume (V) was about 0.32 cm$^3$, the volumetric energy density of the capacitor when discharged at 1000C was about 1.9 Wh/L.

Here, the value of A in the equation (1) was 0.95, and the value of B in the equation (2) was 1.48, both falling within the preferable range defined in the present invention. This shows that a capacitor having a high power output characteristic and a high volumetric energy density was achieved.

[Capacitor fabrication example 2-4]

Using the same single-sided electrode and separator as those in the above fabrication example 2-3, a capacitor was fabricated in the same manner as in fabrication example 2-1, except that the electrode size was 28 mm × 40 mm, the separator size was 30 mm × 42 mm, and the aluminum/resin laminated film size was 32 mm × 48 mm.

The capacitor was charged at a constant current and a constant voltage for 10 minutes, that is, the capacitor was first charged up to 2.5 V at a current of 0.67 mA, and then a constant voltage of 2.5 V was applied. After that, the capacitor was discharged at a constant current of 0.67 mA until the voltage decreased to 0 V. The discharge capacity (1C discharge capacity) obtained from the discharge curve was about 0.67 mAh, and the discharged energy was about 0.84 mWh.

Further, after fully charging the capacitor in the same manner as described above, when the capacity was measured under a constant discharge current of 670 mA (1000C), it was found that the capacitor retained a capacity about 87% of the 1C discharge capacity (the 1000C discharge efficiency was 87%), and that the energy when discharged at 1000C was about 0.64 mWh.

Since the overall thickness (D) of the capacitor was about 0.4 mm, and the volume (V) was about 0.61 cm$^3$, the volumetric energy density of the capacitor when discharged at 1000C was about 1.05 Wh/L.

Here, the value of A in the equation (1) was 0.45, which was within the preferable range defined for the capacitor according to the present invention; this shows that a capacitor having a high power output characteristic and a high volumetric energy density was achieved. On the other hand, the value of B in the equation (2) was 0.26, which was outside the preferable range.

[Capacitor fabrication example 2-5]

MSP-20 manufactured by Kansai Coke and Chemicals was dispersed in a solvent, and was milled for 75 minutes by a bead mill using 2-mm diameter zirconia beads. Dimethylacetamide was used as the solvent. Activated carbon with an average particle size of 0.7 $\mu$m was thus obtained. The BET specific surface area of the thus obtained activated carbon was about 1760 m$^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A current collector similar to that used in the above fabrication example 2-1 was also used here.

The slurry was applied over the surface of the current collector on which the conductive layer was formed, and the structure was dried by heating and pressed to produce an electrode having an electrode thickness of 25 $\mu$m (excluding the thickness of the current collector).

The capacitance density of the thus produced electrode was about 18.2 F/cm$^3$.

The electrode was subjected to a 4-mm radius bending test, but no surface detects visible to the naked eye were observed.

Using the thus produced electrode and the same separator as that used in the above fabrication example 2, a capacitor was fabricated in the same manner as in the above fabrication example 1.

The capacitor was charged at a constant current and a constant voltage for 10 minutes, that is, the capacitor was first charged up to 2.5 V at a current of 0.18 mA, and then a constant voltage of 2.5 V was applied. After that, the capacitor was discharged at a constant current of 0.18 mA until the voltage decreased to 0 V. The discharge capacity (1C discharge capacity) obtained from the discharge curve was about 0.177 mAh, and the discharged energy was about 0.221 mWh.

Further, after fully charging the capacitor in the same manner as described above, when the capacity was measured under a constant discharge current of 180 mA (1000C), it was found that the capacitor retained a capacity about 92% of the 1C discharge capacity (the 1000C discharge efficiency was 92%), and that the energy when discharged at 1000C was about 0.187 mWh.

Here, the value of A in the equation (1) was 0.28, which was within the preferable range defined for the capacitor according to the present invention; this shows that a capacitor having a high power output characteristic and a high volumetric energy density was achieved. On the other hand, the value of B in the equation (2) was 0.62, which was outside the preferable range.

[Capacitor fabrication example 2-6]

Using the same activated carbon and slurry as those in the above fabrication example 2-5, an electrode having a thickness of 40 $\mu$m (excluding the thickness of the current collector) was fabricated. In this example, however, two kinds of electrodes were produced, one with the electrode formed on both sides of the current collector (in this case, conductive adhesive layers were also formed on both sides) and the other with the electrode formed only on one side, as in the above fabrication example 3.

The capacitance density of the thus produced electrode was about 18.0 F/cm$^3$.

The electrode was subjected to a 4-mm radius bending test, but no surface detects visible to the naked eye were observed.

Using the thus produced electrode and the same separator as that used in fabrication example 2-2, a stacked capacitor comprising a stack of four anode/cathode pairs was fabricated in the same manner as in fabrication example 2-3.

The capacitor was charged at a constant current and a constant voltage for 10 minutes, that is, the capacitor was first charged up to 2.5 V at a current of 1.1 mA, and then a constant voltage of 2.5 V was applied. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor in the same manner as described above, when the capacity was measured under a constant discharge current of 1120 mA (1000C), it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 cm$^3$, the energy density of the capacitor when discharged at 1000C was about 2.55 Wh/L.

Here, the value of A in the equation (1) was 1.47, and the value of B in the equation (2) was 2.08, both falling within the preferable range. This shows that a capacitor having a high power output characteristic and a high volumetric energy density was achieved.

[Capacitor fabrication example 2-7]

Electrodes and separators similar to those used in the above fabrication example 2-6 were used here. A component A having a size of 14 mm × 20 mm was produced by forming an electrode layer only on one side, a component B having a size of 14 mm × 20 mm was produced by forming electrode layers on both sides, and a component C having an electrode layer size of 14 mm × 20 mm and a component size of 18 mm × 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in the first embodiment, and aluminum/resin laminated films, each having a thickness of 150 $\mu$m and measuring 18 mm × 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C), it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range. This shows that a capacitor having a high power output characteristic and a high volumetric energy density was achieved.

[Capacitor fabrication example 2-8]

Using the same single-sided electrode and separator as those in the above fabrication example 2-3, a capacitor was fabricated in the same manner as in fabrication example 2-1, except that a 80-$\mu$m thick aluminum/resin laminated film was used instead of the 150-$\mu$m thick aluminum/resin laminated film.

The capacitor was charged at a constant current and a constant voltage for 10 minutes, that is, the capacitor was first charged up to 2.5 V at a current of 0.17 mA, and then a constant voltage of 2.5 V was applied. After that, the capacitor was discharged at a constant current of 0.66 mA until the voltage decreased to 0 V. The discharge capacity (1C discharge capacity) obtained from the discharge curve was about 0.168 mAh, and the discharged energy was about 0.21 mWh.

Further, after fully charging the capacitor in the same manner as described above, when the capacity was measured under a constant discharge current of 170 mA (1000C), it was found that the capacitor retained a capacity about 87% of the 1C discharge capacity (the 1000C discharge efficiency was 85%), and that the energy when discharged at 1000C was about 0.159 mWh.

Since the overall thickness (D) of the capacitor was about 0.26 mm, and the volume (V) was about 0.13 cm$^3$, the volumetric energy density of the capacitor when discharged at 1000C was about 1.2 Wh/L.

Here, the value of A in the equation (1) was 0.81, and the value of B in the equation (2) was 1.03, both falling within the preferable range. This shows that a capacitor having a high power output characteristic and a high volumetric energy density was achieved.

(Capacitor comparative example 2-1)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.04 F. The overall thickness (D) of the capacitor was about 2 mm, and the volume (V) was about 1.8 cm$^3$; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Capacitor comparative example 2-2)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm$^3$; assuming a full charge voltage of 3.6 V, the energy density of the capacitor when discharged at 1000C was 0.61 Wh/L. Here, the value of B in the equation (2) was -0.82, which was outside the preferable range. Accordingly, the capacitor of this example would not be adequate as a capacitor that can simultaneously achieve a high power output characteristic and a high volumetric energy density.

[Application example 3]

Application example 3 concerns an example in which the capacitor of the present invention is applied to various kinds of photo or video image capturing devices, and more particularly an example in which the ultra-thin and/or small-volume capacitor having a high power output characteristic and a high capacitance density is incorporated in such an image capturing device.

According to the application example 3, by incorporating the capacitor of the present invention, the power burden of the main battery of the image capturing device can be greatly reduced, serving to extend the continuous operation time of the battery, while at the same time, achieving size reduction of the power supply system.

The mode of the application example 3 will be described in detail below.

The application example 3 concerns an image capturing device which incorporates a capacitor having an electric capacity of 0.1 mAh or higher, and in which at least a portion of power to a load is supplied from the capacitor, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and at least either the condition that the value of A in equation (1) below not be smaller than -0.2 or the condition that the value of B in equation (2) below not be smaller than 0.8 is satisfied.

$$W \geq 1.5D + A \quad (1)$$

$$W \geq 1.3V + B \quad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour; this value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

Generally, as is well known to those skilled in the art, as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease; taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously.

Considering the fact that prior known capacitors have not been able to satisfy the preferable range of the value of A or B, the capacitor of the present invention offers an enormous potential as the only capacitor that can meet the stringent demands from the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor of the present invention as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as described earlier, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equations (1) and (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is determined by the sum of the thickness of the electrode element comprising one or more anode/cathode pairs and separators and the thickness of the container itself (the thickness of the container wall), but it may include some dead space (for example, a space containing only an electrolytic solution), if necessary.

More strictly, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger, and more preferably 0.3 mm or larger.

The volume (V) of the capacitor is preferably 1 cm$^3$ or less, more preferably 0.7 cm$^3$ or less, still more preferably 0.5 cm$^3$ or less, and most preferably 0.3 cm$^3$ or less. There is no specific limit to how far the volume of the capacitor may be reduced, but from the relationship with the volumes of the electrodes, separator, and container, the practical volume is preferably 0.05 cm$^3$ or larger, and more preferably 0.1 cm$^3$ or larger.

Considering the power requirements of the various kinds of loads in the image capturing device, it is preferable that the capacitor have an electric capacity of about 0.1 mAh or larger, more preferably 0.25 mAh or larger, still more preferably 0.5 mAh or larger, and most preferably 1 mAh or larger. The upper limit value of the voltage that can be used is at least 2 V or higher, more preferably 3 V or higher, and still more preferably 4.5 V or higher.

Examples of methods that can be employed to supply power from the capacitor of the present invention to the various kinds of loads are shown below, and a suitable one is selected according to the purpose.

(1) The input/output terminals of the capacitor are connected directly to the load.

(2) The input/output terminals of the capacitor are connected to the load via a current regulating circuit to output a constant current.

(3) The input/output terminals of the capacitor are connected to the load via a voltage regulating circuit to output a constant voltage.

Examples of methods that can be employed for charging the capacitor of the present invention from various power supply sources are shown below, and a suitable one is selected according to the purpose.

(1) The input/output terminals of the capacitor are connected directly to the power supply source.

(2) The input/output terminals of the capacitor are connected to the power supply source via a current regulating circuit to charge the capacitor with a constant current.

(3) The input/output terminals of the capacitor are connected to the power supply source via a voltage regulating circuit to charge the capacitor with a constant voltage.

In the above connection method examples, the charge/discharge timing of the capacitor can be controlled by connecting a suitable switching device between the capacitor (a terminal not connected to the load or the power supply source) and the ground line.

Specific examples of an application circuit that uses the capacitor of the present invention will be described below.

First, a description will be given of a power supply system in which the capacitor of the present invention (including a capacitor constructed by connecting more than one capacitor of the present invention in series) is connected to the output side (secondary side) of a suitable DC voltage regulating circuit (DC/DC converter, AC/DC converter, etc.).

Of the methods for charging the capacitor from various power supply sources, the power supply system that employs the method (3) in which the capacitor is connected to the output side (secondary side) of the DC voltage regulating circuit (DC/DC converter, AC/DC converter, etc.) is extremely useful in practical applications.

Here, there is usually an upper limit to the output current of the voltage regulating circuit because of its internal circuit structure. Accordingly, if the amount of current that the load (application) requires increases instantaneously and exceeds the upper limit value, the output voltage of the circuit significantly drops, resulting in an inability to supply stable power to the load; however, in the power supply system in which the capacitor of the present invention is connected on the output side (secondary side) of the voltage regulating circuit, the capacitor supplies a current in a timely manner to compensate for the increase of the load current, thereby effectively preventing the output voltage from dropping.

In this power supply system, the capacitor is automatically charged when the load current is sufficiently lower than the upper limit value of the output current of the voltage regulating circuit.

This power supply system permits the use of a DC voltage regulating circuit having a specification that allows the upper limit value of the output current to be further reduced; this serves to further reduce the size of the circuit. In addition, because of the thin and small-volume structure that characterizes the capacitor of the present invention, the power supply system as a whole can be significantly reduced in size.

In the case of an AC voltage regulating circuit (DC/AC converter, AC/AC converter, etc.), if the internal circuit is such that the input is at least once regulated at a constant DC voltage level and then converted to an AC voltage for output, the same effect as described above can be obtained by connecting the capacitor of the invention to the load side of this DC voltage regulating circuit. In the above power supply system, for the purpose of reducing the size of the system as a whole, it is preferable to use a voltage regulating circuit whose maximum output power is about 20 W or less, more preferably 10 W or less, still more preferably 5 W or less, and most preferably 2.5 W or less.

Next, a description will be given of the configuration of a power supply system in which the input/output terminals of the capacitor are directly connected in parallel to a suitable power supply. The capacitor is charged by the power supply to a prescribed voltage, that is, to the output voltage of the power supply.

The advantage of this power supply system is considerable when the power supply is a battery (for example, a fuel cell battery, a dry cell battery, a lithium-ion battery, etc.). In particular, when a large current flows instantaneously due to the temporal variation of the consumption current on the load side, if the power supply were constructed from the battery alone, the output voltage would significantly drop due to the voltage drop defined by the product of the output current and the internal resistance of the battery, but in the system of the invention in which the capacitor is connected in parallel with the battery, the output current of the battery can be reduced due to the superimposition of the output current of the capacitor, and as a result, the power supply voltage drop can be greatly suppressed. Suppression of such voltage drop contributes, for example, to extending the battery life.

Next, a description will be given of a power supply system in which the input/output terminals of the capacitor are connected to the load via a voltage regulating circuit. In this system, the input side (primary side) of the voltage regulating circuit must be a DC input, but the output side (secondary side) may be either DC or AC. The capacitor may be used by itself on the input side, but a power supply system in which a suitable battery (primary or secondary battery, etc.) is connected in parallel with the capacitor on the input side is also preferable. In this power supply system, as in the earlier described power supply system, when the input current to the voltage regulating circuit increases instantaneously due, for example, to the temporal variation of the consumption current on the load side, the output current of the capacitor is superimposed on the output current of the battery, and the voltage drop of the power supply can thus be suppressed.

For the convenience of portability, the volume of the image capturing device of the present invention is preferably 30000 cm$^3$ or less, more preferably 10000 cm$^3$ or less, still more preferably 1000 cm$^3$ or less, and most preferably 100 cm$^3$ or less.

The capacitor used in the image capturing device of the present invention will be described in detail below.

For both the anode and cathode of the capacitor, it is preferable to use activated carbon whose specific surface area, as measured by the BET method, is 500 m$^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 m$^2$/g but not larger than 2500 m$^2$/g, and more preferably not smaller than 1000 m$^2$/g but not larger than 2500 m$^2$/g. A specific surface area smaller than 500 m$^2$/g or larger than 2500 m$^2$/g is not desirable, because in that case a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. In this patent specification, the "average particle size" refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size that falls within the preferable range according to the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one side or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/cm$^3$ or higher for both the anode and cathode of the present invention, more preferably 15 F/cm$^3$ or higher, still more preferably 18 F/cm$^3$ or higher, and most preferably 21 F/cm$^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 $\mu$m or less, more preferably 25 $\mu$m or less, and most preferably 20 $\mu$m or less.

For the anode and cathode, it is preferable to use an electrode structure that does not develop visible surface defects (such as cracking, delamination, etc.) when subjected to a 4-mm radius bending test. Such an electrode structure is advantageously used, for example, when achieving a thinner capacitor; the structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 $\mu$m, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and matters such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 $\mu$m or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, the electrode thickness exceeding the above upper limit is not desirable, because it would then become difficult to obtain a desired output characteristic.

The electrode thickness is preferably 60 $\mu$m or less, as described above, but from the standpoint of achieving higher 1000C discharge efficiency or higher output efficiency even at a current output greater than 1000C, the electrode thickness is more preferably 50 $\mu$m or less, and still more preferably 40 $\mu$m or less; in particular, for the purpose of achieving a particularly excellent output characteristic at low temperatures of 0°C or below, an electrode thickness of 30 $\mu$m or less is most preferable.

There is no specific limit to how far the electrode thickness may be reduced, but the thickness that can be used in practice is about 5 $\mu$m or greater. However, as the electrode thickness decreases, it becomes more difficult to achieve a high volumetric energy density for the capacitor; therefore, the electrode thickness is preferably not smaller than 10 $\mu$m, and more preferably not smaller than 15 $\mu$m.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 $\mu$m, the thickness of the separator is preferably 50 $\mu$m or less, and when the electrode thickness is 20 $\mu$m, the thickness of the separator is preferably 100 $\mu$m or less.

Further, for the purpose of achieving a higher volumetric energy density or higher output characteristic, the thickness of the separator is preferably 80 $\mu$m or less, more preferably 60 $\mu$m or less, still more preferably 40 $\mu$m or less, and most preferably 20 $\mu$m or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 $\mu$m, and more preferably not smaller than 10 $\mu$m.

Further preferably, the separator has a porosity of 30 to 80%, a permeability of 5 to 300 seconds/100 cc (JIS P8117), and an average internal pore size of 0.01 to 5 $\mu$m. Here, the porosity is calculated from the following equation.

$$\texttt{Porosity (\%) = (1-d}_\texttt{f}\texttt{/d}_\texttt{0}\texttt{) × 100}$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator's volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. In this patent specification, the average internal pore size is computed by performing image processing on a cross-sectional photograph taken through an SEM. An average internal pore size smaller than the lower limit value is not desirable, because the ion conductivity of the electrolyte would significantly drop. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 ml, and more preferably 10 to 100 seconds/100 ml.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as LiPF$_6$, LiBF$_4$, etc. For the solvent for dissolving the electrolyte, use may be made of propylene carbonate, ethylene carbonate, diethyl carbonate, dimethyl carbonate, methylethyl carbonate, dimethoxyethane, $\gamma$-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/L is preferable.

The electric conductivity at 25°C of the electrolytic solution is preferably 1x10$^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 3-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (hereinafter called the common electrode terminal) is electrically connected to the corresponding terminal of the other cell so that a higher voltage output can be taken between the other two electrode terminals.

In the later structure, it is also preferable to fold the common electrode terminals over the capacitor cell structure and then package the entire structure comprising the plurality of cells in a thin laminated film (for example, a heat shrinkable film), thereby holding the cells in an integral fashion as shown.

[Fabrication examples of capacitor]

Specific fabrication examples of the capacitor of the second embodiment that can be used advantageously in the present invention will be shown below. In the fabrication examples, the measurement of each item was performed in the following manner.

(1) Particle size distribution (average particle size):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 $cm^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from arbitrarily selected 10 points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from five arbitrarily selected points on the sample, and their average value was taken as the measured value.

(5) Capacitance density of activated carbon:

An evaluation cell having electrodes each measuring 20 mm × 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.

Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density (F/cm$^3$) per unit volume of the electrode layer was calculated by dividing the capacitance (F) of the evaluation cell by the total volume of the two electrode layers.

[Capacitor fabrication example 3-1]

MSP-20 manufactured by Kansai Coke and Chemicals was used as the carbon black, and the carbon black dispersed in a solvent was milled for 75 minutes by a bead mill using 2-mm diameter zirconia beads. Dimethylacetamide was used as the solvent. Activated carbon with an average particle size of 0.7 μm was thus obtained. The BET specific surface area of the thus obtained activated carbon was about 1760 m$^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A conductive adhesive (EB-815 manufactured by Acheson (Japan)) using a polyamide-based thermosetting resin as the binder was applied over a 20-μm thick aluminum foil (manufactured by Nippon Foil Mfg. Co., Ltd.), and then dried and heat-treated to form a 2-μm thick conductive adhesive layer thereon; the resultant structure was used as a current collector.

Then, the slurry was applied over the current collector on which the conductive adhesive layer was formed, and the structure was dried by heating and pressed to produce an electrode having an electrode thickness of 40 μm (excluding the thickness of the current collector).

The capacitance density of the thus produced electrode was about 18.0 F/cm$^3$; the electrode was subjected to a 4-mm radius bending test, but no surface detects visible to the naked eye were observed.

Here, two kinds of electrodes were produced, one with the conductive adhesive layer and electrode layer formed on both sides of the current collector and the other with these layers formed only on one side.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 μm. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 μm, a porosity of 62%, an average internal pore size of 0.4 μm, and a permeability of 18 seconds/ 100 ml (JIS P8117).

Using this separator and the two kinds of electrodes each cut to a prescribed size, and also using an electrolytic solution prepared by dissolving triethylmethylammonium·BF$^4$ in propylene carbonate at a concentration of 1.5 mol/l and a container formed from a 150-μm thick aluminum/resin laminated film, a capacitor was fabricated in the following manner.

That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed into the aluminum laminated film container preformed in a bag-like shape, the electrolytic solution was vacuum-injected, and the cell was sealed, completing the fabrication of a stacked capacitor comprising a stack of four anode/cathode pairs.

Here, the current collectors of the same polarity were connected to each other by ultrasonic welding at their electrode lead portions, and the anode and cathode terminals were brought outside the capacitor.

Here, as in fabrication example 1, the anode/cathode size (the portion where the electrode was formed) was 14 mm × 20 mm, the size of the separator was 16 × 22 mm, the size of the container was 18 mm × 28 mm, and the size of the seal portion was about 18 mm × 4 mm.

The capacitor was charged at a constant current and a constant voltage for 10 minutes, that is, the capacitor was first charged up to 2.5 V at a current of 1.1 mA, and then a constant voltage of 2.5 V was applied. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor in the same manner as described above, when the capacity was measured under a constant discharge current of 1120 mA (1000C), it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 cm$^3$, the energy density of the capacitor when discharged at 1000C was about 2.55 Wh/L.

Here, the value of A in the equation (1) was 1.47, and the value of B in the equation (2) was 2.08, both falling within the preferable range defined in the present invention. This shows that a capacitor having a high power output characteristic and a high volumetric energy density was achieved.

[Capacitor fabrication example 3-2]

Electrodes and separators similar to those used in fabrication example 1 were used here. A component A having a size of 14 mm × 20 mm was produced by forming an electrode layer only on one side, a component B having a size of 14 mm × 20 mm was produced by forming electrode layers on both sides, and a component C having an electrode layer size of 14 mm × 20 mm and a component size of 18 mm × 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in fabrication example 1, and aluminum/resin laminated films, each having a thickness of 150 μm and measuring 18 mm × 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C), it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range. This shows that a capacitor having a high power output characteristic and a high volumetric energy density was achieved.

[Capacitor fabrication example 3-3]

Two capacitors, each identical to that fabricated in fabrication example 2-1, were connected in series and combined in one capacitor in the same manner as shown in Figures 2 and 4. The overall thickness (D) of the resultant capacitor was about 1.5 mm, and its volume (V) was about 0.77 $cm^3$.

The capacitor was charged at a constant current and a constant voltage for 10 minutes, that is, the capacitor was first charged up to 5.0 V at a current of 1.1 mA, and then a constant voltage of 5.0 V was applied. After that, the capacitor was discharged at a constant current of 1.1 mA until the voltage decreased to 0 V. The discharge capacity (1C discharge capacity) obtained from the discharge curve was about 1.11 mAh, and the discharged energy was about 2.78 mWh.

Further, after fully charging the capacitor in the same manner as described above, when the capacity was measured under a constant discharge current of 1110 mA (1000C) it was found that the capacitor retained a capacity about 80% of the 1C discharge capacity (the 1000C discharge efficiency was 80%), and that the energy when discharged at 1000C was about 1.78 mWh.

The energy density of this capacitor when discharged at 1000C was about 2.31 Wh/L.

Here, the value of A in the equation (1) was 0.06, and the value of B in the equation (2) was 1.31, both falling within the preferable range. This shows that a capacitor having a high power output characteristic and a high volumetric energy density was achieved.

(Capacitor comparative example 3-1)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.047 F. The overall thickness (D) of the capacitor was about 2 mm, and the volume (V) was about 1.8 $cm^3$; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Capacitor comparative example 3-2)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 $cm^3$; assuming a full charge voltage of 3.6 V, the energy density of the capacitor when discharged at 1000C was 0.61 Wh/L. Here, the value of B in the equation (2) was -0.82, which was outside the preferable range. Accordingly, the capacitor of this example would not be adequate as a capacitor that can simultaneously achieve a high power output characteristic and a high volumetric energy density. [Specific example 3-1]

The capacitor of fabrication example 2 was connected to the output terminal of the main battery (a lithium-ion battery with a capacity of 710 mAh) mounted in a commercial digital still camera (with a volume of about 100 $cm^3$), and the voltage at the output terminal was monitored. When zooming was performed for about one second after turning on the camera switch, the voltage drop at the battery output terminal was substantially constant at about 0.08 V.

[Specific example 3-2]

In application example 3, when the capacitor of fabrication example 3-3 was connected instead of the capacitor of fabrication example 3-2, the voltage drop was substantially constant at about 0.05 V.

(Comparative example 3-1)

In application example 3, when the capacitor was not connected, the voltage drop was substantially constant at about 0.2 V.

(Comparative example 3-2)

In application example 3, when the capacitor of comparative example 2-1 was connected instead of the capacitor of fabrication example 3-2, the voltage drop increased with time, and the average voltage drop during about one second was about 0.13 V.

(Comparative example 3-3)

In application example 3, when two capacitors, each identical to that fabricated in comparative example 3-2, were connected in series instead of the capacitor of fabrication example 3-2, the voltage drop was substantially constant at about 0.14 V. In this case, since the combined volume of the capacitors was larger than 2 cm$^2$, it was apparently difficult to actually mount the capacitors in the camera.

[Application example 4]

Application example 4 concerns an example in which the capacitor of the present invention is applied to various kinds of mobile phones, portable information terminals, or portable game machines, and more particularly an example in which the ultra-thin and/or small-volume capacitor having a high power output characteristic and a high capacitance density is incorporated in such a portable device.

In mobile phones (including PHS terminals), portable information terminals, portable game machines (or portable amusement devices), etc., a large current of the order of amperes is often required within a short period of a few seconds in such cases as when starting up a built-in hard disk or an image display device (liquid crystal display or the like) or when driving an eccentric motor in vibration mode or generating a ringing tone or when transmitting various kinds of information via radio waves.

When such instantaneous power is required, that is, during the peak period of power consumption, a large power burden is put on the main battery (such as a lithium battery, nickel-hydrogen battery, alkaline battery, fuel cell battery, etc.) mounted in the device, but since these batteries do not have output performance that can satisfactorily handle such power requirements, serious problems such as output voltage drop often occur that affect the long-term use of the device.

To address such problems, in the prior art, attempts have been made to use an electric double layer capacitor in combination with a battery in order to reduce the large current load applied for a few seconds to the battery. For example, Japanese Unexamined Patent Publication No. H10-294135 discloses a hybrid power supply constructed by combining a capacitor and a lithium-ion battery (850 mAh), and states that the hybrid power supply provides a higher capacity under low-temperature large current load conditions (1.5 A, 0.5 msec) than the lithium-ion battery alone. Japanese Unexamined Patent Publication No. 2002-246071 also discloses a hybrid power supply constructed by combining a capacitor and a lithium-ion battery, and states that, even under a 2C load condition, only a 0.8C load is applied to the lithium-ion battery.

According to the application example 4, by incorporating the capacitor of the present invention, the power burden of the main battery of the mobile phone, portable information terminal, or portable game machine can be greatly reduced, serving to extend the continuous operation time of the battery, while at the same time, achieving size reduction of the power supply system.

The mode for carrying out the application example 4 will be described in detail below.

The invention concerns a mobile phone, a portable information terminal, or a portable game machine, which incorporates a capacitor having an electric capacity of 0.1 mAh or higher, and in which at least a portion of power to a load is supplied from the capacitor, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and at least either the condition that the value of A in equation (1) below not be smaller than -0.2 or the condition that the value of B in equation (2) below not be smaller than 0.8 is satisfied.

$$W \geq 1.5D + A \quad (1)$$

$$W \geq 1.3V + B \quad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour; this value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

Generally, as is well known to those skilled in the art, as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease; taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously. Considering the fact that prior known capacitors have not been able to satisfy the preferable range defined by the above equation (1) or (2), the capacitor of the present invention offers an enormous potential as the only one capacitor that can meet the stringent demands from the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor of the present invention as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as earlier described, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equations (1) and (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is determined by the sum of the thickness of the electrode element comprising one or more anode/cathode pairs and separators and the thickness of the container itself (the thickness of the container wall), but it may include some dead space (for example, a space containing only an electrolytic solution), if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger, and more preferably 0.3 mm or larger.

The volume (V) of the capacitor is preferably 1.5 cm$^3$ or less, more preferably 1 cm$^3$ or less, still more preferably

$0.7 \text{ cm}^3$ or less, and most preferably $0.4 \text{ cm}^3$ or less. There is no specific limit to how far the volume of the capacitor may be reduced, but from the relationship with the volumes of the electrodes, separator, and container, the practical volume is preferably $0.05 \text{ cm}^3$ or larger, and more preferably $0.1 \text{ cm}^3$ or larger.

Considering the power requirements of the various kinds of loads in the mobile phone, portable information terminal, or portable game machine of the application example 4, it is preferable that the capacitor have an electric capacity of at least 0.1 mAh or larger, more preferably 0.25 mAh or larger, still more preferably 0.5 mAh or larger, and most preferably 1 mAh or larger. The upper limit value of the voltage that can be used is at least 2 V or higher, more preferably 3 V or higher, and still more preferably 4.5 V or higher.

Examples of methods that can be employed to supply power from the capacitor of the present invention to the various kinds of loads are shown below, and a suitable one is selected according to the purpose.

> (1) The input/output terminals of the capacitor are connected directly to the load.
> (2) The input/output terminals of the capacitor are connected to the load via a current regulating circuit to output a constant current.
> (3) The input/output terminals of the capacitor are connected to the load via a voltage regulating circuit to output a constant voltage.

Examples of methods that can be employed for charging the capacitor of the present invention from various power supply sources are shown below, and a suitable one is selected according to the purpose.

> (1) The input/output terminals of the capacitor are connected directly to the power supply source.
> (2) The input/output terminals of the capacitor are connected to the power supply source via a current regulating circuit to charge the capacitor with a constant current.
> (3) The input/output terminals of the capacitor are connected to the power supply source via a voltage regulating circuit to charge the capacitor with a constant voltage.

In the above connection method examples, the charge/discharge timing of the capacitor can be controlled by connecting a suitable switching device between the capacitor (a terminal not connected to the load or the power supply source) and the ground line.

Specific examples of an application circuit that uses the capacitor of the present invention will be described below.

First, a description will be given of a power supply system in which the capacitor of the present invention (including a capacitor constructed by connecting more than one capacitor of the present invention in series) is connected to the output side (secondary side) of a suitable DC voltage regulating circuit (DC/DC converter, AC/DC converter, etc.).

Of the methods for charging the capacitor from various power supply sources, the power supply system that employs the method (3) in which the capacitor is connected to the output side (secondary side) of the DC voltage regulating circuit (DC/DC converter, AC/DC converter, etc.) is extremely useful in practical applications.

Here, there is usually an upper limit to the output current of the voltage regulating circuit because of its internal circuit structure. Accordingly, if the amount of current that the load (application) requires increases instantaneously and exceeds the upper limit value, the output voltage of the circuit significantly drops, resulting in an inability to supply stable power to the load; however, in the power supply system in which the capacitor of the present invention is connected on the output side (secondary side) of the voltage regulating circuit, the capacitor supplies a current in a timely manner to compensate for the increase of the load current, thereby effectively preventing the output voltage from dropping.

In this power supply system, the capacitor is automatically charged when the load current is sufficiently lower than the upper limit value of the output current of the voltage regulating circuit.

This power supply system permits the use of a DC voltage regulating circuit having a specification that allows the upper limit value of the output current to be further reduced; this serves to further reduce the size of the circuit. Besides, because of the thin and small-volume structure that characterizes the capacitor of the present invention, the power supply system as a whole can be significantly reduced in size.

In the case of an AC voltage regulating circuit (DC/AC converter, AC/AC converter, etc.), if the internal circuit is such that the input is at least once regulated at a constant DC voltage level and then converted to an AC voltage for output, the same effect as described above can be obtained by connecting the capacitor of the invention to the load side of this DC voltage regulating circuit. In the above power supply system, for the purpose of reducing the size of the system as a whole, it is preferable to use a voltage regulating circuit whose maximum output power is about 20 W or less, more preferably 10 W or less, still more preferably 5 W or less, and most preferably 2.5 W or less.

Next, a description will be given of the configuration of a power supply system in which the input/output terminals of the capacitor are directly connected in parallel to a suitable power supply. The capacitor is charged by the power supply to a prescribed voltage, that is, to the output voltage of the power supply.

The advantage of this power supply system is enormous when the power supply is a battery (for example, a fuel cell battery, a dry cell battery, a lithium-ion battery, etc.). In particular, when a large current flows instantaneously due to the temporal variation of the consumption current on the load side, if the power supply were constructed from the battery alone, the output voltage would drop significantly due to the voltage drop defined by the product of the output current and the internal resistance of the battery, but in the system of the invention in which the capacitor is connected in parallel with the battery, the output current of the battery can be reduced due to the superimposition of the output current of the capacitor, and as a result, the power supply voltage drop can be greatly suppressed. Suppression of such voltage drop contributes, for example, to extending the battery life.

Next, a description will be given of a power supply system in which the input/output terminals of the capacitor are connected to the load via a voltage regulating circuit. In this system, the input side (primary side) of the voltage regulating circuit must be a DC input, but the output side (secondary side) may be either DC or AC. The capacitor may be used by itself on the input side, but a power supply system in which a suitable battery (primary or secondary battery, etc.) is connected in parallel with the capacitor on the input side is also preferable. In this power supply system, as in the earlier described power supply system, when the input current to the voltage regulating circuit increases instantaneously due, for example, to the temporal variation of the consumption current on the load side, the output current of the capacitor is superimposed on the output current of the battery, and the voltage drop of the power supply can thus be suppressed.

The capacitor that can be used advantageously in the mobile phone, portable information terminal, or portable game machine of the present invention will be described in detail below.

For both the anode and cathode of the capacitor, it is preferable to use activated carbon whose specific surface area, as measured by the BET method, is 500 $m^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 $m^2$/g but not larger than 2500 $m^2$/g, and more preferably not smaller than 1000 $m^2$/g but not larger than 2500 $m^2$/g. A specific surface area smaller than 500 $m^2$/g or larger than 2500 $m^2$/g is not desirable, because in that case a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. In this patent specification, the "average particle size" refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size that falls within the preferable range according to the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one side or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/cm$^3$ or higher for both the anode and cathode of the present invention, more preferably 15 F/cm$^3$ or higher, still more preferably 18 F/cm$^3$ or higher, and most preferably 21 F/cm$^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 μm or less, more preferably 25 μm or less, and most preferably 20 μm or less.

For the anode and cathode, it is preferable to use an electrode structure that does not develop a visible surface defect (such as cracking, delamination, etc.) when subjected to a 4-mm radius bending test. Such an electrode structure is advantageously used, for example, when achieving a thinner capacitor; the structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 μm, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and matters such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 μm or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, the electrode thickness exceeding the above upper limit is not desirable, because it would then become difficult to obtain a desired output characteristic.

The electrode thickness is preferably 60 μm or less, as described above, but from the standpoint of achieving higher 1000C discharge efficiency or higher output efficiency even at a current output greater than 1000C, the electrode thickness is more preferably 50 μm or less, and still more preferably 40 μm or less; in particular, for the purpose of achieving a particularly excellent output characteristic at low temperatures of 0°C or below, an electrode thickness of 30 μm or less is most preferable.

There is no specific limit to how far the electrode thickness may be reduced, but the thickness that can be used in practice is about 5 μm or greater. However, as the electrode thickness decreases, it becomes more difficult to achieve a high volumetric energy density for the capacitor; therefore, the electrode thickness is preferably not smaller than 10 μm, and more preferably not smaller than 15 μm.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 μm, the thickness of the separator is preferably 50 μm or less, and when the electrode thickness is 20 μm, the thickness of the separator is preferably 100 μm or less.

Further, for the purpose of achieving a higher volumetric energy density or higher output characteristic, the thickness of the separator is preferably 80 μm or less, more preferably 60 μm or less, still more preferably 40 μm or less, and most preferably 20 μm or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 μm, and more preferably not smaller than 10 μm.

Further preferably, the separator has a porosity of 30 to 80%, a permeability of 5 to 300 seconds/100 cc (JIS P8117), and an average internal pore size of 0.01 to 5 $\mu$m.

Here, the porosity is calculated from the following equation.

$$\text{Porosity (\%)} = (1-d_f/d_0) \times 100$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator' volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. In this patent specification, the average internal pore size is computed by performing image processing on a cross-sectional photograph taken through an SEM. An average internal pore size smaller than the lower limit value is not desirable, because the ion conductivity of the electrolyte would significantly drop. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 cc, and more preferably 10 to 100 seconds/100 cc.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as LiPF$_6$, LiBF$_4$, etc. For the solvent for dissolving the electrolyte, use may be made of propylene carbonate, ethylene carbonate, diethyl carbonate, dimethyl carbonate, methylethyl carbonate, dimethoxyethane, $\gamma$-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/L is preferable.

The electric conductivity at 25°C of the electrolytic solution is preferably $1 \times 10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 4-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (hereinafter called the common electrode terminal) is electrically connected to the corresponding terminal of the other cell so that a higher voltage output can be taken between the other two electrode terminals.

In the later structure, it is also preferable to fold the common electrode terminals over the capacitor cell structure and then package the entire structure comprising the plurality of cells in a thin laminated film (for example, a heat shrinkable film), thereby holding the cells in an integral fashion as shown. [Fabrication examples of capacitor]

Specific fabrication examples of the capacitor that can be used advantageously in the mobile phone, portable information terminal, or portable game machine in the application example 4 will be shown below. In the fabrication examples, the measurement of each item was performed in the following manner.

(1) Particle size distribution (average particle size):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 cm$^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from arbitrarily selected 10 points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from arbitrarily selected five points on the sample, and their average value was taken as the measured value.

(5) Capacitance density of activated carbon:

An evaluation cell having electrodes each measuring 20 mm $\times$ 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.

Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density (F/cm$^3$) per unit volume of the electrode layer was calculated by dividing the capacitance (F) of the evaluation cell by the total volume of the two electrode layers.

[Capacitor fabrication example 4-1]

MSP-20 manufactured by Kansai Coke and Chemicals was used as the carbon black, and the carbon black dispersed in a solvent was milled for 75 minutes by a bead mill using 2-mm diameter zirconia beads. Dimethylacetamide was used as the solvent. Activated carbon with an average particle size of 0.7 $\mu$m was thus obtained. The BET specific surface area of the thus obtained activated carbon was about 1760 m$^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A conductive adhesive (EB-815 manufactured by Acheson (Japan)) using a polyamide-based thermosetting resin as the binder was applied over a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

Then, the slurry was applied over the current collector on which the conductive adhesive layer was formed, and the structure was dried by heating and pressed to produce an electrode having an electrode thickness of 20 $\mu$m (excluding the thickness of the current collector).

The capacitance density of the thus produced electrode was about 18.0 F/cm$^3$; the electrode was subjected to a 4-mm radius bending test, but no surface detects visible to the naked eye were observed.

Here, two kinds of electrodes were produced, one with the conductive adhesive layer and electrode layer formed on both sides of the current collector and the other with these layers formed only on one side.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 $\mu$m. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/ 100 cc (JIS P8117).

Using this separator and the two kinds of electrodes each cut to a prescribed size, and also using an electrolytic solution prepared by dissolving triethylmethylammonium-BF$_4$ in propylene carbonate at a concentration of 1.5 mol/l and a container formed from a 150-$\mu$m thick aluminum/resin laminated film, a capacitor was fabricated in the following manner.

That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed in the aluminum laminated film container preformed in a bag-like shape, the electrolytic solution was vacuum-injected, and the cell was sealed, completing the fabrication of a stacked capacitor comprising a stack of four anode/cathode pairs.

Here, the current collectors of the same polarity were connected to each other by ultrasonic welding at their electrode lead portions, and the anode and cathode terminals were brought outside the capacitor.

The anode/cathode size (the portion where the electrode was formed) was 13 mm $\times$ 42 mm, the size of the separator was 15 $\times$ 22 mm, the size of the container was 17 mm $\times$ 50 mm, and the size of the seal portion was about 17 mm $\times$ 4 mm.

The capacitor was charged at a constant current and a constant voltage for 10 minutes, that is, the capacitor was first charged up to 2.5 V at a current of 1.1 mA, and then a constant voltage of 2.5 V was applied. After that, the capacitor was discharged at a constant current of 1.1 mA until the voltage decreased to 0 V. The discharge capacity (1C discharge capacity) obtained from the discharge curve was about 1.1 mAh, and the discharged energy was about 1.38 mWh.

Further, after fully charging the capacitor in the same manner as described above, when the capacity was measured under a constant discharge current of 1100 mA (1000C), it was found that the capacitor retained a capacity about 92% of the 1C discharge capacity (the 1000C discharge efficiency was 92%), and that the energy when discharged at 1000C was about 1.168 mWh.

Since the overall thickness (D) of the capacitor was about 0.56 mm, and the volume (V) was about 0.48 cm$^3$, the energy density of the capacitor when discharged at 1000C was about 2.43 Wh/L.

Here, the value of A in the equation (1) was 1.59, and the value of B in the equation (2) was 1.81, both falling within the preferable range defined in the present invention. This shows that a capacitor having a high power output characteristic and a high volumetric energy density was achieved.

[Capacitor fabrication example 4-2]

Electrodes and separators similar to those used in fabrication example 4-1 were used here. A component A having a size of 14 mm $\times$ 20 mm was produced by forming an electrode layer only on one side, a component B having a size of 14 mm $\times$ 20 mm was produced by forming electrode layers on both sides, and a component C having an electrode layer size of 14 mm $\times$ 20 mm and a component size of 18 mm $\times$ 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in fabrication example 1, and aluminum/resin laminated films, each having a thickness of 150 $\mu$m and measuring 18 mm $\times$ 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.4 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.42 mAh, and the discharged energy was about 1.05 mWh.

Further, after fully charging the capacitor in the same manner as described above, when the capacity was measured under a constant discharge current of 420 mA (1000C), it was found that the capacitor retained a capacity about 93% of the 1C discharge capacity (the 1000C discharge efficiency was 93%), and that the energy when discharged at 1000C was about 0.91 mWh.

Since the overall thickness (D) of the capacitor was about 0.65 mm, and the volume (V) was about 0.33 cm$^3$, the energy density of the capacitor when discharged at 1000C was about 2.76 Wh/L.

Here, the value of A in the equation (1) was 1.79, and the value of B in the equation (2) was 2.33, both falling within the preferable range. This shows that a capacitor having a high power output characteristic and a high volumetric energy density was achieved.

[Capacitor fabrication example 4-3]

Two capacitors, each identical to that fabricated in fabrication example 4-1, were connected in series and combined in one capacitor in the same manner as shown in Figures 1 and 3. The overall thickness (D) of the resultant capacitor was about 0.65 mm, and its volume (V) was about 1.1 cm$^3$.

The capacitor was charged at a constant current and a constant voltage for 10 minutes, that is, the capacitor was first charged up to 5.0 V at a current of 1.1 mA, and then a constant voltage of 5.0 V was applied. After that, the capacitor was discharged at a constant current of 1.1 mA until the voltage decreased to 0 V. The discharge capacity (1C discharge capacity) obtained from the discharge curve was about 1.08 mAh, and the discharged energy was about 2.7 mWh.

Further, after fully charging the capacitor in the same manner as described above, when the capacity was measured under a constant discharge current of 1080 mA (1000C), it was found that the capacitor retained a capacity about 91% of the 1C discharge capacity (the 1000C discharge efficiency was 91%), and that the energy when discharged at 1000C was about 2.24 mWh.

The energy density of this capacitor when discharged at 1000C was about 2.04 Wh/L.

Here, the value of A in the equation (1) was 1.07, and the value of B in the equation (2) was 0.81, both falling within the preferable range. This shows that a capacitor having a high power output characteristic and a high volumetric energy density was achieved.

(Capacitor comparative example 3-1)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm$^3$; assuming a full charge voltage of 3.6 V, the energy density of the capacitor when discharged at 1000C was 0.61 Wh/L. Here, the value of B in the equation (2) was -0.82, which was outside the preferable range. Accordingly, the capacitor of this example would not be adequate as a capacitor that can simultaneously achieve a high power output characteristic and a high volumetric energy density. [Specific example 4-1]

The capacitor of fabrication example 2 was connected to the output terminal of the main battery (a lithium-ion battery with a capacity of 680 mAh) mounted in a commercial mobile phone designed for the PDC system (a time division communication system), and the voltage at the output terminal was monitored. When transmitting from the mobile phone, a pulse-like voltage drop was observed in the battery terminal voltage, and the maximum value of the voltage drop was about 0.6 V.

[Specific example 4-2]

In specific example 4-1, when the capacitor of fabrication example 4-3 was connected instead of the capacitor of fabrication example 4-2, the maximum value of the voltage drop was about 0.3 V.

(Comparative example 4-1)

In specific example 4-1, when the capacitor was not connected, the maximum value of the voltage drop reached about 1.0 V.

(Comparative example 4-2)

In specific example 4-1, when two capacitors, each identical to that fabricated in comparative example 4-1, were connected in series instead of the capacitor of fabrication example 4-2, the maximum value of the voltage drop was about 0.8 V; in this case, since the combined volume of the capacitors was larger than 2 cm$^2$, it was apparently difficult to actually mount the capacitors in the camera.

[Application example 5]

Application example 5 concerns an example in which the ultra-thin, small-volume capacitor having a high power output characteristic and a high capacitance density according to the present invention is incorporated in a portable power tool or a portable electric shaver.

Portable power tools, electric shavers, etc. that can be carried around anywhere are widely used today; in such devices, an electric motor (primarily, a DC motor) for driving a tool or cutter is operated with power supplied from a built-in main battery (such as an alkaline dry battery or a lithium battery), as described, for example, in Japanese Unexamined Patent Publication Nos. 2005-74613 and H05-293263.

According to the application example 5, there are offered such advantages as being able to extend the continuous operation time of the main battery of the portable power tool, portable electric shaver, or the like, while at the same time, achieving a reduction in the overall size of the power supply system.

The mode for carrying out the application example 5 will be described in detail below.

The application example 4 concerns a portable power tool or a portable electric shaver, which comprises at least a capacitor having an electric capacity of 0.1 mAh or higher, a system for driving a tool or cutter by using an electric motor, and a system for supplying power to the electric motor from the capacitor, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and at least either the condition that the value of A in equation (1) below not be smaller than -0.2 or the condition that the value of B in equation (2) below not be smaller than 0.8 is satisfied.

$$W \geq 1.5D + A \quad (1)$$

$$W \geq 1.3V + B \quad (2)$$

Here, the word "portable" means that the power tool or the electric shaver is a device that can at least operate normally with the power supplied from the main battery (such as an alkaline dry battery, nickel-hydrogen battery, lithium battery, or the like) built into the device, even when no external power is supplied.

As for the capacitor, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour; this value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

Generally, as is well known to those skilled in the art, that as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease; taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously. Considering the fact that prior known capacitors have not been able to satisfy the preferable range of the value of A or B, the capacitor of the present invention offers considerable potential as the only capacitor that can meet the stringent demands of the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor of the present invention as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as described earlier, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equation (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is determined by the sum of the thickness of the electrode element comprising one or more anode/cathode pairs and separators and the thickness of the container itself (the thickness of the container wall), but it may include some dead space (for example, a space containing only an electrolytic solution) if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger, and more preferably 0.3 mm or larger.

The volume (V) of the capacitor is preferably 1 cm$^3$ or less, more preferably 0.7 cm$^3$ or less, still more preferably 0.5 cm$^3$ or less, and most preferably 0.3 cm$^3$ or less. There is no specific limit to how far the volume of the capacitor may be reduced, but from the relationship with the volumes of the electrodes, separator, and container, the practical volume is preferably 0.05 cm$^3$ or larger, and more preferably 0.1 cm$^3$ or larger.

In the portable power tool or the portable electric shaver or the like, from the standpoint of providing sufficient assist power required to drive the motor especially when powering up or when a high torque is required, it is preferable that the capacitor have an electric capacity of about 0.1 mAh or larger, more preferably 0.25 mAh or larger, still more preferably 0.5 mAh or larger, and most preferably 1 mAh or larger. The upper limit value of the voltage that can be used with the capacitor is at least 2 V or higher, more preferably 3 V or higher, and still more preferably 4.5 V or higher.

Examples of methods that can be employed to supply power from the capacitor of the present invention to various kinds of loads are shown below, and a suitable one is selected according to the purpose.

(1) The input/output terminals of the capacitor are connected directly to the load.
(2) The input/output terminals of the capacitor are connected to the load via a current regulating circuit to output a constant current.
(3) The input/output terminals of the capacitor are connected to the load via a voltage regulating circuit to output a constant voltage.

Examples of methods that can be employed for charging the capacitor of the present invention from various power supply sources are shown below, and a suitable one is selected according to the purpose.

(1) The input/output terminals of the capacitor are connected directly to the power supply source.
(2) The input/output terminals of the capacitor are connected to the power supply source via a current regulating circuit to charge the capacitor with a constant current.
(3) The input/output terminals of the capacitor are connected to the power supply source via a voltage regulating circuit to charge the capacitor with a constant voltage.

In the above connection method examples, the charge/discharge timing of the capacitor can be controlled by connecting a suitable switching device between the capacitor (a terminal not connected to the load or the power supply source) and the ground line.

Examples of an application circuit that uses the capacitor of the present invention will be described below.

First, a description will be given of a power supply system in which the capacitor of the present invention (including a capacitor constructed by connecting more than one capacitor of the present invention in series) is connected to the output side (secondary side) of a suitable DC voltage regulating circuit (DC/DC converter, AC/DC converter, etc.).

Of the methods for charging the capacitor from various power supply sources, the power supply system that employs the method (3) in which the capacitor is connected to the output side (secondary side) of the DC voltage regulating circuit (DC/DC converter, AC/DC converter, etc.) is extremely useful in practical applications.

Here, there is usually an upper limit to the output current of the voltage regulating circuit because of its internal circuit structure. Accordingly, if the amount of current that the load (application) requires increases instantaneously and exceeds the upper limit value, the output voltage of the circuit significantly drops, resulting in an inability to supply stable power to the load; however, in the power supply system in which the capacitor of the present invention is connected on the output side (secondary side) of the voltage regulating circuit, the capacitor supplies a current in a timely manner to compensate for the increase of the load current, thereby effectively preventing the output voltage from dropping.

In this power supply system, the capacitor is automatically charged when the load current is sufficiently lower than the upper limit value of the output current of the voltage regulating circuit.

This power supply system permits the use of a DC voltage regulating circuit having a specification that allows the upper limit value of the output current to be further reduced; this serves to further reduce the size of the circuit. In addition, because of the thin and small-volume structure that characterizes the capacitor of the present invention, the power supply system as a whole can be significantly reduced in size.

In the case of an AC voltage regulating circuit (DC/AC converter, AC/AC converter, etc.), if the internal circuit is such that the input is at least once regulated at a constant DC voltage level and then converted to an AC voltage for output, the same effect as described above can be obtained by connecting the capacitor of the invention to the load side of this DC voltage regulating circuit. In the above power supply system, for the purpose of reducing the size of the system as a whole, it is preferable to use a voltage regulating circuit whose maximum output power is about 20 W or less, more preferably 10 W or less, still more preferably 5 W or less, and most preferably 2.5 W or less.

Next, a description will be given of the configuration of a power supply system in which the input/output terminals of the capacitor are directly connected in parallel to a suitable power supply. The capacitor is charged by the power supply to a prescribed voltage, that is, to the output voltage of the power supply.

The advantage of this power supply system is considerable when the power supply is a battery (for example, a fuel cell battery, a dry cell battery, a lithium-ion battery, etc.). In particular, when a large current flows instantaneously due to the temporal variation of the consumption current on the load side, if the power supply were constructed from the battery alone, the output voltage would significantly drop due to the voltage drop defined by the product of the output current and the internal resistance of the battery, but in the system of the invention in which the capacitor is connected in parallel with the battery, the output current of the battery can be reduced due to the superimposition of the output current of the capacitor, and as a result, the power supply voltage drop can be greatly suppressed. Suppression of such voltage drop contributes, for example, to extending the battery life.

Next, a description will be given of a power supply system in which the input/output terminals of the capacitor are connected to the load via a voltage regulating circuit. In this system, the input side (primary side) of the voltage regulating circuit must be a DC input, but the output side (secondary side) may be either DC or AC. The capacitor may be used by itself on the input side, but a power supply system in which a suitable battery (primary or secondary battery, etc.) is connected in parallel with the capacitor on the input side is also preferable. In this power supply system, as in the earlier-described power supply system, when the input current to the voltage regulating circuit increases instantaneously due, for example, to the temporal variation of the consumption current on the load side, the output current of the capacitor is superimposed on the output current of the battery, and the voltage drop of the power supply can thus be suppressed.

The capacitor that can be used advantageously in the portable power tool or the portable electric shaver of the application example 5 will be described in detail below.

For both the anode and cathode of the capacitor, it is preferable to use activated carbon whose specific surface area, as measured by the BET method, is 500 $m^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 $m^2$/g but not larger than 2500 $m^2$/g, and more preferably not smaller than 1000 $m^2$/g but not larger than 2500 $m^2$/g. The specific surface area smaller than 500 $m^2$/g or larger than 2500 $m^2$/g is not desirable, because in that case a sufficient capacity often cannot be obtained when a high output is applied.

The average particle size of the activated carbon used for the anode and cathode is 10 $\mu$m or smaller and,

from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. In this patent specification, the "average particle size" refers to the average particle size in the volumetric particle size distribution obtained by the laser diffraction measurement method.

The average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size that falls within the preferable range according to the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one side or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/cm$^3$ or higher for both the anode and cathode of the present invention, more preferably 15 F/cm$^3$ or higher, still more preferably 18 F/cm$^3$ or higher, and most preferably 21 F/cm$^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 $\mu$m or less, more preferably 25 $\mu$m or less, and most preferably 20 $\mu$m or less.

For the anode and cathode, it is preferable to use an electrode structure that does not develop a visible surface defect (such as cracking, delamination, etc.) when subjected to a 4-mm radius bending test. Such an electrode structure is advantageously used, for example, when achieving a thinner capacitor; the structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 $\mu$m, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and means such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 $\mu$m or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, the electrode thickness exceeding the above upper limit is not desirable, because it would then become difficult to obtain a desired output characteristic.

The electrode thickness is preferably 60 $\mu$m or less, as described above, but from the standpoint of achieving higher 1000C discharge efficiency or higher output efficiency even at a current output greater than 1000C, the electrode thickness is more preferably 50 $\mu$m or less, and still more preferably 40 $\mu$m or less; in particular, for the purpose of achieving a particularly excellent output characteristic at low temperatures of 0°C or below, an electrode thickness of 30 $\mu$m or less is most preferable.

There is no specific limit to how far the electrode thickness may be reduced, but the thickness that can be used in practice is about 5 $\mu$m or greater. However, as the electrode thickness decreases, it becomes more difficult to achieve a high volumetric energy density for the capacitor; therefore, the electrode thickness is preferably not smaller than 10 $\mu$m, and more preferably not smaller than 15 $\mu$m.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 $\mu$m, the thickness of the separator is preferably 50 $\mu$m or less, and when the electrode thickness is 20 $\mu$m, the thickness of the separator is preferably 100 $\mu$m or less.

Further, for the purpose of achieving a higher volumetric energy density or higher output characteristic, the thickness of the separator is preferably 80 $\mu$m or less, more preferably 60 $\mu$m or less, still more preferably 40 $\mu$m or less, and most preferably 20 $\mu$m or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 $\mu$m, and more preferably not smaller than 10 $\mu$m.

Further preferably, the separator has a porosity of 30 to 80%, a permeability of 5 to 300 seconds/100 cc (JIS P8117), and an average internal pore size of 0.01 to 5 $\mu$m.

Here, the porosity is calculated from the following equation.

$$\text{Porosity (\%)} = (1 - d_f/d_0) \times 100$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator' volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. In this patent specification, the average internal pore size is computed by performing image processing on a cross-sectional photograph taken through an SEM. An average internal pore size smaller than the lower limit value is not desirable, because the ion conductivity of the electrolyte would drop significantly. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 cc, and more preferably 10 to 100 seconds/100 cc.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as $LiPF_6$, $LiBF_4$, etc. For the solvent for dissolving the electrolyte, use may be made of propylene carbonate, ethylene carbonate, diethyl carbonate, dimethyl carbonate, methylethyl carbonate, dimethoxyethane, $\gamma$-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/l is preferable.

The electric conductivity at 25°C of the electrolytic solution is preferably $1 \times 10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 5-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (hereinafter called the common electrode terminal) is electrically connected to the corresponding terminal of the other cell so that a higher voltage output can be taken between the other two electrode terminals.

In the latter structure, it is also preferable to fold the common electrode terminals over the capacitor cell structure and then package the entire structure comprising the plurality of cells in a thin laminated film (for example, a heat shrinkable film), thereby holding the cells in an integral fashion as shown. [Fabrication examples of capacitor]

Specific fabrication examples of the capacitor that can be mounted advantageously in the portable power tool or the portable electric shaver in the application example 5 will be shown below. In the fabrication examples, the measurement of each item was performed in the following manner.

(1) Particle size distribution (average particle size):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 cm$^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from arbitrarily selected 10 points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from arbitrarily selected five points on the sample, and their average value was taken as the measured value.

(5) Capacitance density of activated carbon:

An evaluation cell having electrodes each measuring 20 mm $\times$ 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.

Further, the capacitance (F) of the evaluation cell was divided by the total weight (g) of the activated carbon used for the two electrodes, to calculate the capacitance per unit weight of the activated carbon (F/g) .

(6) Capacitance density of electrode layer:

The capacitance density (F/cm$^3$) per unit volume of the electrode layer was calculated by dividing the capacitance (F) of the evaluation cell by the total volume of the two electrode layers.

[Capacitor fabrication example 5-1]

RP-20 manufactured by Kuraray Chemical was used as the activated carbon. The BET specific surface area of this activated carbon was about 1450 $m^2$/g, the average particle size was about 7 $\mu$m, and the capacitance density was about 28 F/g. 77 parts by weight of the activated carbon, 6 parts by weight of acetylene black, 17 parts by weight of polyvinylidene fluoride, and 225 parts by weight of N-methylpyrrolidone were mixed to produce a slurry. A conductive adhesive (EB-815 manufactured by Acheson (Japan)) using a polyamide-based thermosetting resin as the binder was applied over one surface of a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

The slurry was applied over the surface of the current collector on which the conductive adhesive layer was formed, and the structure was dried by heating and pressed to produce an electrode having an electrode thickness of 50 $\mu$m (excluding the thickness of the current collector). The capacitance density of the thus produced electrode was about 15.3 F/$cm^3$.

The electrode was subjected to a 4-mm radius bending test, but no surface detects visible to the naked eye were observed.

The thus produced electrode was cut to form a pair of anode and cathode electrodes; then, using a separator formed from 40-$\mu$m thick cellulose paper (TF-40 manufactured by Nippon Kodoshi Corporation), an electrolytic solution prepared by dissolving triethylmethylammonium·$BF^4$ in propylene carbonate at a concentration of 1.5 mol/l, and a container formed from a 150-$\mu$m thick aluminum/resin laminated film, a capacitor was fabricated in the following manner. That is, the electrode forming the cathode (with its electrode surface facing the separator), the separator, and the electrode forming the anode (with its electrode surface facing the separator) were stacked in this order, and the stack was impregnated with the electrolytic solution; the stack was then placed in the outer casing formed from the aluminum/resin laminated film, and was vacuum-sealed.

Here, the anode/cathode size (the portion where the electrode was formed) was 14 mm $\times$ 20 mm, and the other portion of the current collector where the electrode was not formed was formed as a terminal lead portion. The size of the separator was 16 $\times$ 22 mm, the size of the container formed from the aluminum/resin laminated film was 18 mm $\times$ 28 mm, and the size of the seal portion was about 18 mm $\times$ 4 mm.

The capacitor was charged at a constant current and a constant voltage for 10 minutes, that is, the capacitor was first charged up to 2.5 V at a current of 0.3 mA, and then a constant voltage of 2.5 V was applied. After that, the capacitor was discharged at a constant current of 0.3 mA until the voltage decreased to 0 V. The discharge capacity (1C discharge capacity) obtained from the discharge curve was about 0.293 mAh, and the discharged energy was about 0.366 mWh.

Further, after fully charging the capacitor in the same manner as described above, when the capacity was measured under a constant discharge current of 300 mA (1000C) it was found that the capacitor retained a capacity about 81% of the 1C discharge capacity (the 1000C discharge efficiency was 81%), and that the energy when discharged at 1000C was about 0.24 mWh.

Since the overall thickness (D) of the capacitor was about 0.49 mm, and the volume (V) was about 0.24 $cm^3$, the volumetric energy density (W) of the capacitor when discharged at 1000C was about 1 Wh/L. Here, the value of A in the equation (1) was 0.27, which was within the preferable range defined for the capacitor according to the present invention; this shows that a capacitor having a high power output characteristic and a high volumetric energy density was achieved. On the other hand, the value of B in the equation (2) was 0.69, which was outside the preferable range.

[Capacitor fabrication example 5-2]

MSP-20 manufactured by Kansai Coke and Chemicals was used as the activated carbon, and the activated carbon was milled for 50 hours by a bead mill using 2-mm diameter zirconia beads, to obtain activated carbon with an average particle size of 2.9 $\mu$m. The BET specific surface area of the thus obtained activated carbon was about 2310 $m^2$/g, and the capacitance density was about 42 F/g. 93 parts by weight of the activated carbon, 7 parts by weight of Ketjen black, 17 parts by weight of polyvinylidene fluoride, 4 parts by weight of polyvinyl pyrrolidone, and 300 parts by weight of N-methylpyrrolidone were mixed to produce a slurry.

Using the above slurry and a current collector similar to that used in fabrication example 5-1, an electrode having an electrode thickness of 21 $\mu$m (excluding the thickness of the current collector) was produced by the same method as that used in fabrication example 5-1.

The capacitance density of the thus produced electrode was about 19.3 F/$cm^3$; the electrode was subjected to a 4-mm radius bending test, but no surface detects visible to the naked eye were observed.

In this fabrication example, two kinds of electrodes were produced, one with the electrode formed on both sides (in this case, the conductive adhesive layer was also formed on both sides of the current collector) and the other with the electrode formed only on one side.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 $\mu$m. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/ 100 ml (JIS P8117).

The electrode formed only on one side (single-sided electrode) or on both sides (double-sided electrode) was cut to form anode and cathode electrodes; then, using the above separator and electrodes, and also using an electrolytic solution prepared by dissolving triethylmethylammonium·BF$_4$ in propylene carbonate at a concentration of 1.5 mol/l and a container formed from a 150-$\mu$m thick aluminum/resin laminated film, a capacitor was fabricated in the following manner. That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed in the aluminum laminated film container preformed in a bag-like shape, the electrolytic solution was vacuum-injected, and the cell was sealed, completing the fabrication of a stacked capacitor comprising a stack of four anode/cathode pairs. Here, the current collectors of the same polarity were connected to each other by ultrasonic welding at their electrode lead portions, and the anode and cathode terminals were provided outside the capacitor.

Here, as in fabrication example 5-1, the anode/cathode size (the portion where the electrode was formed) was 14 mm $\times$ 20 mm, the size of the separator was 16 $\times$ 22 mm, the size of the container was 18 mm $\times$ 28 mm, and the size of the seal portion was about 18 mm $\times$ 4 mm.

The capacitor was charged at a constant current and a constant voltage for 10 minutes, that is, the capacitor was first charged up to 2.5 V at a current of 0.66 mA, and then a constant voltage of 2.5 V was applied. After that, the capacitor was discharged at a constant current of 0.66 mA until the voltage decreased to 0 V. The discharge capacity (1C discharge capacity) obtained from the discharge curve was about 0.662 mAh, and the discharged energy was about 0.828 mWh.

Further, after fully charging the capacitor in the same manner as described above, when the capacity was measured under a constant discharge current of 660 mA (1000C) it was found that the capacitor retained a capacity about 85% of the 1C discharge capacity (the 1000C discharge efficiency was 85%), and that the energy when discharged at 1000C was about 0.6 mWh.

Since the overall thickness (D) of the capacitor was about 0.63 mm, and the volume (V) was about 0.32 cm$^3$, the volumetric energy density of the capacitor when discharged at 1000C was about 1.9 Wh/L.

Here, the value of A in the equation (1) was 0.95, and the value of B in the equation (2) was 1.48, both falling within the preferable range defined in the present invention. This shows that a capacitor having a high power output characteristic and a high volumetric energy density was achieved.

[Capacitor fabrication example 5-3]

Using the same single-sided electrode and separator as those in fabrication example 5-2, a capacitor was fabricated in the same manner as in fabrication example 5-1, except that the electrode size was 28 mm $\times$ 40 mm, the separator size was 30 mm $\times$ 42 mm, and the aluminum/resin laminated film size was 32 mm $\times$ 48 mm.

The capacitor was charged at a constant current and a constant voltage for 10 minutes, that is, the capacitor was first charged up to 2.5 V at a current of 0.67 mA, and then a constant voltage of 2.5 V was applied. After that, the capacitor was discharged at a constant current of 0.67 mA until the voltage decreased to 0 V. The discharge capacity (1C discharge capacity) obtained from the discharge curve was about 0.67 mAh, and the discharged energy was about 0.84 mWh.

Further, after fully charging the capacitor in the same manner as described above, when the capacity was measured under a constant discharge current of 670 mA (1000C), it was found that the capacitor retained a capacity about 87% of the 1C discharge capacity (the 1000C discharge efficiency was 87%), and that the energy when discharged at 1000C was about 0.64 mWh.

Since the overall thickness (D) of the capacitor was about 0.4 mm, and the volume (V) was about 0.61 cm$^3$, the volumetric energy density of the capacitor when discharged at 1000C was about 1.05 Wh/L.

Here, the value of A in the equation (1) was 0.45, which was within the preferable range defined for the capacitor according to the present invention; this shows that a capacitor having a high power output characteristic and a high volumetric energy density was achieved. On the other hand, the value of B in the equation (2) was 0.26, which was outside the preferable range.

[Capacitor fabrication example 5-4]

MSP-20 manufactured by Kansai Coke and Chemicals was dispersed in a solvent, and was milled for 75 minutes by a bead mill using 2-mm diameter zirconia beads. Dimethylacetamide was used as the solvent. Activated carbon with an average particle size of 0.7 $\mu$m was thus obtained. The BET specific surface area of the thus obtained activated carbon was about 1760 $m^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A current collector similar to that used in fabrication example 5-1 was also used here.

The slurry was applied over the surface of the current collector on which the conductive layer was formed, and the structure was dried by heating and pressed to produce an electrode having an electrode thickness of 40 $\mu$m (excluding the thickness of the current collector). In this fabrication example, as in fabrication example 5-2, two kinds of electrodes were produced, one with the electrode formed on both sides of the current collector (in this case, the conductive adhesive layer was also formed on both sides) and the other with the electrode formed only on one side.

The capacitance density of the thus produced electrode was about 18.0 $F/cm^3$; the electrode was subjected to a 4-mm radius bending test, but no surface detects visible to the naked eye were observed.

Using the thus produced electrode and the same separator as that fabricated in fabrication example 5-2, a stacked capacitor comprising a stack of four anode/cathode pairs was fabricated in the same manner as in fabrication example 5-2.

The capacitor was charged at a constant current and a constant voltage for 10 minutes, that is, the capacitor was first charged up to 2.5 V at a current of 1.1 mA, and then a constant voltage of 2.5 V was applied. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor in the same manner as described above, when the capacity was measured under a constant discharge current of 1120 mA (1000C), it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 $cm^3$, the energy density of the capacitor when discharged at 1000C was about 2.55 Wh/L.

Here, the value of A in the equation (1) was 1.47, and the value of B in the equation (2) was 2.08, both falling within the preferable range defined in the present invention. This shows that a capacitor having a high power output characteristic and a high volumetric energy density was achieved.

[Capacitor fabrication example 5-5]

Electrodes and separators similar to those used in fabrication example 5-4 were used here. A component A having a size of 14 mm $\times$ 20 mm was produced by forming an electrode layer only on one side, a component B having a size of 14 mm $\times$ 20 mm was produced by forming electrode layers on both sides, and a component C having an electrode layer size of 14 mm $\times$ 20 mm and a component size of 18 mm $\times$ 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in the first embodiment, and aluminum/resin laminated films, each having a thickness of 150 $\mu$m and measuring 18 mm $\times$ 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C), it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range. This shows that a capacitor having a high power output characteristic and a high volumetric energy density was achieved.

(Capacitor comparative example 5-1)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.047 F. The overall thickness (D) of the capacitor was about 2 mm, and the volume (V) was about 1.8 cm$^3$; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Capacitor comparative example 5-2)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm$^3$ ; assuming a full charge voltage of 3.6 V, the energy density of the capacitor when discharged at 1000C was 0.61 Wh/L. Here, the value of B was -0.82, which was outside the preferable range. Accordingly, the capacitor of this example would not be adequate as a capacitor that can simultaneously achieve a high power output characteristic and a high volumetric energy density.

[Application example 6]

Application example 6 concerns an example in which the ultra-thin and/or small-volume capacitor having a high power output characteristic and a high capacitance density according to the present invention is incorporated in various kinds of thin image display devices such as electronic paper.

In recent years, various kinds of thin image display devices, including electronic paper, have been proposed, as disclosed, for example, in Japanese Unexamined Patent Publication Nos. 2002-296564 and 2004-037829. In such display devices, it is desired to provide, for use as an internal battery for storing and updating display information, a thin and small-volume battery or the like that can be fully charged in a manner of seconds and that does not defeat the thinness of the display device.

According to the application example 6, by incorporating the thin, small-volume, and quick-charge capacitor of the present invention, a thin and handy display device can be achieved.

The mode for carrying out the application example 6 will be described in detail below.

The application example 6 concerns an image display device which incorporates a capacitor having an electric capacity of 0.1 mAh or higher and which includes a means for storing and updating display information by using power supplied from the capacitor, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and at least either the condition that the value of A in equation (1) below not be smaller than -0.2 or the condition that the value of B in equation (2) below not be smaller than 0.8 is satisfied.

$$W \geq 1.5D + A \qquad (1)$$

$$W \geq 1.3V + B \qquad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour. This value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

That the capacitor has such a high power output characteristic means that the internal resistance of the capacitor is extremely small. This in turn means that in the charge process, the capacitor can be charged highly efficiently at a rate as high as 1000C, that is, the capacitor is capable of quick charging.

Generally, as is well known to those skilled in the art, that as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease. Taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously. Considering the fact that prior known capacitors have not been able to satisfy the preferable range of the value of A or B in the above equation, the capacitor of the present invention offers considerable potential as the only capacitor that can meet the stringent demands of the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor of the present invention as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as earlier described, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equations (1) and (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is determined by the sum of the thickness of the electrode element comprising one or more anode/cathode pairs and separators and the thickness of the container itself (the thickness of the container wall), but it may include some dead space (for example, a space containing only an electrolytic solution) if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger.

The volume (V) of the capacitor is preferably 1 cm$^3$ or less, more preferably 0.7 cm$^3$ or less, still more preferably 0.5 cm$^3$ or less, and most preferably 0.3 cm$^3$ or less. There is no specific limit to how far the volume of the capacitor may be reduced, but from the relationship with the volumes of the electrodes, separator, and container, the practical volume is preferably 0.05 cm$^3$ or larger.

Considering the power consumption requirements associated with the storing and updating of display information in the image display device of the application example 6, it is preferable that the capacitor incorporated in the display device have an electric capacity of about 0.1 mAh or larger, more preferably 0.25 mAh or larger, still more preferably 0.5 mAh or larger, and most preferably 1 mAh or larger. The upper limit value of the voltage that can be used is at least 2 V or higher, more preferably 3 V or higher, and still more preferably 4.5 V or higher.

Examples of methods that can be employed to supply power from the capacitor to the display device are shown below, and a suitable one is selected according to the purpose.

(1) Power is supplied directly from the input/output terminals of the capacitor.
(2) Power is supplied from the input/output terminals of the capacitor via a voltage conversion circuit (such as a voltage regulating circuit, a voltage step-up circuit, or a voltage step-down circuit).

Examples of methods that can be employed for charging the capacitor of the present invention from various power supply sources are shown below, and a suitable one is selected according to the purpose.

(1) The input/output terminals of the capacitor are connected directly to the power supply source.
(2) The input/output terminals of the capacitor are connected to the power supply source via a current regulating circuit to charge the capacitor with a constant current.
(3) The input/output terminals of the capacitor are connected to the power supply source via a voltage regulating circuit to charge the capacitor with a constant voltage.

Here, the power supply source refers to an external power supply or to a power generating device or the like built into the display device; in the case of the former, it refers to a wired power supply system using a cable or terminals or to a contactless power supply system using an electromagnetic/electric conversion device (such as an RF coil or an antenna). In the case of the latter, it refers to a power generating device such as a solar cell, a thermal/electric conversion device, or a mechanical/electric conversion device (a piezoelectric device, a mechanical vibration to electricity conversion device, or the like).

Preferably, if necessary, a suitable switching device (such as a transistor or a relay) may be provided between the power supply source and the capacitor or between the capacitor and the load so that the charging/discharging of the capacitor can be controlled by controlling the on/off operation of the switching device, or alternatively, a rectifier (such as a diode) may be provided so that the current flow associated with the charging/discharging of the capacitor can be controlled.

As a light modulating device for use in the image display device of the application example 6, various kinds of light modulating devices, including a liquid crystal light modulating device, can be used; among others, a light modulating device capable of bistable driving is particularly preferable from the standpoint of power consumption. The bistable light modulating device requires an external energy supply (voltage application, power supply, etc.) when updating the display, but has the characteristic that the display state, once produced, can be maintained without any external energy supply, by utilizing the thermal energy bistability (memory capability) of the light modulating layer; examples include a liquid crystal cell using a cholesteric liquid crystal (including a light scattering type using a polymer-dispersed liquid crystal) and a light modulating device based on the electrophoresis or autorotation, etc. of charged microparticles, spheres, powders, or the like.

The capacitor that can be used advantageously in the image display device of the application example 6 will be described in detail below.

For both the anode and cathode of the capacitor, it is preferable to use activated carbon whose specific surface area, as measured by the BET method, is 500 $m^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 $m^2$/g but not larger than 2500 $m^2$/g, and more preferably not smaller than 1000 $m^2$/g but not larger than 2500 $m^2$/g. The specific surface area smaller than 500 $m^2$/g or larger than 2500 $m^2$/g is not desirable, because in that case a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. In this patent specification, the "average particle size" refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size that falls within the preferable range according to the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one side or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/$cm^3$ or higher for both the anode and cathode, more preferably 15 F/$cm^3$ or higher, still more preferably 18 F/$cm^3$ or higher, and most preferably 21 F/$cm^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 $\mu$m or less, more preferably 25 $\mu$m or less, and most preferably 20 $\mu$m or less.

For the anode and cathode, it is preferable to use an electrode structure that does not develop visible surface defects (such as cracking, delamination, etc.) when subjected to a 4-mm radius bending test. Such an electrode structure is advantageously used, for example, when achieving a thinner capacitor. The structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 $\mu$m, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and means such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 $\mu$m or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, the electrode thickness exceeding the above upper limit is not desirable, because it would then become difficult to obtain a desired output characteristic.

The electrode thickness is preferably 60 $\mu$m or less, as described above, but from the standpoint of achieving higher 1000C discharge efficiency or higher output efficiency even at a current output greater than 1000C, the electrode thickness is more preferably 50 $\mu$m or less, and still more preferably 40 $\mu$m or less; in particular, for the purpose of achieving a particularly excellent output characteristic at low temperatures of 0°C or below, an electrode thickness of 30 $\mu$m or less is most preferable.

There is no specific limit to how far the electrode thickness may be reduced, but the thickness that can be used in practice is about 5 $\mu$m or greater. However, as the electrode thickness decreases, it becomes more difficult to achieve a high volumetric energy density for the capacitor; therefore, the electrode thickness is preferably not smaller than 10 $\mu$m, and more preferably not smaller than 15 $\mu$m.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 $\mu$m, the thickness of the separator is preferably 50 $\mu$m or less, and when the electrode thickness is 20 $\mu$m, the thickness of the separator is preferably 100 $\mu$m or less.

Further, for the purpose of achieving a higher volumetric energy density or higher output characteristic, the thickness of the separator is preferably 80 $\mu$m or less, more preferably 60 $\mu$m or less, still more preferably 40 $\mu$m or less, and most preferably 20 $\mu$m or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 $\mu$m, and more preferably not smaller than 10 $\mu$m.

Further preferably, the separator has a porosity of 30 to 80%, a permeability of 5 to 300 seconds/100 cc (JIS P8117), and an average internal pore size of 0.01 to 5 $\mu$m.

Here, the porosity is calculated from the following equation.

$$\texttt{Porosity (\%) = (1-d_f/d_0)} \times \texttt{100}$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator' volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. In this patent specification, the average internal pore size is computed by performing image processing on a cross-sectional photograph taken through an SEM. An average internal pore size smaller than the lower limit value is not desirable, because the ion conductivity of the electrolyte would significantly drop. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 cc, and more preferably 10 to 100 seconds/100 cc.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as $LiPF_6$, $LiBF_4$, etc. For the solvent for dissolving the electrolyte, use may be made of propylene carbonate, ethylene carbonate, diethyl carbonate, dimethyl carbonate, methylethyl carbonate, dimethoxyethane, $\gamma$-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/L is preferable.

The electric conductivity at 25°C of the electrolytic solution is preferably $1\times10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 6-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals are provided with each cell, at least one terminal (hereinafter called the common electrode terminal) is electrically connected to the corresponding terminal of the other cell so that a higher voltage output can be taken between the other two electrode terminals.

In the latter structure, it is also preferable to fold the common electrode terminals over the capacitor cell structure and then package the entire structure comprising the plurality of cells in a thin laminated film (for example, a heat shrinkable film), thereby holding the cells in an integral fashion as shown.

The self-discharge rate of the capacitor used in the image display device of the present invention is preferably less than 10 (% per day). Here, the self-discharge rate is defined by dividing by the initial charge voltage the voltage drop that occurred when the capacitor, after being fully charged under prescribed conditions, was left idle for one day (24 hours) with its terminals open in an environment with a temperature of 25°C and a humidity of 30%. The self-discharge rate is a particularly important characteristic for practical applications when the watch of this application example does not have a battery other than the capacitor and uses the capacitor as the main battery. The self-discharge rate is preferably less than 10%, more preferably less than 5%, still more preferably less than 3%, and most preferably less than 2%.

[Fabrication examples of capacitor]

Specific fabrication examples of the capacitor that can be used advantageously in the application example 6 will be shown below. In the fabrication examples, the measurement of each item was performed in the following manner.

(1) Particle size distribution (average particle size):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 $cm^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from arbitrarily selected 10 points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from arbitrarily selected five points on the sample, and their average value was taken as the measured value.

(5) Capacitance density of activated carbon:

An evaluation cell having electrodes each measuring 20 mm $\times$ 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.

Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density (F/cm$^3$) per unit volume of the electrode layer was calculated by dividing the capacitance (F) of the evaluation cell by the total volume of the two electrode layers.

[Capacitor fabrication example 6-1]

MSP-20 manufactured by Kansai Coke and Chemicals was used as the activated carbon, and the activated carbon was dispersed in a solvent and was milled for 75 minutes by a bead mill using 2-mm diameter zirconia beads. Dimethylacetamide was used as the solvent. Activated carbon with an average particle size of 0.7 $\mu$m was thus obtained. The BET specific surface area of the thus obtained activated carbon was about 1760 m$^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A conductive adhesive (EB-815 manufactured by Acheson (Japan)) using a polyamide-based thermosetting resin as the binder was applied over a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

Then, the slurry was applied over the current collector on which the conductive adhesive layer was formed, and the structure was dried by heating and pressed to produce an electrode having an electrode thickness of 40 $\mu$m (excluding the thickness of the current collector).

The capacitance density of the thus produced electrode was about 18.0 F/cm$^3$; the electrode was subjected to a 4-mm radius bending test, but no surface detects visible to the naked eye were observed.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 $\mu$m. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/ 100 cc (JIS P8117).

Using this separator and the electrode cut to a prescribed size, and also using an electrolytic solution prepared by dissolving triethylmethylammonium·BF$_4$ in propylene carbonate at a concentration of 1.5 mol/l and a container formed from a 105-$\mu$m thick aluminum/resin laminated film, a capacitor was fabricated in the following manner; that is, a pair of electrodes with the separator sandwiched between them was placed into the aluminum laminated film container preformed in a bag-like shape, the electrolytic solution was vacuum-injected, and the cell was sealed, completing the fabrication of the capacitor comprising a pair of electrodes.

Here, the anode/cathode size (the portion where the electrode was formed) was 14 mm $\times$ 20 mm, the size of the separator was 16 $\times$ 22 mm, the size of the container was 18 mm $\times$ 28 mm, and the size of the seal portion was about 18 mm $\times$ 4 mm.

The capacitor was charged at a constant current and a constant voltage, that is, the capacitor was first charged up to 2.5 V at a current of 0.3 mA, and then a constant voltage of 2.5 V was applied for 10 minutes. After that, the capacitor was discharged at a constant current of 0.3 mA until the voltage decreased to 0 V. The discharge capacity (1C discharge capacity) obtained from the discharge curve was about 0.28 mAh, and the discharged energy was about 0.35 mWh.

Further, after fully charging the capacitor in the same manner as described above, when the capacity was measured under a constant discharge current of 280 mA (1000C) it was found that the capacitor retained a capacity about 83% of the 1C discharge capacity (the 1000C discharge efficiency was 83%), and that the energy when discharged at 1000C was about 0.24 mWh.

Since the overall thickness (D) of the capacitor was about 0.35 mm, and the volume (V) was about 0.18 cm$^3$, the energy density of the capacitor when discharged at 1000C was about 1.33 Wh/L.

Here, the value of A in the equation (1) was 0.81, and the value of B in the equation (2) was 1.1, both falling within the preferable range defined in the present invention. This shows that a capacitor having a high power output characteristic and a high volumetric energy density was achieved.

Further, the capacitor was charged at a constant current and a constant voltage, that is, the capacitor was first charged up to 2.5 V at a current of 0.3 mA, and then a constant voltage of 2.5 V was applied for 24 hours, thereby fully charging the capacitor.

Then, after the capacitor was left idle with its terminals open in an environment with a temperature of 25°C and a humidity of 30%, when the terminal voltage was measured the voltage was 2.4 V, which showed that the self-discharge rate was 4%.

[Capacitor fabrication example 6-2]

Using the same slurry and current collector as those in fabrication example 6-1, two kinds of electrodes were produced, one with the conductive adhesive layer and electrode layer formed only on one side of the current collector and the other with these layers formed on both sides.

Using the two kinds of electrodes each cut to a prescribed size, and also using the same separator and electrolytic solution as those in fabrication example 6-1 and a container formed from a 150-μm thick aluminum/resin laminated film, a capacitor was fabricated in the following manner.

That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed into the aluminum laminated film container preformed in a bag-like shape, the electrolytic solution was vacuum-injected, and the cell was sealed, completing the fabrication of a stacked capacitor comprising a stack of four anode/cathode pairs.

Here, the current collectors of the same polarity were connected to each other by ultrasonic welding at their electrode lead portions, and the anode and cathode terminals were brought outside the capacitor.

The anode/cathode size (the portion where the electrode was formed) was 14 mm × 20 mm, the size of the separator was 16 × 22 mm, the size of the container was 18 mm × 28 mm, and the size of the seal portion was about 18 mm × 4 mm.

The capacitor was charged at a constant current and a constant voltage, that is, the capacitor was first charged up to 2.5 V at a current of 1.1 mA, and then a constant voltage of 2.5 V was applied for 10 minutes. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor in the same manner as described above, when the capacity was measured under a constant discharge current of 1120 mA (1000C) it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 cm$^3$, the energy density of the capacitor when discharged at 1000C was about 2.55 Wh/L.

Here, the value of A in the equation (1) was 1.47, and the value of B in the equation (2) was 2.08, both falling within the preferable range defined in the present invention. This shows that a capacitor having a high power output characteristic and a high volumetric energy density was achieved.

Further, the capacitor was charged at a constant current and a constant voltage, that is, the capacitor was first charged up to 2.5 V at a current of 1.1 mA, and then a constant voltage of 2.5 V was applied for 24 hours, thereby fully charging the capacitor.

Then, after the capacitor was left idle with its terminals open in an environment with a temperature of 25°C and a humidity of 30%, when the terminal voltage was measured the voltage was 2.38 V, which showed that the self-discharge rate was about 5%.

[Capacitor fabrication example 6-3]

Electrodes, separators, and an electrolytic solution similar to those used in fabrication example 6-2 were used here. A component A having a size of 14 mm × 20 mm was produced by forming an electrode layer only on one side, a component B having a size of 14 mm × 20 mm was produced by forming electrode layers on both sides, and a component C having an electrode layer size of 14 mm × 20 mm and a component size of 18 mm × 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in fabrication example 1, and aluminum/resin laminated films, each having a thickness of 150 μm and measuring 18 mm × 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C) it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range defined in the present invention. This shows that a capacitor having a high power output characteristic and a high volumetric energy density was achieved.

Further, the capacitor was charged at a constant current and a constant voltage, that is, the capacitor was first charged up to 2.5 V at a current of 0.8 mA, and then a constant voltage of 2.5 V was applied for 24 hours, thereby fully charging the capacitor.

Then, after the capacitor was left idle with its terminals open in an environment with a temperature of 25°C and a humidity of 30%, when the terminal voltage was measured the voltage was 2.33 V, which showed that the self-discharge rate was about 7%.


[Capacitor fabrication example 6-4]

Two capacitors, each identical to that fabricated in fabrication example 6-2, were connected in series and combined in one capacitor in the same manner as shown in Figures 2 and 4. The overall thickness (D) of the resultant capacitor was about 1.5 mm, and its volume (V) was about 0.77 cm$^3$.

The capacitor was charged at a constant current and a constant voltage for 10 minutes, that is, the capacitor was first charged up to 5.0 V at a current of 1.1 mA, and then a constant voltage of 5.0 V was applied. After that, the capacitor was discharged at a constant current of 1.1 mA until the voltage decreased to 0 V. The discharge capacity (1C discharge capacity) obtained from the discharge curve was about 1.11 mAh, and the discharged energy was about 2.78 mWh.

Further, after fully charging the capacitor in the same manner as described above, when the capacity was measured under a constant discharge current of 1110 mA (1000C), it was found that the capacitor retained a capacity about 80% of the 1C discharge capacity (the 1000C discharge efficiency was 80%), and that the energy when discharged at 1000C was about 1.78 mWh.

The energy density of this capacitor when discharged at 1000C was about 2.31 Wh/L.

Here, the value of A in the equation (1) was 0.06, and the value of B in the equation (2) was 1.31, both falling within the preferable range. This shows that a capacitor having a high power output characteristic and a high volumetric energy density was achieved.

Further, the capacitor was charged at a constant current and a constant voltage, that is, the capacitor was first charged up to 5.0 V at a current of 1.1 mA, and then a constant voltage of 5.0 V was applied for 24 hours, thereby fully charging the capacitor.

Then, after the capacitor was left idle with its terminals open in an environment with a temperature of 25°C and a humidity of 30%, when the terminal voltage was measured the voltage was 4.7 V, which showed that the self-discharge rate was about 6%.

(Comparative example 6-1)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.047 F. The overall thickness (D) of the capacitor was about 2 mm, and the volume (V) was about 1.8 cm$^3$; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Capacitor comparative example 6-2)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm$^3$ ; assuming a full charge voltage of 3.6 V, the energy density of the capacitor when discharged at 1000C was 0.61 Wh/L. Here, the value of B was -0.82, which was outside the preferable range. Accordingly, the capacitor of this example would not be adequate as a capacitor that can simultaneously achieve a high power output characteristic and a high volumetric energy density.

[Application example 7]

Application example 7 concerns an example in which the capacitor of the present invention is applied to various kinds of self-luminous type light-emitting units. Specifically, this application example concerns various kinds of light-emitting diodes (LEDs), laser diodes (LDs), electroluminescent type light-emitting units such as porous silicon light-emitting devices, cold-cathode tubes, field-emission type light-emitting units (FEDs, SEDs, etc.), and discharge type light-emitting units such as gas lasers, and more specifically, the application example concerns a light-emitting unit that incorporates the ultra-thin and/or small-volume capacitor having a high power output characteristic and a high capacitance density.

The application example 7 also concerns various kinds of illuminating devices, image display devices such as liquid crystal displays, etc., watches, personal computers (in particular, notebook computers), mobile phones, portable information terminals, portable game machines, cameras, sensor devices, accessories, remote controllers, etc. that incorporate any one of the above enumerated light-emitting units.

In such light-emitting units and image display devices, when large instantaneous power consumption occurs, a large burden is put on the battery (a primary or secondary battery, a fuel cell battery, or the like) mounted in the apparatus incorporating such a light-emitting unit, and this often causes problems such as a significant instantaneous drop in output voltage and a reduction in battery life.

To address such problems, in the prior art, attempts have been made to use an electric double layer capacitor in combination with a battery in order to reduce the large current load applied for a few seconds to the battery. For example, Japanese Unexamined Patent Publication No. H10-294135 discloses a hybrid power supply constructed by combining a capacitor and a lithium-ion battery (850 mAh), and states that the hybrid power supply provides a higher capacity under low-temperature large current load conditions (1.5 A, 0.5 msec) than the lithium-ion battery alone. Japanese Unexamined Patent Publication No. 2002-246071 also discloses a hybrid power supply constructed by combining a capacitor and a lithium-ion battery, and states that, even under a 2C load condition, only a 0.8C load is applied to the lithium-ion battery.

On the other hand, in configurations where all or part of the power consumed by the light-emitting device is supplied from a solar cell or other power generating device built into the light-emitting unit or in the apparatus incorporating the light-emitting unit, it is believed that a capacitor that does not require complex peripheral circuitry can be used advantageously as a battery for storing power generated by the power generating device.

No one skilled in the art would deny the effectiveness of the combination of a capacitor and a battery or the combination of a capacitor and a power generating device such as a solar cell as described above; however, in the case of watches in which a size reduction is strongly demanded, using a capacitor having a large thickness or volume like a conventional one has been difficult in practice when the mounting space required is considered.

According to the application example 7, for example, in the case of a system that uses the capacitor in combination with the main battery, there are offered such advantages as being able to reduce the power burden of the battery, thus serving to extend the continuous operation time of the battery, while in the case of a system that uses the capacitor as the main battery itself, there are offered such advantages as being able to simplify the power supply system and achieve size reduction.

The mode for carrying out the application example 7 will be described in detail below.

The application example 7 concerns a light-emitting unit which incorporates at least a capacitor having an electric capacity of 0.1 mAh or higher, a light-emitting device, and a control circuit for electrically controlling the light emission of the light-emitting device, and in which power is supplied from the capacitor to the control means when causing the light-emitting device to emit light, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and at least either the condition that the value of A in equation (1) below be not smaller than -0.2 or the condition that the value of B in equation (2) below be not smaller than 0.8 is satisfied.

$$W \geq 1.5D + A \quad (1)$$

$$W \geq 1.3V + B \quad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour. This value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

Generally, as is well known to those skilled in the art, as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease; taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously. Considering the fact that prior known capacitors have not been able to satisfy the preferable range of the value of A or B in the above equation, the capacitor of the present invention offers considerable potential as the only capacitor that can meet the stringent demands of the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as earlier described, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equation (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is almost determined by the sum of the thickness of the electrode element comprising one or more anode/cathode pairs and separators and the thickness of the container itself (the thickness of the container wall), but it may include some dead space (for example, a space containing only an electrolytic solution) if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger.

The volume (V) of the capacitor is preferably 1 cm$^3$ or less, more preferably 0.7 cm$^3$ or less, still more preferably 0.5 cm$^3$ or less, and most preferably 0.3 cm$^3$ or less. There is no specific limit to how far the volume of the capacitor may be reduced, but from the relationship with the volumes of the electrodes, separator, and container, the practical volume is preferably 0.05 cm$^3$ or larger.

In the light-emitting unit, considering the power consumption associated with light emission of the light-emitting device, it is preferable that the capacitor have an electric capacity of about 0.1 mAh or larger, more preferably 0.25 mAh or larger, still more preferably 0.5 mAh or larger, and most preferably 1 mAh or larger. The upper limit value of the voltage that can be used is at least 2 V or higher, more preferably 3 V or higher, and still more preferably 4.5 V or higher.

Preferably, the light-emitting unit comprises at least, in addition to the capacitor, a light-emitting device and a control circuit for electrically controlling the light emission of the light-emitting device.

Examples of the light-emitting device include various kinds of light-emitting diodes (LEDs), laser diodes (LDs), electroluminescent type light-emitting units such as porous silicon light-emitting devices, cold-cathode tubes, field-emission type light-emitting units, and discharge type light-emitting units such as gas lasers. The above LEDs include organic ELs and inorganic ELs, and the various kinds of light-emitting units listed above are not specifically limited in their shapes (may include a surface-emitting type) or in their emission wavelengths (infrared, ultraviolet, white light, etc.).

A control circuit designed to match the specification of the light-emitting device is advantageously used as the circuit for electrically controlling the light emission of the light-emitting device; in the present invention, it is preferable to provide an electrical connection so that power is supplied to the control circuit from the capacitor alone, or to electrically connect the capacitor in parallel to the main battery (a primary or secondary battery, a fuel cell battery, or the like) mounted in a driving device and to provide an electrical connection so that power is supplied to the control circuit from both of them.

Specific examples of methods that can be employed to supply power from the capacitor or the main battery to the control circuit are shown below, and a suitable one is selected according to the purpose.

    (1) The output terminal of the capacitor or the main battery is connected directly to the power supply line or the like of the control circuit.

    (2) The output terminal of the capacitor or the main battery is connected to the power supply line or the like of the control circuit via a suitable voltage converting/regulating circuit to supply a constant voltage.

Among others, the power supply system in which the capacitor and the main battery are electrically connected in parallel so that power is supplied to the control circuit from both of them is preferably used, the advantage of this system being that even when a battery having a poor output characteristic (a battery having a large internal resistance, examples including fuel cell batteries and various kinds of primary batteries) is used, for example, as the main battery, the amount of voltage drop of the main battery due to the instantaneous increase in load current associated with light emission can be reduced because of the effect of the superimposition of the capacitor output current and, as a result, the continuous operation time of the battery and hence the battery life can be extended.

In one preferred method of parallel connection, the output terminals of the capacitor and the main battery is simply connected in common, and in another preferred method, the output terminal of the main battery is connected to the primary side (input side) of the suitable voltage converting/regulating circuit, and the capacitor is connected in parallel on the secondary side (output side) of the regulating circuit.

Such a power supply system is preferable, because the main battery automatically charges the capacitor with a constant voltage during the period that the amount of power supply to the control circuit is small.

Examples of methods that can be employed for charging the capacitor from various power supply sources are shown below, and a suitable one is selected according to the purpose.

  (1) The input terminal of the capacitor is connected directly to the power supply source.
  (2) The input terminal of the capacitor is connected to the power supply source via a current regulating circuit to charge the capacitor with a constant current.
  (3) The input terminal of the capacitor is connected to the power supply source via a voltage regulating circuit to charge the capacitor with a constant voltage.

Examples of the power supply source here include a primary or secondary battery or a fuel cell battery used as the main battery of the light-emitting unit, a power generating device (such as a solar cell) internal to the light-emitting unit, a power supply external to the light-emitting unit (in this case, power is supplied via a prescribed external terminal or the like), etc.

Further, in the various power supply systems described above, if needed, a monitor circuit for monitoring the output voltage of the voltage converting/regulating circuit may be provided, and a circuit may be added that externally controls the charging/discharging of the capacitor.

Preferably, if necessary, a suitable switching device (such as a transistor or a relay) may be provided between the power supply source and the capacitor or between the capacitor and the control circuit so that the charging/discharging of the capacitor can be controlled by controlling the on/off operation of the switching device, or alternatively, a rectifier (such as a diode) may be provided so that the current flow associated with the charging/discharging of the capacitor can be controlled.

The capacitor that can be used advantageously in the light-emitting unit of the application example 7 will be described in detail below.

For both the anode and cathode of the capacitor, it is preferable to use activated carbon whose specific surface area, as measured by the BET method, is 500 m$^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 m$^2$/g but not larger than 2500 m$^2$/g, and more preferably not smaller than 1000 m$^2$/g but not larger than 2500 m$^2$/g. The specific surface area smaller than 500 m$^2$/g or larger than 2500 m$^2$/g is not desirable, because in that case a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. The "average particle size" here refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size that falls within the preferable range according to the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one side or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/cm$^3$ or higher for both the anode and cathode of the capacitor of the present invention, more preferably 15 F/cm$^3$ or higher, still more preferably 18 F/cm$^3$ or higher, and most preferably 21 F/cm$^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 $\mu$m or less, more preferably 25 $\mu$m or less, and most preferably 20 $\mu$m or less.

For the anode and cathode, it is preferable to use an electrode structure that does not develop a visible surface defect (such as cracking, delamination, etc.) when subjected to a 4-mm radius bending test. Such an electrode structure is advantageously used, for example, when achieving a thinner capacitor. The structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 $\mu$m, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and means such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 $\mu$m or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, the electrode thickness exceeding the above upper limit is not desirable, because it would then become difficult to obtain a desired output characteristic.

The electrode thickness is preferably 60 $\mu$m or less, as described above, but from the standpoint of achieving higher 1000C discharge efficiency or higher output efficiency even at a current output greater than 1000C, the electrode thickness is more preferably 50 $\mu$m or less, and still more preferably 40 $\mu$m or less; in particular, for the purpose of achieving a particularly excellent output characteristic at low temperatures of 0°C or below, an electrode thickness of 30 $\mu$m or less is most preferable.

There is no specific limit to how far the electrode thickness may be reduced, but the thickness that can be used in practice is about 5 $\mu$m or greater. However, as the electrode thickness decreases, it becomes more difficult to achieve a high volumetric energy density for the capacitor; therefore, the electrode thickness is preferably not smaller than 10 $\mu$m, and more preferably not smaller than 15 $\mu$m.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 $\mu$m, the thickness of the separator is preferably 50 $\mu$m or less, and when the electrode thickness is 20 $\mu$m, the thickness of the separator is preferably 100 $\mu$m or less.

Further, for the purpose of achieving a higher volumetric energy density or higher output characteristic, the thickness of the separator is preferably 80 $\mu$m or less, more preferably 60 $\mu$m or less, still more preferably 40 $\mu$m or less, and most preferably 20 $\mu$m or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 $\mu$m, and more preferably not smaller than 10 $\mu$m.

Further preferably, the separator has a porosity of 30 to 80%, a permeability of 5 to 300 seconds/100 ml (JIS P8117), and an average internal pore size of 0.01 to 5 $\mu$m.

Here, the porosity is calculated from the following equation.

$$\text{Porosity (\%)} = (1 - d_f/d_0) \times 100$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas. On the other hand, the apparent density do is obtained by dividing the separator's weight per unit area (g/cm$^2$) by the separator' volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. In this example, the average internal pore size is computed by performing image processing on a cross-sectional photograph taken through an SEM. An average internal pore size smaller than the lower limit value is not desirable, because the ion conductivity of the electrolyte would significantly drop. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 ml, and more preferably 10 to 100 seconds/100 ml.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor, because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as $LiPF_6$, $LiBF_4$, etc. For the solvent for dissolving the electrolyte, use may be made of propylene carbonate, ethylene carbonate, diethyl carbonate, dimethyl carbonate, methylethyl carbonate, dimethoxyethane, γ-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/L is preferable.

The electric conductivity at 25°C of the electrolytic solution is preferably $1 \times 10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 μm or less, more preferably 150 μm or less, and most preferably 120 μm or less.

Because of the need to satisfy various reliability requirements such as the mechanical strength of the capacitor, barrier capability against various gases, chemical stability, and thermal stability, the lower limit of the thickness of the container is preferably about 50 μm or greater, and more preferably 70 μm or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 7-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (hereinafter called the common electrode terminal) is electrically connected to the corresponding terminal of the other cell so that a higher voltage output can be taken between the other two electrode terminals.

In the later structure, it is also preferable to fold the common electrode terminals over the capacitor cell structure and then package the entire structure comprising the plurality of cells in a thin laminated film (for example, a heat shrinkable film), thereby holding the cells in an integral fashion as shown.

The self-discharge rate of the capacitor used in the watch of the present invention is preferably less than 10 (% per day). Here, the self-discharge rate is defined by dividing by the initial charge voltage the voltage drop that occurred when the capacitor, after being fully charged under prescribed conditions, was left idle for one day (24 hours) with its terminals open in an environment with a temperature of 25°C and a humidity of 30%. The self-discharge rate is a particularly important characteristic for practical applications when the device of the application example 7 does not have a battery other than the capacitor and uses the capacitor as the main battery. The self-discharge rate is preferably less than 10%, more preferably less than 5%, still more preferably less than 3%, and most preferably less than 2%.

The light-emitting unit of the application example 7 can be incorporated particularly advantageously in a relatively small device or apparatus. Specific examples include various kinds of image display devices such as liquid crystal displays, etc., watches, personal computers (in particular, notebook computers), mobile phones, portable information terminals, portable game machines, cameras, sensor devices (for example, devices having a function to communicate sensing information in visible form by means of LEDs or the like), accessories, and remote controllers (controllers for remotely operating various television receivers, audio equipment, air-conditioning equipment, illuminating equipment, etc. by such means as infrared communication).

[Fabrication examples of capacitor]

Specific fabrication examples of the capacitor that can be used advantageously in the device of the application example 7 are described below. In the fabrication examples, the measurement of each item was performed in the following manner.

(1) Particle size distribution (average particle size):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 cm$^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from 10 arbitrarily selected points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from five arbitrarily selected points on the sample, and their average value was taken as the measured value.

(5) Capacitance density of activated carbon:

An evaluation cell having electrodes each measuring 20 mm × 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.
Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density (F/cm$^3$) per unit volume of the electrode layer was calculated by dividing the capacitance (F) of the evaluation cell by the total volume of the two electrode layers.

[Capacitor fabrication example 7-1]

MSP-20 manufactured by Kansai Coke and Chemicals was used as the activated carbon, and the activated carbon was dispersed in a solvent and was milled for 75 minutes by a bead mill using 2-mm diameter zirconia beads. Dimethylacetamide was used as the solvent. Activated carbon with an average particle size of 0.7 $\mu$m was thus obtained. The BET specific surface area of the thus obtained activated carbon was about 1760 m$^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A conductive adhesive (EB-815 manufactured by Acheson (Japan)) using a polyamide-based thermosetting resin as the binder was applied over a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

Then, the slurry was applied over the current collector on which the conductive adhesive layer was formed, and the structure was dried by heating and pressed to produce an electrode having an electrode thickness of 40 $\mu$m (excluding the thickness of the current collector).

The capacitance density of the thus produced electrode was about 18.0 F/cm$^3$; the electrode was subjected to a 4-mm radius bending test, but no surface detects visible to the naked eye were observed.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 $\mu$m. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/ 100 ml (JIS P8117).

Using this separator and the electrode cut to a prescribed size, and also using an electrolytic solution prepared by dissolving triethylmethylammonium-BF$^4$ in propylene carbonate at a concentration of 1.5 mol/l and a container formed from a 105-$\mu$m thick aluminum/resin laminated film, a capacitor was fabricated in the following manner; that is, a pair of electrodes with the separator sandwiched between them was placed into the aluminum laminated film container preformed in a bag-like shape, the electrolytic solution was vacuum-injected, and the cell was sealed, completing the fabrication of the capacitor comprising a pair of electrodes.

Here, the anode/cathode size (the portion where the electrode was formed) was 14 mm $\times$ 20 mm, the size of the separator was 16 $\times$ 22 mm, the size of the container was 18 mm $\times$ 28 mm, and the size of the seal portion was about 18 mm $\times$ 4 mm.

The capacitor was charged at a constant current and a constant voltage, that is, the capacitor was first charged up to 2.5 V at a current of 0.3 mA, and then a constant voltage of 2.5 V was applied for 10 minutes. After that, the capacitor was discharged at a constant current of 0.3 mA until the voltage decreased to 0 V. The discharge capacity (1C discharge capacity) obtained from the discharge curve was about 0.28 mAh, and the discharged energy was about 0.35 mWh.

Further, after fully charging the capacitor in the same manner as described above, when the capacity was measured under a constant discharge current of 280 mA (1000C), it was found that the capacitor retained a capacity about 83% of the 1C discharge capacity (the 1000C discharge efficiency was 83%), and that the energy when discharged at 1000C was about 0.24 mWh.

Since the overall thickness (D) of the capacitor was about 0.35 mm, and the volume (V) was about 0.18 cm$^3$, the energy density of the capacitor when discharged at 1000C was about 1.33 Wh/L.

Here, the value of A in the equation (1) was 0.81, and the value of B in the equation (2) was 1.1, both falling within the preferable range defined in the present invention. This shows that a capacitor having a high power output characteristic and a high volumetric energy density was achieved.

Further, the capacitor was charged at a constant current and a constant voltage, that is, the capacitor was first charged up to 2.5 V at a current of 0.3 mA, and then a constant voltage of 2.5 V was applied for 24 hours, thereby fully charging the capacitor.

Then, after the capacitor was left idle with its terminals open in an environment with a temperature of 25°C and a humidity of 30%, when the terminal voltage was measured the voltage was 2.4 V, which showed that the self-discharge rate was 4%.

[Capacitor fabrication example 7-2]

Using the same slurry and current collector as those in fabrication example 7-1, two kinds of electrodes were produced, one with the conductive adhesive layer and electrode layer formed only on one side of the current collector and the other with these layers formed on both sides.

Using the two kinds of electrodes each cut to a prescribed size, and also using the same separator and electrolytic solution as those in fabrication example 2-1 and a container formed from a 150-$\mu$m thick aluminum/resin laminated film, a capacitor was fabricated in the following manner.

That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed into the aluminum laminated film container preformed in a bag-like shape, the electrolytic solution was vacuum-injected, and the cell was sealed, completing the fabrication of a stacked capacitor comprising a stack of four anode/cathode pairs.

Here, the current collectors of the same polarity were connected to each other by ultrasonic welding at their electrode lead portions, and the anode and cathode terminals were brought outside the capacitor.

The anode/cathode size (the portion where the electrode was formed) was 14 mm $\times$ 20 mm, the size of the separator was 16 $\times$ 22 mm, the size of the container was 18 mm $\times$ 28 mm, and the size of the seal portion was about 18 mm $\times$ 4 mm.

The capacitor was charged at a constant current and a constant voltage, that is, the capacitor was first charged up to 2.5 V at a current of 1.1 mA, and then a constant voltage of 2.5 V was applied for 10 minutes. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor in the same manner as described above, when the capacity was measured under a constant discharge current of 1120 mA (1000C), it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 cm$^3$, the energy density of the capacitor when discharged at 1000C was about 2.55 Wh/L.

Here, the value of A in the equation (1) was 1.47, and the value of B in the equation (2) was 2.08, both falling within the preferable range defined in the present invention. This shows that a capacitor having a high power output characteristic and a high volumetric energy density was achieved.

Further, the capacitor was charged at a constant current and a constant voltage, that is, the capacitor was first charged up to 2.5 V at a current of 1.1 mA, and then a constant voltage of 2.5 V was applied for 24 hours, thereby fully charging the capacitor.

Then, after the capacitor was left idle with its terminals open in an environment with a temperature of 25°C and a humidity of 30%, when the terminal voltage was measured the voltage was 2.38 V, which showed that the self-discharge rate was about 5%.

[Capacitor fabrication example 7-3]

Electrodes, separators, and an electrolytic solution similar to those used in fabrication example 7-2 were used here. A component A having a size of 14 mm $\times$ 20 mm was produced by forming an electrode layer only on one side, a component B having a size of 14 mm $\times$ 20 mm was produced by forming electrode layers on both sides, and a component C having an electrode layer size of 14 mm $\times$ 20 mm and a component size of 18 mm $\times$ 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in fabrication example 1, and aluminum/resin laminated films, each having a thickness of 150 $\mu$m and measuring 18 mm $\times$ 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C), it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range defined in the present invention. This shows that a capacitor having a high power output characteristic and a high volumetric energy density was achieved.

Further, the capacitor was charged at a constant current and a constant voltage, that is, the capacitor was first charged up to 2.5 V at a current of 0.8 mA, and then a constant voltage of 2.5 V was applied for 24 hours, thereby fully charging the capacitor.

Then, after the capacitor was left idle with its terminals open in an environment with a temperature of 25°C and a humidity of 30%, when the terminal voltage was measured the voltage was 2.33 V, which showed that the self-discharge rate was about 7%.

[Capacitor fabrication example 7-4]

Two capacitors, each identical to that fabricated in fabrication example 7-2, were connected in series and combined in one capacitor in the same manner as shown in Figures 2 and 4. The overall thickness (D) of the resultant capacitor was about 1.5 mm, and its volume (V) was about 0.77 cm$^3$.

The capacitor was charged at a constant current and a constant voltage for 10 minutes, that is, the capacitor was first charged up to 5.0 V at a current of 1.1 mA, and then a constant voltage of 5.0 V was applied. After that, the capacitor was discharged at a constant current of 1.1 mA until the voltage decreased to 0 V. The discharge capacity (1C discharge capacity) obtained from the discharge curve was about 1.11 mAh, and the discharged energy was about 2.78 mWh.

Further, after fully charging the capacitor in the same manner as described above, when the capacity was measured under a constant discharge current of 1110 mA (1000C), it was found that the capacitor retained a capacity about 80% of the 1C discharge capacity (the 1000C discharge efficiency was 80%), and that the energy when discharged at 1000C was about 1.78 mWh.

The energy density of this capacitor when discharged at 1000C was about 2.31 Wh/L.

Here, the value of A in the equation (1) was 0.06, and the value of B in the equation (2) was 1.31, both falling within the preferable range. This shows that a capacitor having a high power output characteristic and a high volumetric energy density was achieved.

Further, the capacitor was charged at a constant current and a constant voltage, that is, the capacitor was first charged up to 5.0 V at a current of 1.1 mA, and then a constant voltage of 5.0 V was applied for 24 hours, thereby fully charging the capacitor.

Then, after the capacitor was left idle with its terminals open in an environment with a temperature of 25°C and a humidity of 30%, when the terminal voltage was measured the voltage was 4.7 V, which showed that the self-discharge rate was about 6%.

(Comparative example 7-1)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.047 F. The overall thickness (D) of the capacitor was about 2 mm, and the volume (V) was about 1.8 cm$^3$; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Capacitor comparative example 7-2)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm$^3$ ; assuming a full charge voltage of 3.6 V, the energy density of the capacitor when discharged at 1000C was 0.61 Wh/L. Here, the value of B was -0.82, which was outside the preferable range. Accordingly, the capacitor of this example would not be adequate as a capacitor that can simultaneously achieve a high power output characteristic and a high volumetric energy density.

[Application example 8]

Application example 8 concerns an example in which the capacitor of the present invention is applied to a contactless power transmitting device or radiowave transmitting/receiving device that uses radiowaves in a radiofrequency band or the like; more particularly, this application example concerns a device that incorporates the ultra-thin and/or small-volume capacitor having a high power output characteristic and a high capacitance density.

The application example 8 also concerns contactless writers/readers (for example, handheld terminals or the like used in stores and warehouses for merchandise management), sensor devices, measuring instruments, medical instruments, watches, mobile telephones, portable information terminals, portable game machines, PC cards, IC tags, personal computers, printers, toys, robots, etc. that incorporate the above-described device.

In recent years, devices that perform transmission of electric power and transmission/reception of information in a contactless fashion using radiowaves primarily in a radiofrequency band (13.56-MHz band, etc.) have come to be used widely. Examples of systems using such devices include a system that transmits power and transfer information in a contactless fashion via radiowaves, for example, to a product label containing an IC card or an RF tag, and that performs information updating, reading, etc. on a semiconductor memory by supplying power to an external medium such as the IC card or RF tag.

In the contactless power transmission using radiowaves, the transmission time is generally as short as a few seconds or less (in many cases, less than a second) but, depending on the transmission distance, the amount of information to be transmitted, etc., large instantaneous power is often required.

In the above-listed apparatus such as contactless writers/readers (handheld terminals or the like), sensor devices, measuring instruments, medical instruments, watches, mobile telephones, portable information terminals, portable game machines, personal computers, toys, robots, etc., generally the battery (a primary or secondary battery such as an alkaline battery, nickel-cadmium battery, manganese battery, nickel-hydrogen battery, or lithium-ion battery, or a fuel cell battery, etc.) that can be built into such apparatus is limited in size.

When instantaneous power such as described above is required, that is, during the peak period of power consumption, a large power burden is put on the built-in battery, causing practical problems such as a significant decrease in the output voltage of the battery and a reduction in the continuous operation time and service life of the battery.

To address such problems, in the prior art, attempts have been made to use an electric double layer capacitor in combination with a battery in order to reduce the large current load applied for a few seconds to the battery. For example, Japanese Unexamined Patent Publication No. H10-294135 discloses a hybrid power supply constructed by combining a capacitor and a lithium-ion battery (850 mAh), and states that the hybrid power supply provides a higher capacity under low-temperature large current load conditions (1.5 A, 0.5 msec) than the lithium-ion battery alone. Japanese Unexamined Patent Publication No. 2002-246071 also discloses a hybrid power supply constructed by combining a capacitor and a lithium-ion battery, and states that, even under a 2C load condition, only a 0.8C load is applied to the lithium-ion battery.

No one skilled in the art would deny the effectiveness of the combination of a capacitor and a battery such as described above; however, in the contactless power transmitting device or radiowave transmitting/receiving device in which a size reduction is demanded, using a capacitor having a thickness or volume equivalent to that of a battery has been difficult in practice when the mounting space required is considered.

According to the application example 8, by incorporating the capacitor of the present invention, the power burden of the main battery of the contactless power transmitting device or radiowave transmitting/receiving device can be greatly reduced, providing such advantages as being able to extend the continuous operation time of the battery and to reduce the size of the power supply system.

The mode for carrying out the application example 8 will be described in detail below.

The application example 8 concerns a contactless power transmitting device or radiowave transmitting/receiving device which comprises at least a capacitor having an electric capacity of 0.1 mAh or higher, an AC transmission circuit, an amplifier for amplifying the power of an AC signal output from the AC transmission circuit, and an antenna for transmitting out the AC power or signal output from the amplifier, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm$^3$), and the volumetric energy density of the capacitor at a discharge rate of 1000C at 25°C is denoted by W (Wh/L), then the value of W is at least 0.05 Wh/L, and at least either the condition that the value of A in equation (1) below be not smaller than -0.2 or the condition that the value of B in equation (2) below be not smaller than 0.8 is satisfied.

$$W \geq 1.5D + A \quad (1)$$

$$W \geq 1.3V + B \quad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour. This value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

Generally, as is well known to those skilled in the art, as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease. Taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously. Considering the fact that prior known capacitors have not been able to satisfy the preferable range of the value of A or B in the above equation, the capacitor of the present invention offers considerable potential as the only capacitor that can meet the stringent demands of the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as earlier described, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equation (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is almost determined by the sum of the thickness of the electrode element comprising one or more anode/cathode pairs and separators and the thickness of the container itself (the thickness of the container wall), but it may include some dead space (for example, a space containing only an electrolytic solution) if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger, and more preferably 0.3 mm or larger.

The volume (V) of the capacitor is preferably 1 cm$^3$ or less, more preferably 0.7 cm$^3$ or less, still more preferably 0.5 cm$^3$ or less, and most preferably 0.3 cm$^3$ or less. There is no specific limit to how far the volume of the capacitor may be reduced, but from the relationship with the volumes of the electrodes, separator, and container, the practical volume is preferably 0.05 cm$^3$ or larger, and more preferably 0.1 cm$^3$ or larger.

In the contactless power transmitting device or radiowave transmitting/receiving device of the application example 8, considering the power consumption requirements associated primarily with the radiowave transmission, it is preferable that the capacitor have an electric capacity of about 0.1 mAh or larger, more preferably 0.25 mAh or larger, still more preferably 0.5 mAh or larger, and most preferably 1 mAh or larger. The upper limit value of the voltage that can be used is at least 2 V or higher, more preferably 3 V or higher, and still more preferably 4.5 V or higher.

Preferably, the contactless power transmitting device or radiowave transmitting/receiving device of the application example 8 comprises at least an AC signal transmitting circuit, an amplifier (any one of various power amplifiers) for amplifying the power of the signal output from the transmitting circuit, and an antenna for transmitting the AC power or signal, output from the amplifier, as a radio wave outside the device. Here, the term AC refers to an electrical waveform whose voltage or potential or whose electric field strength or the like varies with time, and the waveform shape may be a rectangular shape (pulse-like shape) or a curved shape. There is no specific upper limit to its frequency, but the lower limit is about 1 Hz.

The power transmitting antenna and the signal (information) transmitting antenna may be provided as separate antennas, or alternatively, a single antenna may be used for both the power transmission and the information transmission.

In addition to these antennas, an antenna for receiving radiowaves from outside the device may preferably be provided, if necessary. The receiving antenna may be provided separately from the transmitting antenna, or a common antenna may be used for both transmission and reception.

Examples of AC signals transmitted/received by the device include signals for transmission of electric power outside the device, signals for transmission of information outside the device, and signals obtained by demodulating radiowaves received by the device into electrical signals. Preferably, these AC signals are converted from electrical signals to information by a suitable information processing circuit contained in the device.

In the present invention, it is preferable to provide an electrical connection so that power is supplied to the amplifier from the capacitor alone, or to electrically connect the capacitor in parallel to the main battery and to provide an electrical connection so that power is supplied to the amplifier from both of them.

Specific examples of methods that can be employed to supply power from the capacitor or the main battery to the amplifier are shown below, and a suitable one is selected according to the purpose.

(1) The output terminal of the capacitor or the main battery is connected directly to the power supply terminal of the amplifier.
(2) The output terminal of the capacitor or the main battery is connected to the power supply terminal of the amplifier via a suitable voltage converting/regulating circuit to supply a constant voltage.

Among others, the power supply system in which the capacitor and the main battery are electrically connected in parallel so that power is supplied to the amplifier from both of them is preferably used, the advantage of this system being that even when a battery having a poor output characteristic (a battery having a large internal resistance, examples including fuel cell batteries and various kinds of primary batteries) is used, for example, as the main battery, the amount of voltage drop of the main battery due to the instantaneous increase in load current can be reduced, because of the effect of the superimposition of the capacitor output current and, as a result, the continuous operation time of the battery and hence the battery life can be extended.

In one preferred method of parallel connection, the output terminals of the capacitor and the main battery is simply connected in common, and in another preferred method, the output terminal of the main battery is connected to the primary side (input side) of the suitable voltage converting/regulating circuit, and the capacitor is connected in parallel on the secondary side (output side) of the regulating circuit.

Such a power supply system is preferable, because the main battery automatically charges the capacitor with a constant voltage during the period that the amount of power supply to the amplifier is small.

Examples of methods that can be employed for charging the capacitor from various power supply sources are shown below, and a suitable one is selected according to the purpose.

(1) The input terminal of the capacitor is connected directly to the power supply source.
(2) The input terminal of the capacitor is connected to the power supply source via a current regulating circuit to charge the capacitor with a constant current.
(3) The input terminal of the capacitor is connected to the power supply source via a voltage regulating circuit to charge the capacitor with a constant voltage.

Examples of the power supply source here include a primary or secondary battery or a fuel cell battery used as the main battery of the contactless power transmitting device or radiowave transmitting/receiving device, a power generating device (such as a solar cell) internal to the device, a power supply external to the device (in this case, power is supplied via a prescribed external terminal or the like), etc.

Further, in the various power supply systems described above, if needed a monitor circuit for monitoring the output voltage of the voltage converting/regulating circuit may be provided, and a circuit may be added that externally controls the charging/discharging of the capacitor.

Preferably, if necessary, a suitable switching device (such as a transistor or a relay) may be provided between the power supply source and the capacitor or between the capacitor and the amplifier so that the charging/discharging of the capacitor can be controlled by controlling the on/off operation of the switching device, or alternatively, a rectifier (such as a diode) may be provided so that the current flow associated with the charging/discharging of the capacitor can be controlled.

The capacitor that can be used advantageously in the contactless power transmitting device or radiowave transmitting/receiving device of the present invention will be described in detail below.

For both the anode and cathode of the capacitor, it is preferable to use activated carbon whose specific surface area, as measured by the BET method, is 500 $m^2/g$ or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 $m^2/g$ but not larger than 2500 $m^2/g$, and more preferably not smaller than 1000 $m^2/g$ but not larger than 2500 $m^2/g$. The specific surface area smaller than 500 $m^2/g$ or larger than 2500 $m^2/g$ is not desirable, because in that case a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. In this patent specification, the "average particle size" refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size preferable for the capacitor of the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 $F/cm^3$ or higher for both the anode and cathode of the present invention, more preferably 15 $F/cm^3$ or higher, still more preferably 18 $F/cm^3$ or higher, and most preferably 21 $F/cm^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 $\mu$m or less, more preferably 25 $\mu$m or less, and most preferably 20 $\mu$m or less.

For the anode and cathode, it is preferable to use an electrode structure that does not develop a visible surface defect (such as cracking, delamination, etc.) when subjected to a 4-mm radius bending test. Such an electrode structure is advantageously used, for example, when achieving a thinner capacitor. The structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 $\mu$m, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and means such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 $\mu$m or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, the electrode thickness exceeding the above upper limit is not desirable, because it would then become difficult to obtain a desired output characteristic.

The electrode thickness is preferably 60 $\mu$m or less, as described above, but from the standpoint of achieving higher 1000C discharge efficiency or higher output efficiency even at a current output greater than 1000C, the electrode thickness is more preferably 50 $\mu$m or less, and still more preferably 40 $\mu$m or less; in particular, for the purpose of achieving a particularly excellent output characteristic at low temperatures of 0°C or below, an electrode thickness of 30 $\mu$m or less is most preferable.

There is no specific limit to how far the electrode thickness may be reduced, but the thickness that can be used in practice is about 5 $\mu$m or greater. However, as the electrode thickness decreases, it becomes more difficult to achieve a high volumetric energy density for the capacitor; therefore, the electrode thickness is preferably not smaller than 10

$\mu$m, and more preferably not smaller than 15 $\mu$m.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 $\mu$m, the thickness of the separator is preferably 50 $\mu$m or less, and when the electrode thickness is 20 $\mu$m, the thickness of the separator is preferably 100 $\mu$m or less.

Further, for the purpose of achieving a higher volumetric energy density or higher output characteristic, the thickness of the separator is preferably 80 $\mu$m or less, more preferably 60 $\mu$m or less, still more preferably 40 $\mu$m or less, and most preferably 20 $\mu$m or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 $\mu$m, and more preferably not smaller than 10 $\mu$m.

Further preferably, the separator has a porosity of 30 to 80%, a permeability of 5 to 300 seconds/100 cc (JIS P8117), and an average internal pore size of 0.01 to 5 $\mu$m. Here, the porosity is calculated from the following equation.

$$\text{Porosity (\%)} = (1 - d_f/d_0) \times 100$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator' volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 $\mu$m, and more preferably 0.01 to 1 $\mu$m. In this example, the average internal pore size is computed by performing image processing on a cross-sectional photograph taken through an SEM. An average internal pore size smaller than the lower limit value is not desirable, because the ion conductivity of the electrolyte would significantly drop. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 cc, and more preferably 10 to 100 seconds/100 cc.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as LiPF$_6$, LiBF$_4$, etc. For the solvent for dissolving the electrolyte, use may be made of propylene carbonate, ethylene carbonate, diethyl carbonate, dimethyl carbonate, methylethyl carbonate, dimethoxyethane, γ-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/L is preferable.

The electric conductivity at 25°C of the electrolytic solution is preferably $1\times10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 8-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (hereinafter called the common electrode terminal) is electrically connected to the corresponding terminal of the other cell so that a higher voltage output can be taken between the other two electrode terminals.

In the latter structure, it is also preferable to fold the common electrode terminals over the capacitor cell structure and then package the entire structure comprising the plurality of cells in a thin laminated film (for example, a heat shrinkable film), thereby holding the cells in an integral fashion as shown.

An apparatus incorporating the contactless power transmitting device or radiowave transmitting/receiving device of the present invention can transmit and receive power or information via radiowaves. More specifically, these devices can be incorporated advantageously, for example, in contactless writers/readers (for example, handheld terminals or the like used in stores and warehouses for merchandise management), sensor devices, measuring instruments, medical instruments, watches, mobile telephones, portable information terminals, portable game machines, PC cards, IC tags, personal computers, printers, toys, robots, etc.

[Fabrication examples of capacitor]

Specific fabrication examples of the capacitor that can be used advantageously in the device of the application example 8 are described below. In the fabrication examples, the measurement of each item was performed in the following manner.

(1) Particle size distribution (average particle size):

Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 cm$^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from 10 arbitrarily selected points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from five arbitrarily selected points on the sample, and their average value was taken as the measured value.

(5) Capacitance density of activated carbon:

An evaluation cell having electrodes each measuring 20 mm × 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.

Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density (F/cm$^3$) per unit volume of the electrode layer was calculated by dividing the capacitance (F) of the evaluation cell by the total volume of the two electrode layers.

[Capacitor fabrication example 8-1]

MSP-20 manufactured by Kansai Coke and Chemicals was used as the activated carbon, and the activated carbon was dispersed in a solvent and was milled for 75 minutes by a bead mill using 2-mm diameter zirconia beads. Dimethylacetamide was used as the solvent. Activated carbon with an average particle size of 0.7 μm was thus obtained. The BET specific surface area of the thus obtained activated carbon was about 1760 m$^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A conductive adhesive (EB-815 manufactured by Acheson (Japan)) using a polyamide-based thermosetting resin as the binder was applied over a 20-μm thick aluminum foil (manufactured by Nippon Foil Mfg. Co., Ltd.), and then dried and heat-treated to form a 2-μm thick conductive adhesive layer thereon; the resultant structure was used as a current collector.

Then, the slurry was applied over the current collector on which the conductive adhesive layer was formed, and the structure was dried by heating and pressed to produce an electrode having an electrode thickness of 40 $\mu$m (excluding the thickness of the current collector).

The capacitance density of the thus produced electrode was about 18.0 F/cm$^3$; the electrode was subjected to a 4-mm radius bending test, but no surface detects visible to the naked eye were observed.

Here, two kinds of electrodes were produced, one with the conductive adhesive layer and electrode layer formed only on one side of the current collector and the other with these layers formed on both sides.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 $\mu$m. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 $\mu$m, a porosity of 62%, an average internal pore size of 0.4 $\mu$m, and a permeability of 18 seconds/ 100 ml (JIS P8117).

Using this separator and the two kinds of electrodes each cut to a prescribed size, and also using an electrolytic solution prepared by dissolving triethylmethylammonium·BF$^4$ in propylene carbonate at a concentration of 1.5 mol/l and a container formed from a 150-$\mu$m thick aluminum/resin laminated film, a capacitor was fabricated in the following manner.

That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed into the aluminum laminated film container preformed in a bag-like shape, the electrolytic solution was vacuum-injected, and the cell was sealed, completing the fabrication of a stacked capacitor comprising a stack of four anode/cathode pairs.

Here, the current collectors of the same polarity were connected to each other by ultrasonic welding at their electrode lead portions, and the anode and cathode terminals were brought outside the capacitor.

The anode/cathode size (the portion where the electrode was formed) was 14 mm $\times$ 20 mm, the size of the separator was 16 $\times$ 22 mm, the size of the container was 18 mm $\times$ 28 mm, and the size of the seal portion was about 18 mm $\times$ 4 mm.

The capacitor was charged at a constant current and a constant voltage for 10 minutes, that is, the capacitor was first charged up to 2.5 V at a current of 1.1 mA, and then a constant voltage of 2.5 V was applied. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor, when the capacity was measured under a constant discharge current of 1120 mA (1000C) it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 cm$^3$, the energy density of the capacitor when discharged at 1000C was about 2.55 Wh/L.

Here, the value of A in the equation (1) was 1.47, and the value of B in the equation (2) was 2.08, both falling within the preferable range defined in the present invention. This shows that a capacitor having a high power output characteristic and a high volumetric energy density was achieved.

[Capacitor fabrication example 8-2]

Electrodes and separators similar to those used in fabrication example 8-1 were used here. A component A having a size of 14 mm $\times$ 20 mm was produced by forming an electrode layer only on one side, a component B having a size of 14 mm $\times$ 20 mm was produced by forming electrode layers on both sides, and a component C having an electrode layer size of 14 mm $\times$ 20 mm and a component size of 18 mm $\times$ 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in fabrication example 1, and aluminum/resin laminated films, each having a thickness of 150 μm and measuring 18 mm × 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C), it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range defined in the present invention. This shows that a capacitor having a high power output characteristic and a high volumetric energy density was achieved.

[Capacitor fabrication example 8-3]

Two capacitors, each identical to that fabricated in fabrication example 8-1, were connected in series and combined in one capacitor in the same manner as shown in Figures 2 and 4. The overall thickness (D) of the resultant capacitor was about 1.5 mm, and its volume (V) was about 0.77 cm$^3$.

The capacitor was charged at a constant current and a constant voltage for 10 minutes, that is, the capacitor was first charged up to 5.0 V at a current of 1.1 mA, and then a constant voltage of 5.0 V was applied. After that, the capacitor was discharged at a constant current of 1.1 mA until the voltage decreased to 0 V. The discharge capacity (1C discharge capacity) obtained from the discharge curve was about 1.11 mAh, and the discharged energy was about 2.78 mWh.

Further, after fully charging the capacitor in the same manner as described above, when the capacity was measured under a constant discharge current of 1110 mA (1000C), it was found that the capacitor retained a capacity about 80% of the 1C discharge capacity (the 1000C discharge efficiency was 80%), and that the energy when discharged at 1000C was about 1.78 mWh.

The energy density of this capacitor when discharged at 1000C was about 2.31 Wh/L.

Here, the value of A in the equation (1) was 0.06, and the value of B in the equation (2) was 1.31, both falling within the preferable range. This shows that a capacitor having a high power output characteristic and a high volumetric energy density was achieved.

(Comparative example 8-1)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.047 F. The overall thickness (D) of the capacitor was about 2 mm, and the volume (V) was about 1.8 cm$^3$; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Capacitor comparative example 8-2)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm³; assuming a full charge voltage of 3.6 V, the energy density of the capacitor when discharged at 1000C was 0.61 Wh/L. Here, the value of B was -0.82, which was outside the preferable range. Accordingly, the capacitor of this example would not be adequate as a capacitor that can simultaneously achieve a high power output characteristic and a high volumetric energy density.

[Application example 9]

Application example 9 concerns an example in which the capacitor of the present invention is applied to a motor driving device or an actuator driving device; more particularly, this application example concerns a driving device that incorporates the ultra-thin and/or small-volume capacitor having a high power output characteristic and a high capacitance density.

The application example 8 also concerns various kinds of recording/playback disk drives, imaging apparatus, toys, robots, medical instruments, printers, sensor devices, audio devices, etc. that incorporate the driving device.

In recent years, various kinds of motors (DC motors, spindle motors, linear motors, ultrasonic motors, etc.) and actuators (electrical/mechanical displacement devices, for example, electrostrictive devices, driving devices that utilize electrostatic or magnetic attraction/repulsion, etc.) have come to be used for mechanically driving various kinds of apparatus.

In such motors or actuators, generally the initial torque required to initiate (start up) a rotational or displacement motion is much greater than the torque required to maintain the once-started motion at a constant speed; in particular, if it is desired to start up the motion as quickly as possible (the initial acceleration is large), the initial torque required will further increase.

As the initial torque required increases, an electrical circuit for driving the motor or actuator often requires distinctively large power consumption for startup (usually, for a period within a few seconds).

In applications where the motor or actuator driving device is mounted in a relatively small apparatus (such as a digital camera, video camera, recording/playback disk drive (hard disk, DVD, MD), etc.) or in a portable audio player, mobile phone, portable information terminal, toy, robot (articulated part, etc.), medical instrument, printer (inkjet, paper feed/eject), audio device (piezoelectric buzzer, etc.), or the like that incorporates such apparatuses, since the driving device must be mounted in a restricted space within the apparatus, generally the battery (a primary or secondary battery such as an alkaline battery, nickel-cadmium battery, manganese battery, nickel-hydrogen battery, or lithium-ion battery, or a fuel cell battery, etc.) that can be mounted is limited in size.

When instantaneous power such as described above is required, that is, during the peak period of power consumption, a large power burden is put on the built-in battery, causing practical problems such as a significant decrease in the output voltage of the battery and a reduction in the continuous operation time and service life of the battery.

To address such problems, in the prior art, attempts have been made to use an electric double layer capacitor in combination with a battery in order to reduce the large current load applied for a few seconds to the battery. For example, Japanese Unexamined Patent Publication No. H10-294135 discloses a hybrid power supply constructed by combining a capacitor and a lithium-ion battery (850 mAh), and states that the hybrid power supply provides a higher capacity under low-temperature large current load conditions (1.5 A, 0.5 msec) than the lithium-ion battery alone. Japanese Unexamined Patent Publication No. 2002-246071 also discloses a hybrid power supply constructed by combining a capacitor and a lithium-ion battery, and states that, even under a 2C load condition, only a 0.8C load is applied to the lithium-ion battery.

No one skilled in the art would deny the effectiveness of the combination of a capacitor and a battery such as described above; however, in the case of the motor driving device or actuator driving device which is primarily intended for use in a relatively small apparatus or equipment, using a capacitor having a thickness or volume equivalent to that of a battery has been difficult in practice when the mounting space required is considered.

According to the application example 9, by incorporating the capacitor of the present invention, the power burden of the main battery of the motor driving device or actuator driving device can be greatly reduced, providing such advantages as being able to extend the continuous operation time of the battery and to reduce the size of the power supply system.

The mode for carrying out the application example 9 will be described in detail below.

The application example 9 concerns a motor driving device or actuator driving device which comprises at least a capacitor having an electric capacity of 0.1 mAh or higher, a motor or an actuator, and a driving circuit for controlling the rotation or mechanical displacement of the motor or the actuator, wherein the capacitor comprises at least an anode, a cathode, a separator, and an electrolytic solution, and wherein when the overall thickness of the capacitor, including the thickness of a container for hermetically sealing the anode, cathode, separator, and electrolytic solution, is denoted by D (mm), the volume of the capacitor is denoted by V (cm³), and the volumetric energy density of the capacitor at a discharge rate of 1000C at 25°C is denoted by W (Wh/L), then the value of W is at least 0.05 Wh/L, and at least either the condition that the value of A in equation (1) below be not smaller than -0.2 or the condition that the value of B in equation (2) below be not smaller than 0.8 is satisfied.

$$W \geq 1.5D + A \quad (1)$$

$$W \geq 1.3V + B \quad (2)$$

Here, the volumetric energy density at a discharge rate of 1000C is a value obtained by dividing by the volume of the capacitor the discharged energy obtained from the discharge curve of the capacitor when the capacitor in a fully charged condition is fully discharged at a constant current (1000C discharge current) that is 1000 times the constant current (1C discharge current) that would be required if the fully charged capacitor were to be fully discharged over a period of one hour. This value is approximately equal to the value obtained by multiplying the volumetric energy density of the capacitor (in this case, the volumetric energy density when charged and discharged at 1C current) by the square of 1000C discharge efficiency (the value obtained by dividing the electric capacity that can be charged and discharged at 1000C current, by the electric capacity when discharged at 1C). Accordingly, the value of the volumetric energy density at a discharge rate of 1000C can be used as a measure that indicates whether the capacitor can achieve a high volumetric energy density and a high power output characteristic simultaneously.

Generally, as is well known to those skilled in the art, as the thickness or volume of the capacitor decreases, the thickness or volume of the container in which the anode, cathode, separator, and electrolytic solution are hermetically sealed occupies a larger percentage of the overall thickness or volume of the capacitor, and as a result, the volumetric energy density of the capacitor tends to decrease; taking into account such variable factors associated with the variation of the thickness or volume of the capacitor, the preferable range of the value of A in the above equation (1) or the preferable range of the value of B in the equation (2) defines the excellent characteristic of the capacitor of the invention in which both a high volumetric energy density and a high power output characteristic are achieved simultaneously. Considering the fact that prior known capacitors have not been able to satisfy the preferable range of the value of A or B in the above equation, the capacitor of the present invention offers considerable potential as the only capacitor that can meet the stringent demands of the market in applications where a high power output characteristic is required along with a high volumetric energy density.

Preferably, the capacitor of the present invention satisfies at least one of the preferable ranges, i.e., the preferable range of the value of A in the above equation (1) or the preferable range of the value of B in the above equation (2), but from the standpoint of expanding the range of applications, it is more preferable for the capacitor to satisfy both the preferable range of the value of A in the equation (1) and the preferable range of the value of B in the equation (2).

Regarding the above equation (1), there are cases where it is difficult to clearly define the thickness (D) of the capacitor, depending on the shape of the outer casing of the capacitor. Such cases often occur with cylindrically shaped capacitors or capacitors generally called the resin mold type; among others, in the case of cylindrical capacitors, it is often difficult to define the thickness of the capacitor from its casing shape.

In view of the above, when implementing the capacitor as a capacitor having an outer casing shape from which it is difficult to clearly define the capacitor thickness, only the preferable range of the value of B in the above equation (2) is used to define the excellent characteristic of the capacitor of the present invention.

The value of the volumetric energy density W at a discharge rate of 1000C is preferably 0.05 Wh/L or larger, as earlier described, and if a wider range of applications is desired, the value is preferably 0.5 Wh/L or larger, more preferably 1 Wh/L or larger, still more preferably 1.4 Wh/L or larger, and most preferably 2.2 Wh/L or larger.

Further, the preferable range of the value of A in the above equation (1) is preferably -0.2 or larger, and if a wider range of applications is desired, the value is preferably 0.2 or larger, more preferably 0.5 or larger, still more preferably 1.4 or larger, and most preferably 2 or larger.

On the other hand, the preferable range of the value of B in the above equation (2) is preferably 0.8 or larger, and if a wider range of applications is desired, the value is more preferably 1.3 or larger, still more preferably 1.8 or larger, and most preferably 2.3 or larger.

In the above equation (2), the volume (V) of the capacitor refers to the outer volume of the capacitor's outer container in which the anode, cathode, separator, and electrolytic solution are hermetically sealed. However, it is to be understood that the volumes of terminals such as leads, tabs, etc. used to take the current outside the capacitor are not included.

Further, the overall thickness (D) of the capacitor refers to the thickness of the entire capacitor structure including the outer container in which the anode, cathode, separator, and electrolytic solution are hermetically sealed. In the case of the capacitor of the present invention, the overall thickness is determined by the sum of the thickness of the electrode element comprising one or more anode/cathode pairs and separators and the thickness of the container itself (the thickness of the container wall), but it may include some dead space (for example, a space containing only an electrolytic solution) if necessary.

More precisely, the volume (V) and thickness (D) of the capacitor in the present invention can be defined as follows: That is, when the capacitor is placed in a three-dimensional Cartesian coordinate (x, y, z) space and oriented so as to maximize its projected area (S) on the (x, y) plane, the longest distance among the distances over which the straight lines parallel to the z axis and passing through the capacitor extend (i.e., the lengths of the line segments bounded by the outer surfaces of the capacitor) is taken as the thickness (D) of the capacitor, and the value obtained by multiplying this thickness by the projected area (S) on the (x, y) plane is taken as the volume (V) of the capacitor.

The overall thickness (D) of the capacitor is preferably 2 mm or less, more preferably 1.5 mm or less, still more preferably 1 mm or less, and most preferably 0.7 mm or less. There is no specific limit to how far the overall thickness of the capacitor may be reduced, but from the relationship with the thicknesses of the electrodes, separator, and container, the practical thickness is preferably 0.2 mm or larger, and more preferably 0.3 mm or larger.

The volume (V) of the capacitor is preferably 1 $cm^3$ or less, more preferably 0.7 $cm^3$ or less, still more preferably 0.5 $cm^3$ or less, and most preferably 0.3 $cm^3$ or less. There is no specific limit to how far the volume of the capacitor may be reduced, but from the relationship with the volumes of the electrodes, separator, and container, the practical volume is preferably 0.05 $cm^3$ or larger, and more preferably 0.1 $cm^3$ or larger.

In the motor driving device or actuator driving device of the application example 9, considering the power consumption required for conversion from electric energy to a mechanical motion, it is preferable that the capacitor have an electric capacity of about 0.1 mAh or larger, more preferably 0.25 mAh or larger, still more preferably 0.5 mAh or larger, and most preferably 1 mAh or larger. The upper limit value of the voltage that can be used is at least 2 V or higher, more preferably 3 V or higher, and still more preferably 4.5 V or higher.

Preferably, the motor driving device or actuator driving device of the application example 9 comprises, in addition to the capacitor, a motor or an actuator and a driving circuit for controlling the rotation or mechanical displacement of the motor or the actuator.

Preferably, the motor used here is, for example, a DC motor, a spindle motor, a linear motor, an ultrasonic motor, or the like, and the actuator is, for example, an electrical/mechanical displacement device such as an electrostrictive device or a driving device that utilizes electrostatic or magnetic attraction/repulsion.

Further, a driving circuit designed to match the specification of the motor or the actuator is advantageously used as the driving circuit for controlling the rotation or mechanical displacement of the motor or the actuator. In the application example 9, it is preferable to provide an electrical connection so that power is supplied to the driving circuit from the capacitor alone, or to electrically connect the capacitor in parallel to the main battery (a primary or secondary battery, a fuel cell battery, or the like) mounted in the driving device and to provide an electrical connection so that power is supplied to the driving circuit from both of them.

Specific examples of methods that can be employed to supply power from the capacitor or the main battery to the driving circuit are shown below, and a suitable one is selected according to the purpose.

(1) The output terminal of the capacitor or the main battery is connected directly to the power supply line or the like of the control circuit.

(2) The output terminal of the capacitor or the main battery is connected to the power supply line or the like of the control circuit via a suitable voltage converting/regulating circuit to supply a constant voltage.

Among others, the power supply system in which the capacitor and the main battery are electrically connected in parallel so that power is supplied to the driving circuit from both of them is preferably used, the advantage of this system being that even when a battery having a poor output characteristic (a battery having a large internal resistance, examples including fuel cell batteries and various kinds of primary batteries) is used, for example, as the main battery, the amount of voltage drop of the main battery due to the instantaneous increase in load current can be reduced because of the effect of the superimposition of the capacitor output current and, as a result, the continuous operation time of the battery and hence the battery life can be extended.

In one preferred method of parallel connection, the output terminals of the capacitor and the main battery is simply connected in common, and in another preferred method, the output terminal of the main battery is connected to the primary side (input side) of the suitable voltage converting/regulating circuit, and the capacitor is connected in parallel on the secondary side (output side) of the regulating circuit.

Such a power supply system is preferable, because the main battery automatically charges the capacitor with a constant voltage during the period that the amount of power supply to the driving circuit is small.

Examples of methods that can be employed for charging the capacitor from various power supply sources are shown below, and a suitable one is selected according to the purpose.

(1) The input terminal of the capacitor is connected directly to the power supply source.

(2) The input terminal of the capacitor is connected to the power supply source via a current regulating circuit to charge the capacitor with a constant current.

(3) The input terminal of the capacitor is connected to the power supply source via a voltage regulating circuit to charge the capacitor with a constant voltage.

Examples of the power supply source here include a primary or secondary battery or a fuel cell battery used as the main battery of the driving device, a power generating device (such as a solar cell) internal to the driving device, a power supply external to the device (in this case, power is supplied via a prescribed external terminal or the like), etc.

Further, in the various power supply systems described above, if needed a monitor circuit for monitoring the output voltage of the voltage converting/regulating circuit may be provided, and a circuit may be added that externally controls the charging/discharging of the capacitor.

Preferably, if necessary, a suitable switching device (such as a transistor or a relay) may be provided between the power supply source and the capacitor or between the capacitor and the driving circuit so that the charging/discharging of the capacitor can be controlled by controlling the on/off operation of the switching device, or alternatively, a rectifier (such as a diode) may be provided so that the current flow associated with the charging/discharging of the capacitor can be controlled.

The capacitor that can be used advantageously in the motor driving device or actuator driving device of the application example 9 will be described in detail below.

For both the anode and cathode of the capacitor, it is preferable to use activated carbon whose specific surface area, as measured by the BET method, is 500 $m^2$/g or larger, and whose average particle size is 10 $\mu$m or smaller, and the electrode thickness of each of the anode and cathode is preferably 60 $\mu$m or less.

The specific surface area of the activated carbon, as measured by the BET method, is preferably not smaller than 500 $m^2$/g but not larger than 2500 $m^2$/g, and more preferably not smaller than 1000 $m^2$/g but not larger than 2500 $m^2$/g. A specific surface area smaller than 500 $m^2$/g or larger than 2500 $m^2$/g is not desirable, because in that case a sufficient capacity often cannot be obtained when a high output is applied.

The average particle size of the activated carbon used for the anode and cathode is 10 $\mu$m or smaller and, from the standpoint of achieving higher 1000C discharge efficiency or higher output efficiency even at a current output greater than 1000C, the average particle size is more preferably 5 $\mu$m or smaller, and still more preferably 2 $\mu$m or smaller; in particular, for the purpose of achieving a high output characteristic at low temperatures of 0°C or below, an average particle size of 1 $\mu$m or smaller is most preferable. The "average particle size" here refers to the average particle size in the volumetric particle size distribution obtained by the laser diffraction measurement method.

An average particle size exceeding the above upper limit is not desirable, because it would then become difficult to form an electrode of uniform thickness within the preferable range of the electrode thickness to be described later. The practical lower limit of the average particle size is preferably 0.1 $\mu$m or larger, because activated carbon particles become easier to come off the electrode as the particle size decreases.

The kind of the activated carbon and the method of production thereof are not limited to any specific kind or method, but various kinds of activated carbon can be used, including those available on the market as activated carbon for capacitors.

However, for the purpose of achieving a capacitor having a higher volumetric energy density, the capacitance density per unit weight of the activated carbon is preferably 25 F/g or higher, more preferably 30 F/g, still more preferably 35 F/g or higher, and most preferably 40 F/g or higher.

When using commercially available activated carbon, since its average particle size is generally about 7 $\mu$m to 100 $\mu$m, it is preferable to mill the activated carbon as needed, in order to obtain activated carbon having an average particle size preferable for the capacitor of the present invention. For the milling, it is preferable to use a milling machine such as a jet mill, a ball mill, or the like and, if necessary, the particles are classified according to size.

The anode and cathode electrodes are each formed by adding a binder and a conductive agent as needed to the activated carbon having the above average particle size, and by molding the mixture into the shape of the electrode. Each electrode is formed on one side or both sides of a current collector formed, for example, from a metal foil or metal net or the like. In one specific example, a mixture (for example, a slurry) comprising activated carbon, a binder, a conductive agent (if necessary), and a solvent, is applied over the current collector, dried, and roll-pressed into the prescribed shape. The material for the binder used here is not specifically limited, and use may be made, for example, of a fluorine-based resin such as polyvinylidene fluoride (PVDF), polytetrafluoroethylene, etc., a rubber-based material such as fluoro-rubber, SBR, etc., polyolefin such as polyethylene, polypropylene, etc., or an acrylic resin; here, carboxymethyl cellulose, polyvinyl pyrrolidone, or the like may be added as an assisting agent.

The conductive agent used here is not limited to any specific material, but use may be made, for example, of Ketjen black, acetylene black, natural graphite, or artificial graphite.

For the purpose of achieving a higher volumetric energy density for the capacitor, the capacitance density per unit electrode volume is preferably 12 F/cm$^3$ or higher for both the anode and cathode of the capacitor of the present invention, more preferably 15 F/cm$^3$ or higher, still more preferably 18 F/cm$^3$ or higher, and most preferably 21 F/cm$^3$ or higher.

Further, for the purpose of efficiently extracting from the capacitor the current charged and discharged at the anode or cathode, it is preferable to use a current collector. Such a current collector is preferably made of a material having extremely high electric conductivity, and more preferably, the material has a certain degree of flexibility. More specifically, for the anode current collector, an aluminum foil, a stainless steel foil, or the like is preferable, and for the cathode current collector, an aluminum foil, a copper foil, a stainless steel foil, or the like is preferable.

From the standpoint of increasing the volumetric energy density of the capacitor, it is preferable to reduce the thickness of the current collector (excluding the thickness of the conductive adhesive layer to be described later) as much as possible; preferably, the thickness is 30 $\mu$m or less, more preferably 25 $\mu$m or less, and most preferably 20 $\mu$m or less.

For the anode and cathode, it is preferable to use an electrode structure that does not develop visible surface defects (such as cracking, delamination, etc.) when subjected to a 4-mm radius bending test. Such an electrode structure is advantageously used, for example, when achieving a thinner capacitor; the structure has the effect of significantly suppressing the separation between the current collector and the electrode, which tends to occur from such portions as a cutting edge in the electrode cutting (or punching) process when fabricating the capacitor by stacking a pair of precut anode/cathode electrodes together with a separator, and in addition to that, the structure has also the effect of increasing the resistance of the completed capacitor to external forces such as bending.

In the 4-mm radius bending test, visible surface defects tend to occur, for example, when the electrode thickness is greater than 60 $\mu$m, or when the adhesion between the current collector and the electrode is insufficient, or when the mechanical strength of the electrode is not adequate; with these and other points in mind, various materials including the binder used for the electrodes, the compositions of the materials, and the fabrication conditions should be selected optimally, and means such as the use of a conductive adhesive layer should preferably be considered in the fabrication of the current collector.

Here, for such purposes as enhancing the adhesion of the current collector to the activated carbon electrode (anode or cathode) and reducing the electrical contact resistance with respect to the electrode, it is preferable to apply a surface treatment such as chemical etching or plasma processing and/or to form a suitable kind of conductive adhesive layer on the surface.

The electrode thickness of each of the anode and cathode is preferably 60 $\mu$m or less. Here, the electrode thickness is the thickness of the electrode layer and does not include the thickness of the current collector; when the electrode is formed on both sides of the current collector, or when the current collector is a porous structure such as a metal net, the electrode thickness is calculated by subtracting the thickness of the current collector (in the case of a porous current collector such as a metal net, its thickness is calculated by assuming that the porosity is 0%) from the thickness of the entire electrode structure and by dividing the difference by 2. For the anode and cathode, an electrode thickness exceeding the above upper limit is not desirable, because it would then become difficult to obtain a desired output characteristic.

The electrode thickness is preferably 60 $\mu$m or less, as described above, but from the standpoint of achieving higher 1000C discharge efficiency or higher output efficiency even at a current output greater than 1000C, the electrode thickness is more preferably 50 $\mu$m or less, and still more preferably 40 $\mu$m or less; in particular, for the purpose of achieving a particularly excellent output characteristic at low temperatures of 0°C or below, an electrode thickness of 30 $\mu$m or less is most preferable.

There is no specific limit to how far the electrode thickness may be reduced, but the thickness that can be used in practice is about 5 $\mu$m or greater. However, as the electrode thickness decreases, it becomes more difficult to achieve a high volumetric energy density for the capacitor; therefore, the electrode thickness is preferably not smaller than 10 $\mu$m, and more preferably not smaller than 15 $\mu$m.

Further, for such purposes as achieving a sufficient volumetric energy density for the capacitor and reducing the overall thickness of the capacitor, the thickness of the separator interposed between the pair of anode and cathode electrodes is preferably not greater than five times the electrode thickness of each of the anode and cathode electrodes.

More specifically, when the electrode thickness is 10 $\mu$m, the thickness of the separator is preferably 50 $\mu$m or less, and when the electrode thickness is 20 $\mu$m, the thickness of the separator is preferably 100 $\mu$m or less.

Further, for the purpose of achieving a higher volumetric energy density or higher output characteristic, the thickness of the separator is preferably 80 $\mu$m or less, more preferably 60 $\mu$m or less, still more preferably 40 $\mu$m or less, and most preferably 20 $\mu$m or less.

There is no specific limit to how far the separator thickness may be reduced, but from the standpoint of the mechanical strength and ease-of-handling of the separator and the prevention of electrode short-circuiting, etc., the practical thickness is preferably not smaller than about 5 $\mu$m, and more preferably not smaller than 10 $\mu$m.

Further preferably, the separator has a porosity of 30 to 80%, a permeability of 5 to 300 seconds/100 ml (JIS P8117), and an average internal pore size of 0.01 to 5 μm.

Here, the porosity is calculated from the following equation.

$$\text{Porosity (\%)} = (1 - d_f/d_0) \times 100$$

where $d_f$ is the true density (g/cm$^3$) of the material forming the separator, and do is the apparent density (g/cm$^3$) of the separator.

Here, the true density $d_f$ is the intrinsic density of the material used for the separator, and is measured using a known method, for example, a liquid immersion method or a gas volume method that measures the displaced volume of a liquid or gas.

On the other hand, the apparent density do is obtained by dividing the separator's weight per unit area (g/cm$^2$) by the separator' volume per unit area (cm$^3$/cm$^3$).

If the porosity is smaller than the lower limit value, it becomes difficult to obtain a desired output characteristic, and if it exceeds the upper limit value, it becomes difficult to ensure insulation.

The average internal pore size is preferably 0.01 to 5 μm, and more preferably 0.01 to 1 μm. In this example, the average internal pore size is computed by performing image processing on a cross-sectional photograph taken through an SEM. An average internal pore size smaller than the lower limit value is not desirable, because the ion conductivity of the electrolyte would significantly drop. An average internal pore size exceeding the upper limit value is also undesirable, because insulation would become inadequate and self-discharge would be accelerated.

The permeability (JIS P8117) reflects porosity, average pore size, and bending ratio, and becomes a very important parameter when determining the morphology of the separator. In the case of the porous film used as the separator in the electric double layer capacitor of the present invention, the permeability (JIS P8117) is preferably 5 to 300 seconds/100 ml, and more preferably 10 to 100 seconds/100 ml.

Permeability exceeding the upper limit value is not desirable, because ion conduction would then be impeded and the output characteristic would appreciably degrade. Permeability lower than the lower limit value is also undesirable, because then not only would self-discharge be accelerated but insulation would drop. Here, the direction in which the permeability decreases below the lower limit is the direction which brings the bending ratio closer to 1 (i.e., a through hole), increases the average pore size, and also increases the porosity; that is, the morphology becomes very close, for example, to that of ordinary paper.

The material for forming the separator is not specifically limited; for example, use may be made of polyolefin such as polyethylene or polypropylene, aromatic polyamide, polysulfone, polytetrafluoroethylene, cellulose, inorganic glass, etc. However, a material having high heat resistance is preferable for the separator of the electric double layer capacitor because it can then be dried at a higher temperature. Examples of materials having high heat resistance include a cellulose-based material, and more preferably, aromatic polyamide; among others, a separator composed principally of a metaphenyleneisophthalamide-based polymer is preferable.

In particular, it is preferable to form the separator from a porous film made of a metaphenyleneisophthalamide-based polymer. In one specific example, a polymer solution in which a polymer as a material for forming the separator is dissolved in a solvent is cast over a substrate, and the resultant cast is subjected to micro-phase separation by immersing it in a solvent-based solidifying liquid containing a substance mutually insoluble with the polymer, and is then washed and heat-treated to produce the porous film (micro-phase separation process).

The electrolytic solution to be used in the capacitor can be suitably selected by comprehensively considering the operating conditions, etc. such as the charging voltage of the capacitor. More specifically, for the electrolyte, use may be made of various quaternary ammonium salts such as tetraethylammonium, tetraethylmethylammonium, spiro-(1,1')-bipyrrolidinium, etc., imidazolium salts, or lithium salts such as LiPF$_6$, LiBF$_4$, etc. For the solvent for dissolving the electrolyte, use may be made of propylene carbonate, ethylene carbonate, diethyl carbonate, dimethyl carbonate, methylethyl carbonate, dimethoxyethane, γ-butyrolactone, sulfolane, etc. For the electrolyte as well as the electrolytic solution, the materials may be used singly or in a combination of two or more. The electrolyte concentration is not specifically limited, but a concentration of about 0.5 to 2.5 mol/l is preferable.

The electric conductivity at 25°C of the electrolytic solution is preferably $1 \times 10^{-2}$ S/cm or higher; for example, such an electrolytic solution is prepared by dissolving the above quaternary ammonium salt as an electrolyte in a solvent composed of one or two materials selected from the group consisting of propylene carbonate, dimethyl carbonate, ethylene carbonate, sulfolane, etc.

The capacitor may preferably have an internal structure in which a plurality of anode/cathode pairs and separators are stacked together, and a known stack structure, a wound structure, a folded stack structure, etc. can be employed.

For the container for hermetically sealing the anode, cathode, separator, electrolytic solution, etc., use may be made, for example, of a container formed in the shape of a metal can, a container formed by molding a plastic material in a prescribed mold (plastic molding), or a container formed by processing various kinds of films.

Since the thickness of the container affects the volumetric energy density of the capacitor, it is preferable to reduce the thickness as much as possible; preferably, the thickness is 200 $\mu$m or less, more preferably 150 $\mu$m or less, and most preferably 120 $\mu$m or less.

Because of the need to satisfy various reliability requirements such as the mechanical strength of the capacitor, barrier capability against various gases, chemical stability, and thermal stability, the lower limit of the thickness of the container is preferably about 50 $\mu$m or greater, and more preferably 70 $\mu$m or greater.

Among the various containers, the container made of various kinds of films formed in a bag-like shape is most preferable from the standpoint of achieving a reduction in size; preferred examples of such films include a multi-layer film formed by stacking a plurality of layers one on top of another, with a heat seal resin layer (for example, a resin layer of polypropylene or the like that can be melt at temperatures around 150°C) formed on the interior side, and with other layers, in particular, a metal layer of aluminum or the like effective in suppressing the transmission of gases and blocking external light, a resin layer of nylon or the like effective in suppressing the transmission of gases, etc., suitably combined according to the purpose.

For the purpose of increasing the breakdown voltage of the capacitor, it is also preferable to employ a structure in which two or more electrode elements, each comprising one or more anode/cathode pairs and a separator, are connected in series inside the container of the capacitor. In this case, a structure in which there is no coupling of the electrolytic solutions between the different electrode elements, that is, the electrode elements are considered to be completely isolated from each other electrochemically, is preferably used. Further, a structure in which a plurality of capacitor cells are electrically connected in series outside the capacitor container, not inside the container, is also preferably used.

In one preferred method for implement the series connection of the capacitor cells, one electrode interposed between the series-connected electrode elements is formed as a common electrode, as illustrated in capacitor fabrication example 9-2 to be described later, and this electrode is completely sealed around its periphery to the outer casing material so that the electrode itself serves as a partition plate for separating the electrolytic solution between the two electrode elements, while in another preferred method, which concerns a series stacked capacitor structure such as shown in Figures 1 to 4, a plurality of capacitor cells, each hermetically sealed within an outer casing, are stacked one on top of the other with a portion of one casing contacting a portion of the other casing, or alternatively, the plurality of capacitor cells are arranged in the same plane and, of the pair of electrode terminals brought out of each cell, at least one terminal (hereinafter called the common electrode terminal) is electrically connected to the corresponding terminal of the other cell so that a higher voltage output can be taken between the other two electrode terminals.

In the latter structure, it is also preferable to fold the common electrode terminals over the capacitor cell structure and then package the entire structure comprising the plurality of cells in a thin laminated film (for example, a heat shrinkable film), thereby holding the cells in an integral fashion as shown.

The motor driving device or actuator driving device of the application example 9 can be incorporated particularly advantageously in a relatively small apparatus or equipment.

More specifically, the driving device can be mounted advantageously in various recording and/or playback disk drives that electrically control the operation for stopping the rotation of various kinds of disks (such as HDDs, DVDs, and MDs) or in portable audio players, portable information terminals, mobile phones, portable game machines, personal computers (particularly, notebook computers), digital cameras, video cameras, etc. that incorporate such disk drives, or in various imaging apparatuses such as cameras and video cameras that incorporate mechanisms for electrically controlling mechanical operations such as opening/closing of a shutter, optical zooming, and focusing, or in various kinds of toys, robots, medical instruments, printers, sensor devices (for example, devices having a function to communicate sensing information by converting it into vibration or sound), audio devices (such as piezoelectric buzzers), etc.

[Fabrication examples of capacitor]

Specific fabrication examples of the capacitor that can be used advantageously in the device of the application example 9 will be shown below. In the fabrication examples, the measurement of each item was performed in the following manner.

    (1) Particle size distribution (average particle size):

    Measurements were made using a laser diffraction particle size analyzer "SALD-2000J" manufactured by Shimadzu Corporation. Water was used as the dispersion medium of activated carbon, and a trace amount of nonionic surfactant "Triton X-100" was added as a dispersing agent. The circulation flow rate of the dispersion liquid was set to about 1200 $cm^3$/min., and the analysis was performed under the conditions of a maximum absorbance of 0.20, a minimum absorbance of 0.10, and a refractive index of 1.70 to 0.20i, with the number of integrations being 64.

(2) Specific surface area (BET specific surface area):

The BET specific surface area was measured using a specific surface area/pore size analyzer "NOVA 1200e" manufactured by Quantachrome. As a pretreatment, the sample was dried by heating at 250°C for 30 minutes.

(3) Separator thickness:

Measurements were made using a contact-type thickness gauge ID-C112B (probe tip diameter: 5 mm) manufactured by Mitsutoyo Corporation. Measurements were taken from 10 arbitrarily selected points on the sample, and their average value was taken as the measured value.

(4) Electrode thickness:

Measurements were made using the contact-type thickness gauge ID-C112B (probe tip diameter: 5 mm) manufactured by Mitsutoyo Corporation, and the thickness of the electrode layer was calculated by subtracting the measured value of the thickness of the current collector alone (including the conductive adhesive layer) from the measured value of the thickness of the structure including the current collector. Measurements were taken from five arbitrarily selected points on the sample, and their average value was taken as the measured value.

(5) Capacitance density of activated carbon:

An evaluation cell having electrodes each measuring 20 mm × 14 mm was fabricated, and the cell was charged at a constant current of 1C for one hour, followed by application of a constant voltage of 2.5 V for two hours; after the cell was nearly fully charged, the cell was discharged at a constant current of 1C until the voltage decreased to 0 V, and the capacitance (F) of the evaluation cell was calculated by dividing the amount of discharged electricity by the charging voltage value of 2.5 V.

Further, the capacitance (F) of the evaluation cell was divided by the total weight (g) of the activated carbon used for the two electrodes, to calculate the capacitance per unit weight of the activated carbon (F/g).

(6) Capacitance density of electrode layer:

The capacitance density $(F/cm^3)$ per unit volume of the electrode layer was calculated by dividing the capacitance (F) of the evaluation cell by the total volume of the two electrode layers.

[Capacitor fabrication example 9-1]

MSP-20 manufactured by Kansai Coke and Chemicals was used as the activated carbon, and the activated carbon was dispersed in a solvent and was milled for 75 minutes by a bead mill using 2-mm diameter zirconia beads. Dimethylacetamide was used as the solvent. Activated carbon with an average particle size of 0.7 $\mu$m was thus obtained. The BET specific surface area of the thus obtained activated carbon was about 1760 $m^2$/g, and the capacitance density was about 39 F/g. 93 parts by weight of the activated carbon, 7 parts by weight of Ketjen black, 17 parts by weight of polyvinylidene fluoride, 10 parts by weight of polyvinyl pyrrolidone, and 383 parts by weight of N-methylpyrrolidone were mixed to produce a slurry.

A conductive adhesive (EB-815 manufactured by Acheson (Japan)) using a polyamide-based thermosetting resin as the binder was applied over a 20-$\mu$m thick aluminum foil (manufactured by Nippon Foil Mfg. Co., Ltd.), and then dried and heat-treated to form a 2-$\mu$m thick conductive adhesive layer thereon; the resultant structure was used as a current collector.

Then, the slurry was applied over the current collector on which the conductive adhesive layer was formed, and the structure was dried by heating and pressed to produce an electrode having an electrode thickness of 40 $\mu$m (excluding the thickness of the current collector).

The capacitance density of the thus produced electrode was about 18.0 $F/cm^3$ ; the electrode was subjected to a 4-mm radius bending test, but no surface detects visible to the naked eye were observed.

Here, two kinds of electrodes were produced, one with the conductive adhesive layer and electrode layer formed only on one side of the current collector and the other with these layers formed on both sides.

The separator was fabricated in the following manner. That is, polymetaphenylene isophthalamide ("CONEX" manufactured by Teijin Techno Products, true specific gravity of about 1.338) was dissolved in dimethylacetamide, and the dope was adjusted so that the concentration of the polymetaphenylene isophthalamide became 8% by weight.

The dope was then cast over a polypropylene film to a thickness of 50 μm. Next, the resultant cast was immersed for 20 seconds in a 30°C solidifying medium composed of 55% by weight of dimethylacetamide and 45% by weight of water, and a solidified film was obtained. After that, the solidified film was removed from the polypropylene film, and immersed in a 50°C water bath for 10 minutes. Then, the solidified film was treated at 120°C for 10 minutes and then at 270°C for 10 minutes, to obtain a porous film made of polymetaphenylene isophthalamide. The resultant porous film had a thickness of 11 μm, a porosity of 62%, an average internal pore size of 0.4 μm, and a permeability of 18 seconds/100 ml (JIS P8117).

Using this separator and the two kinds of electrodes each cut to a prescribed size, and also using an electrolytic solution prepared by dissolving triethylmethylammonium·BF$_4$ in propylene carbonate at a concentration of 1.5 mol/l and a container formed from a 150-μm thick aluminum/resin laminated film, a capacitor was fabricated in the following manner.

That is, the single-sided electrode forming the cathode (with its electrode surface facing the separator), the separator, the double-sided electrode forming the anode, the separator, the double-sided electrode forming the cathode, the separator, the double-sided electrode forming the anode, the separator, and the single-sided electrode forming the cathode (with its electrode surface facing the separator) were stacked in this order; the stack was then placed into the aluminum laminated film container preformed in a bag-like shape, the electrolytic solution was vacuum-injected, and the cell was sealed, completing the fabrication of a stacked capacitor comprising a stack of four anode/cathode pairs.

Here, the current collectors of the same polarity were connected to each other by ultrasonic welding at their electrode lead portions, and the anode and cathode terminals were brought outside the capacitor.

The anode/cathode size (the portion where the electrode was formed) was 14 mm × 20 mm, the size of the separator was 16 × 22 mm, the size of the container was 18 mm × 28 mm, and the size of the seal portion was about 18 mm × 4 mm.

The capacitor was charged at a constant current and a constant voltage for 10 minutes, that is, the capacitor was first charged up to 2.5 V at a current of 1.1 mA, and then a constant voltage of 2.5 V was applied. After that, the capacitor was discharged at a constant current of 1.1 mA until the voltage decreased to 0 V. The discharge capacity (1C discharge capacity) obtained from the discharge curve was about 1.12 mAh, and the discharged energy was about 1.4 mWh.

Further, after fully charging the capacitor in the same manner as described above, when the capacity was measured under a constant discharge current of 1120 mA (1000C), it was found that the capacitor retained a capacity about 81% of the 1C discharge capacity (the 1000C discharge efficiency was 81%), and that the energy when discharged at 1000C was about 0.919 mWh.

Since the overall thickness (D) of the capacitor was about 0.72 mm, and the volume (V) was about 0.36 cm$^3$, the energy density of the capacitor when discharged at 1000C was about 2.55 Wh/L.

Here, the value of A in the equation (1) was 1.47, and the value of B in the equation (2) was 2.08, both falling within the preferable range defined in the present invention. This shows that a capacitor having a high power output characteristic and a high volumetric energy density was achieved.

[Capacitor fabrication example 9-2]

Electrodes and separators similar to those used in fabrication example 9-1 were used here. A component A having a size of 14 mm × 20 mm was produced by forming an electrode layer only on one side, a component B having a size of 14 mm × 20 mm was produced by forming electrode layers on both sides, and a component C having an electrode layer size of 14 mm × 20 mm and a component size of 18 mm × 28 mm was produced by forming electrode layers on both sides.

Then, the component A(1), the separator, the component B(1), the separator, the component B(2), the separator, the component C, the separator, the component B(3), the separator, the component B(4), the separator, and the component A(2) were stacked one on top of another in this order.

Leads of the components A(1) and B(2), leads of the components B(1), C, and B(4), and leads of the components (3) and A(2) were respectively connected by welding.

PE Modic was heat-sealed in advance with a width of 1 mm to each of the four corners on both sides of the component C. This capacitor element was impregnated with the electrolytic solution prepared in the same manner as in fabrication example 9-1, and aluminum/resin laminated films, each having a thickness of 150 μm and measuring 18 mm × 28 mm, were placed on the upper and lower surfaces and heat-sealed at the PE Modic portions heat-sealed to the component C.

Here, the leads of the components A(1) and A(2) were exposed outside the casing, and were used as the anode and cathode terminals, respectively. The interior structure of the capacitor was partitioned by the component C, producing the same effect as if two cells were connected in series.

The capacitor was charged at a constant current and a constant voltage for 10 minutes, that is, the capacitor was first charged up to 5.0 V at a current of 0.8 mA, and then a constant voltage of 5.0 V was applied. After that, the capacitor was discharged at a constant current of 0.8 mA until the voltage decreased to 0 V. The discharge capacity (1C discharge capacity) obtained from the discharge curve was about 0.83 mAh, and the discharged energy was about 2.1 mWh.

Further, after fully charging the capacitor in the same manner as described above, when the capacity was measured under a constant discharge current of 800 mA (1000C), it was found that the capacitor retained a capacity about 83% of the 1C discharge capacity (the 1000C discharge efficiency was 83%), and that the energy when discharged at 1000C was about 1.45 mWh.

Since the overall thickness (D) of the capacitor was about 0.81 mm, and the volume (V) was about 0.41 cm$^3$, the energy density of the capacitor when discharged at 1000C was about 3.54 Wh/L.

Here, the value of A in the equation (1) was 2.33, and the value of B in the equation (2) was 3.01, both falling within the preferable range defined in the present invention. This shows that a capacitor having a high power output characteristic and a high volumetric energy density was achieved.

[Capacitor fabrication example 9-3]

Two capacitors, each identical to that fabricated in fabrication example 9-1, were connected in series and combined in one capacitor in the same manner as shown in Figures 2 and 4. The overall thickness (D) of the resultant capacitor was about 1.5 mm, and its volume (V) was about 0.77 cm$^3$.

The capacitor was charged at a constant current and a constant voltage for 10 minutes, that is, the capacitor was first charged up to 5.0 V at a current of 1.1 mA, and then a constant voltage of 5.0 V was applied. After that, the capacitor was discharged at a constant current of 1.1 mA until the voltage decreased to 0 V. The discharge capacity (1C discharge capacity) obtained from the discharge curve was about 1.11 mAh, and the discharged energy was about 2.78 mWh.

Further, after fully charging the capacitor in the same manner as described above, when the capacity was measured under a constant discharge current of 1110 mA (1000C), it was found that the capacitor retained a capacity about 80% of the 1C discharge capacity (the 1000C discharge efficiency was 80%), and that the energy when discharged at 1000C was about 1.78 mWh.

The energy density of this capacitor when discharged at 1000C was about 2.31 Wh/L.

Here, the value of A in the equation (1) was 0.06, and the value of B in the equation (2) was 1.31, both falling within the preferable range. This shows that a capacitor having a high power output characteristic and a high volumetric energy density was achieved.

(Comparative example 9-1)

A commercial capacitor with an aluminum laminated casing (manufactured by NEC Tokin Corporation) was evaluated. The electrolytic solution of this capacitor was a sulfuric acid solution, the rated voltage was 3.6 V, and the capacitance was 0.047 F. The overall thickness (D) of the capacitor was about 2 mm, and the volume (V) was about 1.8 cm$^3$ ; assuming a full charge voltage of 3.6 V, the energy density of the capacitor when discharged at 1000C was 0.047 Wh/L. Here, the value of A in the equation (1) was -2.95, and the value of B in the equation (2) was -2.29, both falling outside the preferable range. Accordingly, the capacitor of this example would not be adequate as a capacitor that can simultaneously achieve a high power output characteristic and a high volumetric energy density.

(Capacitor comparative example 9-2)

A commercial cylindrically shaped capacitor (DZ-2R5 D105 manufactured by ELNA Co., Ltd.) was evaluated. The rated voltage of this capacitor was 2.5V, and the capacitance was 1 F. Since the capacitor was cylindrically shaped, it was difficult to define the thickness, and it was therefore difficult to obtain A in the equation (1), so that the evaluation was performed based only on the value of B in the equation (2).

The volume (V) of the capacitor was 1.1 cm$^3$ ; assuming a full charge voltage of 3.6 V, the energy density of the capacitor when discharged at 1000C was 0.61 Wh/L. Here, the value of B was -0.82, which was outside the preferable range. Accordingly, the capacitor of this example would not be adequate as a capacitor that can simultaneously achieve a high power output characteristic and a high volumetric energy density.

[Other application examples]

Other than the application examples so far described, the capacitor of the present invention has an extensive range of applications; for example, the following application examples are also preferable.

1) The capacitor is used as a large-capacitance capacitive element for smoothing AC components above a predetermined frequency in an AC/DC converter or the like, or in a low-pass filter application comprising a resistor and a capacitive element as basic elements. By using the capacitor of the present invention, the capacitive element can be reduced in size.
2) In various semiconductor computing devices or computing units (CPUs, etc.) where a large variation in supply voltage can cause an erroneous operation, the capacitor is connected in parallel to the power supply line of the computing device or unit in order to suppress variations in voltage on the power supply line. Since the capacitor of the present invention has a capability to suppress variations in supply voltage over a wide range of frequencies from low-frequency to high-frequency regions, such supply voltage variations can be effectively suppressed by using the capacitor which requires an extremely small mounting area.

When mounting the capacitor of the present invention on an electronic board, it is preferable to solder the capacitor directly to a wiring line on the board from the standpoint of minimizing contact resistance between terminals. When the input/output terminals of the capacitor are made of an aluminum-based material, soldering may be somewhat difficult, but this problem can be solved by using a commercially available high-temperature solder compatible with aluminum. Further, for the purpose of avoiding an adverse effect on the capacitor due to thermal conduction during the soldering, it is preferable to suppress the temperature rise of the capacitor by using a commercially available heat dissipating clip or the like.

The capacitor of the present invention may be mounted on the same substrate plane as various other circuit elements (IC, CPU, and other electronic components), but in the case of the capacitor of the type that uses the earlier described bag-like shaped film as the container, it may be preferable, from the standpoint of reducing the mounting space, to mount the capacitor in a three-dimensional manner on top of the other circuit elements or to mount the capacitor by sandwiching it between two or more substrates (with the capacitor as the core).

**Claims**

1. An electric double layer capacitor comprising an electrode formed from activated carbon, a separator, and a nonaqueous electrolytic solution, wherein said activated carbon has an average particle size not smaller than 0.1 $\mu$m but smaller than 1.0 $\mu$m.

2. An electric double layer capacitor as claimed in claim 1, wherein said electrode layer has a thickness of 20 to 100 $\mu$m.

3. An electric double layer capacitor as claimed in claim 1, wherein said current collector is an aluminum foil whose surface is coated with a conductive film formed from graphite and a binding resin.

4. An electric double layer capacitor as claimed in claim 1, wherein said electrode layer is basically formed from an activated carbon powder, a conductive agent, and a binder polymer, and wherein said binder polymer is soluble in a solvent.

5. In an electric double layer capacitor comprising a pair of electrodes forming an anode and cathode, a separator, and a nonaqueous electrolytic solution, an electrode sheet which is used for forming said electrodes, wherein an electrode layer is formed from activated carbon whose specific surface area is 500 to 2500 $m^2$/g and whose particle size at 90% cumulative volume (D90) as determined from a particle size distribution is 0.8 to 6 $\mu$m.

6. An electrode sheet as claimed in claim 5, wherein the particle size at 100% cumulative volume (D100) is 0.8 to 20 $\mu$m.

7. An electrode sheet as claimed in claim 5 or 6, wherein peak height (SRp) measured relative to a center plane on a surface of said electrode sheet is 0.01 to 4 $\mu$m.

8. An electric double layer capacitor wherein an electrode sheet as claimed in any one of claims 5 to 7 is used as a pair of electrodes forming an anode and cathode.

9. An electric double layer capacitor as claimed in claim 8, wherein a separator thickness is 5 to 30 $\mu$m.

10. An electric double layer capacitor comprising at least an anode, a cathode, a separator, and an electrolytic solution, wherein when the overall thickness of said capacitor, including the thickness of a container for hermetically sealing said anode, said cathode, said separator, and said electrolytic solution, is denoted by D (mm), the volume of said capacitor is denoted by V ($cm^3$), and the volumetric energy density of said capacitor at a discharge rate of 1000C at 25°C is denoted by W (Wh/L), then the value of W is at least 0.05 Wh/L, and at least either the condition that the value of A in equation (1) not be smaller than -0.2 or the condition that the value of B in equation (2) not be smaller than 0.8 is satisfied, said equations (1) and (2) being given as

$$W \geq 1.5D + A \quad (1)$$

$$W \geq 1.3V + B \quad (2)$$

11. An electric double layer capacitor as claimed in claim 10, wherein said container for hermetically sealing said anode, said cathode, said separator, and said electrolytic solution is formed from a film formed in a bag-like shape.

12. An electric double layer capacitor wherein, on a Nyquist plot showing results of AC impedance measurements, when a difference between a real impedance component Z2 at 0.05 Hz and an impedance Z1 at a point where an impedance curve intersects a real axis on a high frequency side is denoted by Z0 = Z2 - Z1, the ratio of Z0(-20) at -20°C to Z0 (20) at 20°C satisfies a range defined by relation (3) which is given as

$$1 < Z0(-20)/Z0(20) < 10 \quad (3)$$

# Fig.1

# Fig.2

Fig. 3

Fig. 4

# Fig. 5

# Fig. 6

# Fig.7

# Fig.8

# Fig.9

# Fig.10

# Fig.11A

# Fig.11B

## Fig.12

# INTERNATIONAL SEARCH REPORT

| International application No. |
| --- |
| PCT/JP2005/023999 |

A. CLASSIFICATION OF SUBJECT MATTER
*H01G9/155*(2006.01), *H01G9/02*(2006.01), *H01G9/058*(2006.01), *H01G9/08*
(2006.01)

According to International Patent Classification (IPC) or to both national classification and IPC

B. FIELDS SEARCHED

Minimum documentation searched (classification system followed by classification symbols)
*H01G9/155*(2006.01), *H01G9/02*(2006.01), *H01G9/058*(2006.01), *H01G9/08*
(2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 08-055761 A  (Asahi Glass Co., Ltd.),<br>27 February, 1996 (27.02.96),<br>Claims; Par. Nos. [0017], [0021]<br>(Family: none) | 1,4<br>2,3 |
| Y | JP 2000-269095 A  (Toyota Motor Corp.),<br>29 September, 2000 (29.09.00),<br>Par. Nos. [0016] to [0019]<br>(Family: none) | 2,3 |
| Y | JP 2002-270470 A  (Osaka Gas Co., Ltd.),<br>20 September, 2002 (20.09.02),<br>Claims<br>(Family: none) | 3-12 |

[X] Further documents are listed in the continuation of Box C.       [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 April, 2006 (03.04.06) | Date of mailing of the international search report<br>11 April, 2006 (11.04.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**EP 1 830 374 A1**

**INTERNATIONAL SEARCH REPORT**

| International application No. |
| --- |
| PCT/JP2005/023999 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2000-235938 A  (Asahi Glass Co., Ltd.), 29 August, 2000 (29.08.00), Claims; Par. Nos. [0012] to [0013], [0035] (Family: none) | 5-12 |
| Y | WO 2002/089245 A  (Kanebo, Ltd.), 07 November, 2002 (07.11.02), Claims; page 4, line 21 to page 6, line 19 & EP 1394887 A        & US 2004/185340 A1 | 5-12 |
| Y | JP 2002-532869 A  (Energy Storage Systems PTY Ltd.), 02 October, 2002 (02.10.02), Claims; Par. Nos. [0077], [0112] to [0113], [0147] to [0151]; Figs. 10 to 11A & WO 2000/034964 A      & US 6631072 B1 | 5-12 |
| Y | JP 2004-349306 A  (NEC Tokin Corp.), 09 December, 2004 (09.12.04), Par. Nos. [0030] to [0039] & US 2004/233613 A1      & CN 1551261 A | 5-12 |
| Y | JP 09-306797 A  (Toyota Motor Corp.), 28 November, 1997 (28.11.97), Par. No. [0018] (Family: none) | 5-12 |
| Y | JP 10-177935 A  (Elna Co., Ltd.), 30 June, 1998 (30.06.98), Par. Nos. [0011] to [0013], [0018] to [0020] (Family: none) | 5-12 |
| Y | JP 2000-124081 A  (Matsushita Electric Industrial Co., Ltd.), 28 April, 2000 (28.04.00), Claims (Family: none) | 5-12 |

Form PCT/ISA/210 (continuation of second sheet) (April 2005)

<table>
<tr><td>**INTERNATIONAL SEARCH REPORT**</td><td>International application No.<br>PCT/JP2005/023999</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

A common feature of the invention in claims 1, 5 and 10 is an electric double layer capacitor having an electrode, a separator and an electrolytic solution. However, since the feature of the electric double layer capacitor having the electrode, the separator and the electrolytic solution is merely a general prior art, as depicted in JP 2002-532869 and JP 08-055761, and makes no contribution over the prior art, this common feature is not a special technical feature in the meaning of PCT Rule 13.2, second sentence. Therefore, there is no feature common to all the inventions in claims 1, 5, 10 and 12, and the inventions in claims 1, 5, 10 and 12 do not satisfy the requirement of unity of invention.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable,
the                      payment of a protest fee..

                         ☐ The additional search fees were accompanied by the applicant's protest but the applicable protest fee was not paid within the time limit specified in the invitation.

                         ☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10294135 A
- JP 2002246071 A
- JP 2003200739 A
- JP 2002532869 W
- WO 02089245 A
- JP 2005010940 A
- JP 2005074613 A
- JP H05293263 A
- JP 2002296564 A
- JP 2004037829 A

**Non-patent literature cited in the description**

- **R. DELEVIE et al.** using an equivalent model analogous to an AC transmission channel. *Electrochim. Acta,* vol. 8, 751
- *Electrochim. Acta,* vol. 8, 1231